# EUROPEAN PATENT APPLICATION

(11) **EP 1 195 963 A2**
(43) Date of publication of application: **10.04.2002**
(21) Application number: 01103682.9
(22) Date of filing: 23.02.2001
(51) Int. Cl.: H04L 29/06

(54) **Communications service providing system, and mobile terminal device, address server device, and router device for use therewith**

(30) Priority: 14.07.2000 JP 2000214005
(71) Applicant: FUJITSU LIMITED, Kawasaki-shi, Kanagawa 211-8588 (JP)
(72) Inventor: Kakemizu, Mitsuaki, Fujitsu, Ltd., Kawasaki-shi, Kanagawa 211-8588 (JP); Murata, Kazunori, Fujitsu Nishi-Nihon Comm.Sys.Ltd, Fukuoka-shi, Fukuoka 814-8588 (JP); Igarashi, Yoichiro, Fujitsu, Ltd., Kawasaki-shi, Kanagawa 211-8588 (JP); Yamamura, Shinya, Fujitsu Nishi-Nihon Comm.Sys.Ltd, Fukuoka-shi, Fukuoka 814-8588 (JP); Wakamoto, Masaaki, Fujitsu, Ltd., Kawasaki-shi, Kanagawa 211-8588 (JP); Takeshita, Fusayuki, Fujitsu, Ltd., Kawasaki-shi, Kanagawa 211-8588 (JP)
(74) Representative: HOFFMANN - EITLE

(57) **Abstract**

A mobile node stores a binding update message and an AMR message in the header of an IPv6 packet, and transmits the packet to a home agent. This packet is once transferred to an AAAH. The AAAH authenticates the mobile node according to the AMR message, stores the binding update message and a service profile of the mobile node in the header of the IPv6 packet, and transmits the packet to the home agent. The home agent registers the location of the mobile node, stores the service profile in the header of the IPv6 packet, and transmits the packet to the mobile node.

## Description

### Background of the Invention

### Field of the Invention

The present invention relates to a system and method for providing a mobile communications service in a network using an IP, and more specifically to a system, a method, a mobile terminal device, and a router device for providing a mobile communications service in a network supporting an IPv6.

### Description of the Related Art

Recently, with the remarkable progress of Internet, the IP packet traffic has largely increased. In addition, with an increasing number of portable telephones, IMT-2000 (International Mobile Telecommunications 2000) has been standardized, and it is expected that a high-speed IP communications service and a value added service will be popularized in a mobile environment.

However, when a communications service is provided for a mobile node in a mobile environment, it is basically necessary to set predetermined information in a communications appliance (for example, a router device) which accommodates the mobile node. Especially, when a value added service is provided for a mobile node, specific information has to be set for each mobile node. However, since a mobile node tends to move to an arbitrary location, there are a large number of communications appliances which can accommodate mobile nodes. That is, when a communications service is provided for in a mobile environment, it is necessary to set specific information in each mobile node for an enormously large number of communications appliances.

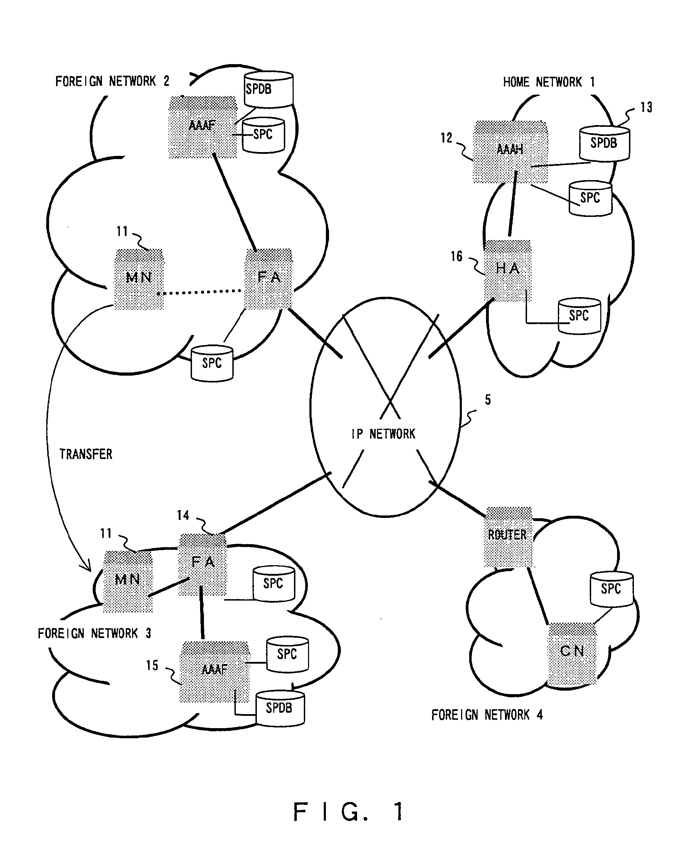

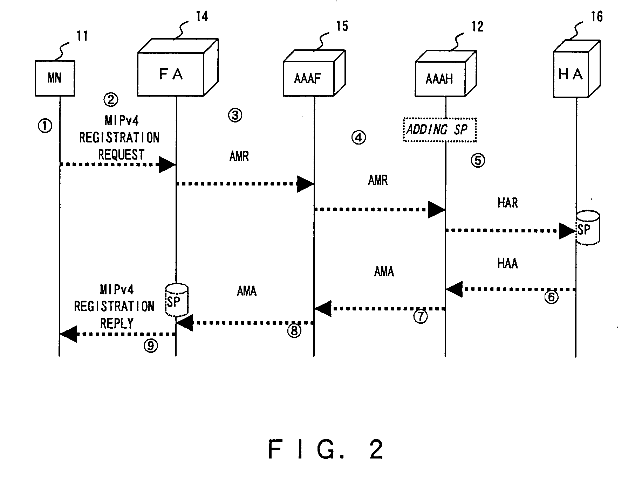

Under such situation, the Applicant of the present invention has suggested a method for solving the above mentioned problems. The method suggested to solve the above mentioned problems is described below by referring to Figs. 1 and 2.

FIG. 1 shows the configuration of an existing common mobile IP network. In the network shown in FIG. 1, a home network 1 managed by a service provider of a mobile node (MN) 11 and foreign networks 2 through 4 managed by another service provider are interconnected through an IP network 5.

With the above mentioned configuration, the necessary information (service control information or service profile) for use in providing a communications service for the mobile node 11 is stored in a database 13 (SPDB) accessible by an AAAH (authentication, authorization, and accounting home) server 12. When the mobile node 11 moves from the communications area of the foreign network 2 to the communications area of the foreign network 3, the AAAH server 12 extracts the service control information corresponding to the mobile node 11 from the database 13, and sends it to a foreign agent (FA) 14. Afterwards, a communications service is provided for the mobile node 11 according to the service control information.

FIG. 2 shows the location registration sequence of a mobile node in an existing system. This sequence is executed when, for example, the mobile node 11 enters the communications area of the foreign agent 14 as shown in FIG. 1. The mobile IP protocol is used between the mobile node 11 and the foreign agent 14. In addition, the DIAMETER protocol, which is known as one of the AAA protocols, is used among the foreign agent 14, an AAAF 15, the AAAH server 12, and a home agent 16.

When the mobile node 11 receives an advertisement message periodically output from the foreign agent 14, it transmits a registration request message to the foreign agent 14. When the foreign agent 14 receives the registration request message, it transmits an AMR (AA-mobile-node-request) message to the AAAF (authentication, authorization, and accounting foreign) server 15. The AAAF 15 performs authenticating, authorizing, and accounting processes for the user in contract with a service provider for managing the foreign network 3. That is, the AAAF 15 cannot perform the authenticating, authorizing, and accounting processes for the mobile node 11. Therefore, when the AAAF 15 receives the AMR message from the foreign agent 14, it transfers the message to the AAAH server 12.

When the AAAH server 12 receives the AMR message, it performs the authenticating, authorizing, and accounting processes for the mobile node 11, and extracts the service control information corresponding to the mobile node 11 from the database 13. Then, the AAAH server 12 transmits an HAR (home-agent-MIP-request) message to the home agent (HA) 16. At this time, the HAR message stores the service control information extracted from the database 13. Thus, the service control information corresponding to the mobile node 11 is distributed to the home agent 16. Then, after the home agent 16 registers the location about the mobile node 11, it returns a HAA (home-agent-MIP-answer) message to the AAAH server 12.

When the AAAH server 12 receives the HAA message, it transmits an AMA (AA-mobile-node-answer) message to the AAAF 15. At this time, the AMA message stores the service control information corresponding to the mobile node 11. In addition, when the AAAF 15 receives the AMA message, it transfers the message to the foreign agent 14. As a result, the service control information corresponding to the mobile node 11 is distributed to the AAAF 15 and the AAAH server 12. Then, a registration reply message is returned from the foreign agent 14 to the mobile node 11, thereby terminating the location registration sequence.

Thus, in the method suggested by the Applicant of the present invention, the service control information about the mobile node is automatically distributed to a predetermined communications appliance during the location registration procedure. As a result, the corresponding service control information can be set for the minimal communications appliances.

With the popularization of Internet, the available addresses are running short in the IPv4 (IP version 4). Therefore, in the IP communications at present, the IPv4 is being switched to the IPv6 (IP version 6). However, up to now, the technology of providing a value added service using the IPv6 has not been sufficiently studied, and there are a number of problems to be solved.

For example, although it is necessary to support an IPsec (IP security protocol) in the IPv6, the sequence described above by referring to FIG. 2 cannot be followed in the network in which the IPsec is supported. This problem is described below by referring to FIGs. 3 and 4. The IPsec contains an authentication protocol and an encryption protocol, and functions as a protocol for guaranteeing the security in the IP layer.

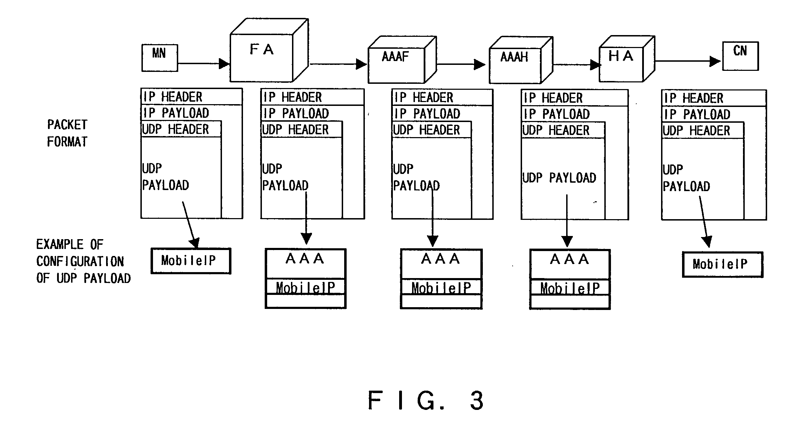

FIG. 3 shows a packet transmitted in the location registration sequence shown in FIG. 2. As shown in FIG. 3, the information transmitted through the IP network is basically stored in an IP packet. The IP packet includes an IP header and an IP payload storing a UDP packet. The UDP packet includes a UDP header and a UDP payload, and the UDP payload stores information relating to the location registration sequence. Here, in FIG. 3, the "Mobile IP" corresponds to, for example, a registration request message, a registration reply message, etc. The "AAA" corresponds to, for example, an AMR message, an AMA message, an HAR message, an HAA message, etc. Therefore, a foreign agent (FA), an AAAF server, an AAAH server, and a home agent (HA) extract necessary information from the UDP payload stored in the received IP packet, and perform the process relating to the location registration sequence.

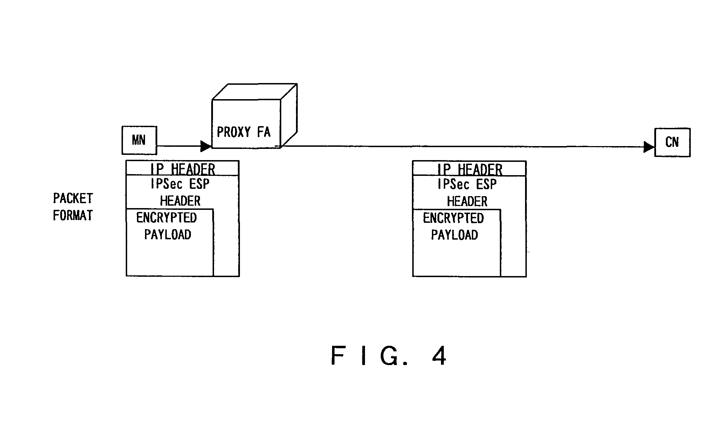

However, in a system which supports the IPsec, each IP packet is encrypted and transmitted as shown in FIG. 4. Practically, an IP payload is encrypted. At this time, it is obvious that the information relating to the location registration sequence stored in the UDP packet is also encrypted. Therefore, the foreign agent (FA), the AAAF server, the AAAH server, and the home agent (HA) cannot decode the information relating to the location registration sequence. As a result, the sequence shown in FIG. 2 cannot be executed.

Furthermore, although the conventional mobile IP network has been configured based on the function entity defined as a foreign agent, the mobile IP network designed for use with an IPv6 does not have the above mentioned function entity (or concept). Therefore, when the IPv6 is installed in the system configured based on the foreign agent, an amendment is to be made to the current specification or design.

### Summary of the Invention

The present invention aims at providing a system and a method for efficiently distributing to a corresponding communications appliance the information for use in providing a communications service for a mobile node in a mobile IP network. Especially, in the mobile IP network for supporting the IPv6.

The communications service providing system according to the present invention includes an authentication server for authenticating a mobile node, and a database storing service control information for use in providing a communications service requested by the mobile node, and provides the communications service to the mobile node according to the service control information. The system includes: a first unit, provided in a mobile node, for storing location registration request information in the header of a packet and transmitting it to the authentication server; a second unit, provided in the authentication server, for extracting the service control information corresponding to the mobile node from the database; a third unit, provided in the authentication server, for storing the location registration request information in the header of the packet and transmitting it to the home agent of the mobile node, a fourth unit, provided in the home agent, for registering the location of the mobile node according to the location registration request information, storing the location registration reply information corresponding to the location registration request information in the header of the packet, and returning it to the authentication server; and a fifth unit, provided in the authentication server, for transmitting to the mobile node a packet containing in the head the location registration reply information and the service control information. With the configuration, a packet transmitted or received by the mobile node is controlled according to the service control information.

In this system, within a procedure of registering the location of a mobile node, the service control information about the mobile node is distributed to the mobile node. At this time, the information relating to the location registration of a mobile node is transmitted after being stored in the header of a packet. Therefore, in a network in which the payload of each packet is encrypted, each communications appliance can decode and process the information relating to the location registration of the mobile node.

The communications service providing system according to another aspect of the present invention includes: a first unit, provided in a router device accommodating a mobile node, for storing location registration request information generated by the mobile node in the header of a packet and transmitting it to the authentication server; a second unit, provided in the authentication server, for extracting the service control information corresponding to the mobile node from the database; a third unit, provided in the authentication server, for storing the location registration request information in the header of the packet and transmitting it to the home agent of the mobile node, a fourth unit, provided in the home agent, for registering the location of the mobile node according to the location registration request information, storing the location registration reply information corresponding to the location registration request information in the header of the packet, and returning it to the authentication server; and a fifth unit, provided in the authentication server, for transmitting to the router device a packet containing in the head the location registration reply information and the service control information. With the configuration, a packet transmitted or received by the mobile node is controlled according to the service control information distributed to the router device.

In this system, the service control information about the mobile node is distributed to the router device accommodating the mobile node within the procedure of registering the location of the mobile node. Then, the router device provides a communications service according to the service control information, thereby reducing the load of the mobile node.

The communications service providing system according to a further aspect of the present invention includes: a first unit, provided in an address server, for transmitting an authentication request about a mobile node to the authentication server when it receives an address request from the mobile node; a second unit, provided in the authentication server, for extracting the service control information corresponding to the mobile node from the database when it receives the authentication request, and transmitting an authentication reply corresponding to the authentication request and the service control information to the address server; and a third unit, provided in the address server, for transmitting an address reply corresponding to the address request and the service control information to the mobile node when it receives the authentication reply and the service control information. According to the service control information, a packet transmitted or received by the mobile node is controlled.

With the system, the service control information about the mobile node is distributed to the mobile node in a procedure in which the mobile node obtains an address from the address server.

The communications service providing system according to a further aspect of the present invention includes: a first unit, provided in an address server, for transmitting an authentication request about a mobile node to the authentication server when it receives an address request from the mobile node; a second unit, provided in the authentication server, for extracting the service control information corresponding to the mobile node from the database when it receives the authentication request, and transmitting an authentication reply corresponding to the authentication request and the service control information to the address server; a third unit, provided in a router device accommodating the mobile node, for obtaining the service control information transmitted from the authentication server to the address server; and a fourth unit, provided in the address server, for transmitting an address reply corresponding to the address request to the mobile node when it receives the authentication reply. A packet transmitted and received by the mobile node is controlled according to the service control information.

With the system, the service control information about the mobile node is distributed to the router device accommodating the mobile node in a procedure in which the mobile node obtains the address from the address server. Then, the router device provides a communications service according to the service control information, thereby reducing the load of the mobile node.

The communications service providing system according to a further aspect of the present invention includes: a first unit, provided in an address server, for transmitting a request message corresponding to an address request to a router device accommodating the address server when it receives the address request from a mobile node; a second unit, provided in the router device, for transmitting an authentication request about the mobile node to the authentication server when it receives the request message; a third unit, provided in the authentication server, for extracting service control information corresponding to the mobile node from the database when it receives the authentication request, and transmitting an authentication reply corresponding to the authentication request and the service control information to the address server; a fourth unit, provided in the router device, for obtaining the service control information transmitted from the authentication server to the address server, and transmitting to the address server an reply message corresponding to the request message according to the authentication reply transmitted from the authentication server to the address server; and a fifth unit, provided in the address server, for transmitting to the mobile node an address reply corresponding to the address request when it receives the reply message. A packet transmitted or received by the mobile node is controlled according to the service control information.

In this system, the address server does not process the authentication request about the mobile node or a corresponding authentication reply, thereby configuring a simple address server, and reducing the load of the address server.

The communications service providing system according to a further aspect of the present invention includes: a first unit, provided in a router device accommodating a mobile node, for transmitting to an authentication server an authentication request about the mobile node when it receives an address request from the mobile node; a second unit, provided in the authentication server, for extracting service control information corresponding to the mobile node from a database when it receives the authentication request, and transmitting to the router device an authentication reply corresponding to the authentication request and the service control information; and a third unit, provided in the router device, for transmitting to the mobile node an address reply corresponding to the address request and the service control information when it receives the authentication reply and the service control information. A packet transmitted and received by the mobile node is controlled according to the service control information.

In the system, the router device has the function of an address server, and the mobile node inquires an address of the router device. Therefore, a simple system configuration is realized, and the amount of information transmitted and received through a network is reduced.

The communications service providing system according to a further aspect of the present invention includes: a first unit, provided in a router device accommodating a mobile node, for transmitting to an authentication server an authentication request about the mobile node when it receives an address request from the mobile node; a second unit, provided in the authentication server, for extracting service control information corresponding to the mobile node from a database when it receives the authentication request, and transmitting to the router device an authentication reply corresponding to the authentication request and the service control information; and a third unit, provided in the router device, for obtaining the service control information and transmitting to the mobile node an address reply corresponding to the address request when it receives the authentication reply and the service control information. A packet transmitted and received by the mobile node is controlled according to the service control information.

In the system, the router device accommodating the mobile node provides a communications service according to the service control information, thereby reducing the load of the mobile node.

The address server device according to the present invention is provided for the communications service providing system which includes an authentication server authenticating the mobile node and a database storing service control information for use in providing a communications service requested by a mobile node, and provides a communications service for the mobile node. The address server device includes: a first unit for transmitting an authentication request about the mobile node to the authentication server when it receives an address request from the mobile node; and a second unit for transmitting to the mobile node an address reply corresponding to the address request and the service control information when it receives from the authentication server an authentication reply corresponding to the authentication request and the service control information corresponding to the mobile node extracted from the database.

According to the address server device, the process of assigning an address to a mobile node and the process of authenticating the mobile node are simultaneously performed.

The router device according to the present invention accommodates a mobile node in the communications service providing system which includes an authentication server authenticating the mobile node and a database storing service control information for use in providing a communications service requested by the mobile node, and provides a communications service for the mobile node. The router device includes: a first unit for transmitting an authentication request about the mobile node to the authentication server when it receives an address request from the mobile node; and a second unit for transmitting to the mobile node an address reply corresponding to the address request and the service control information when it receives from the authentication server an authentication reply corresponding to the authentication request and the service control information corresponding to the mobile node extracted from the database.

According to the router device, the process of assigning an address to a mobile node and the process of authenticating the mobile node are simultaneously performed. In addition, since the router device has the function of an address server, the system configuration is simple, and the amount of information transmitted and received through a network is reduced.

The router device according to another aspect of the present invention includes: a first unit for transmitting an authentication request about the mobile node to the authentication server when it receives an address request from the mobile node; a second unit for transmitting an address reply corresponding to the address request to the mobile node when it receives from the authentication server an authentication reply corresponding to the authentication request and the service control information corresponding to the mobile node extracted from the database; and a third unit for controlling a packet transmitted or received by the mobile node according to the service control information.

According to the router device, the process of assigning an address to a mobile node and the process of authenticating the mobile node are simultaneously performed. In addition, since the router device provides a communications service using the service control information, the load of the mobile node can be reduced.

### Brief Description of the Drawings

FIG. 1 shows the configuration of an existing common mobile IP network;
FIG. 2 shows the location registration sequence of the mobile node in the existing system;
FIG. 3 shows the configuration of a packet transmitted in the location registration sequence shown in FIG. 2;
FIG. 4 shows the configuration of a packet processed according to the IPsec;

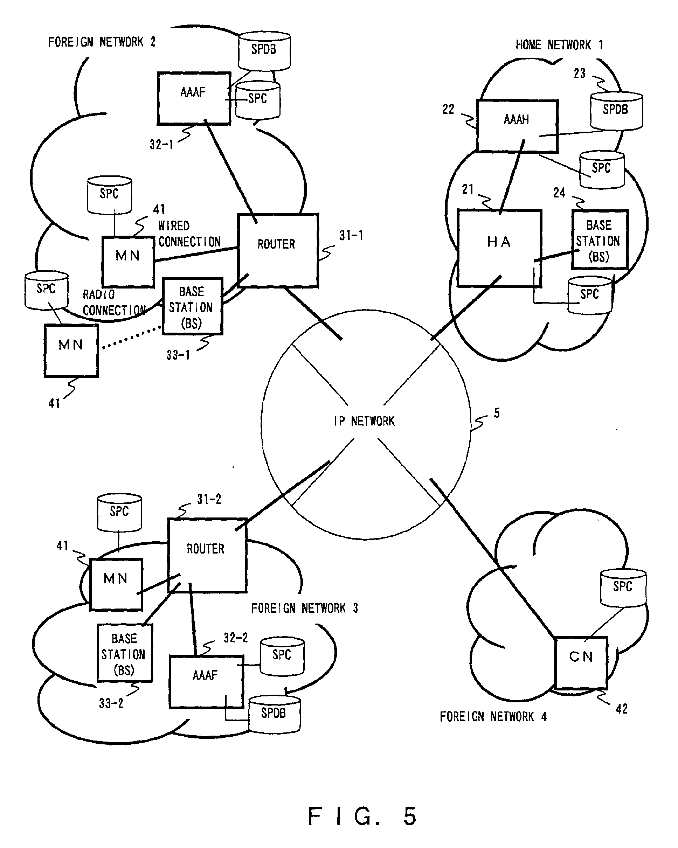

FIG. 5 shows the configuration of the network of the communications service providing system according to the first embodiment of the present invention;

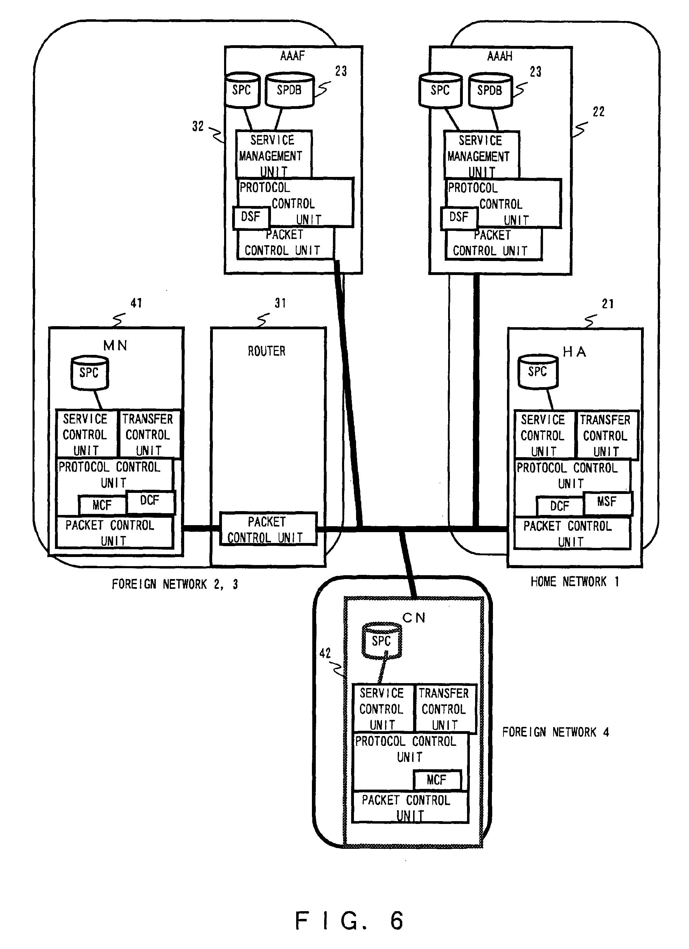

FIG. 6 shows the configuration of the main devices of the communications service providing system according to the first embodiment;

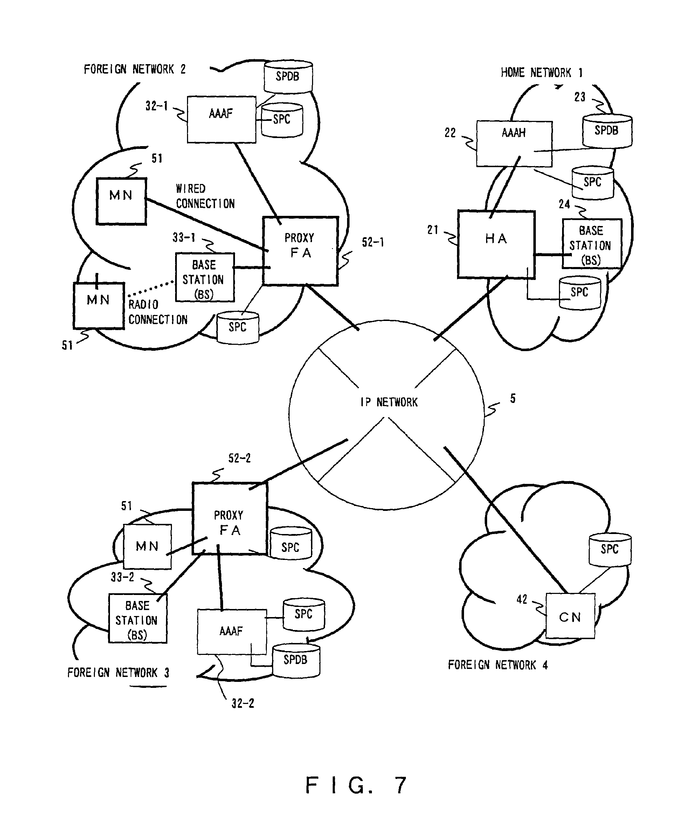

FIG. 7 shows the configuration of the network of the communications service providing system according to the second embodiment of the present invention;

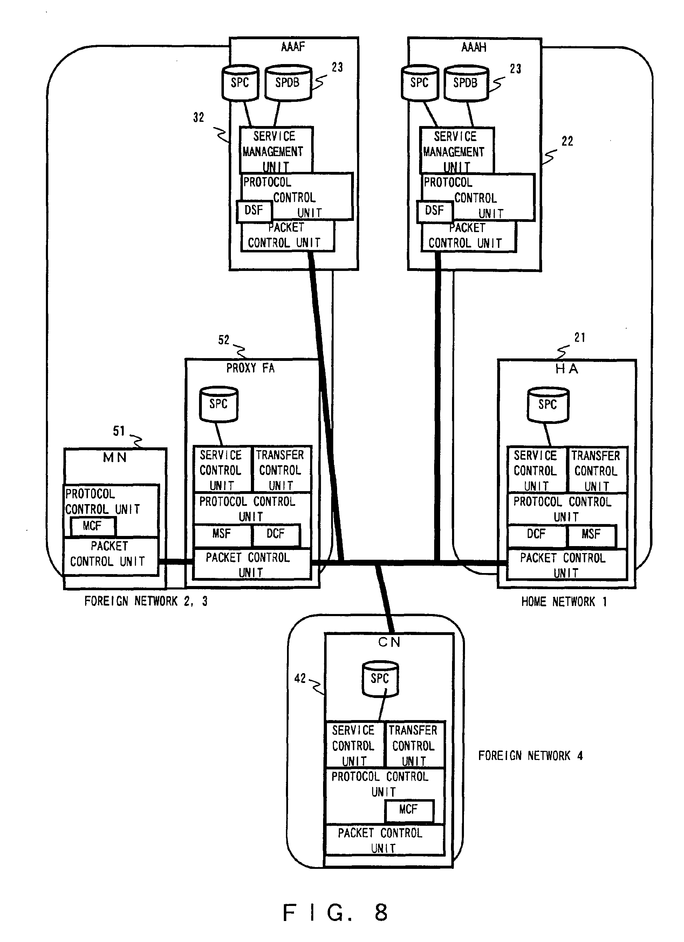

FIG. 8 shows the configuration of the central devices of the communications service providing system according to the second embodiment;

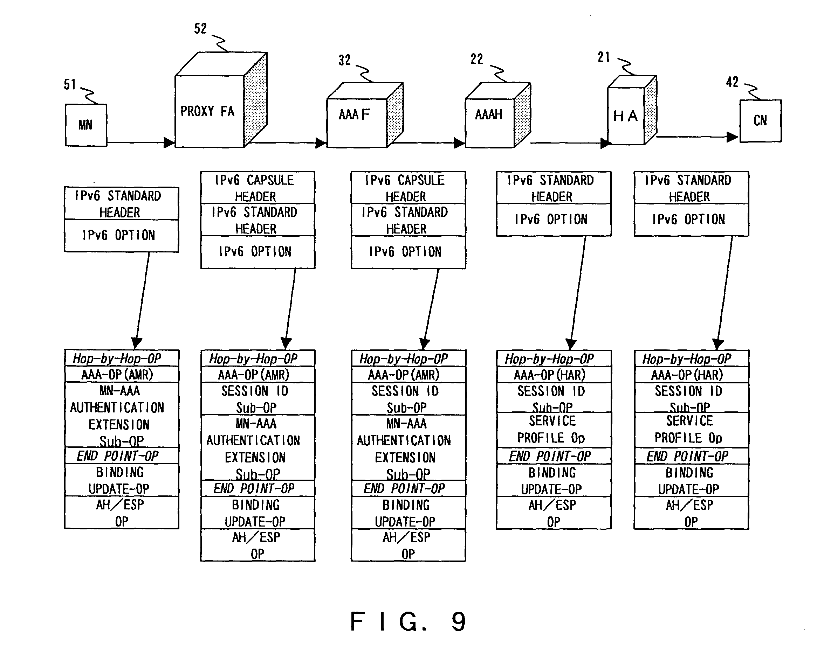

FIG. 9 shows the packet used in the procedure of registering the location of a mobile node;

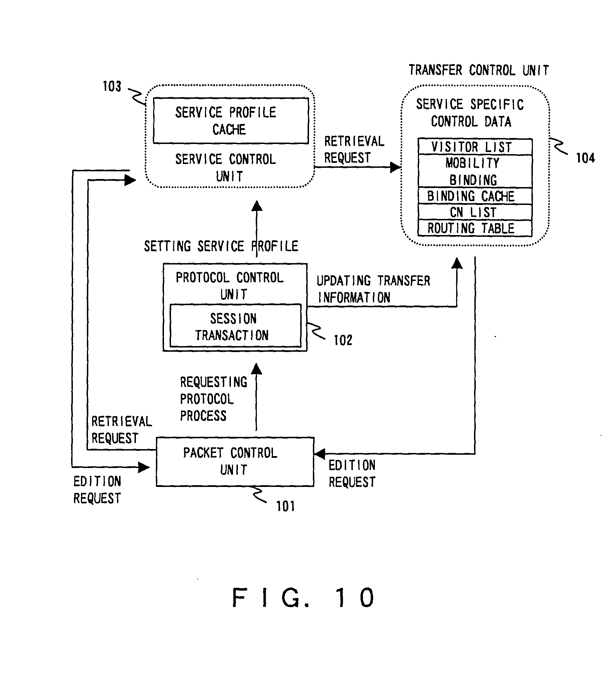

FIG. 10 is a block diagram of a mobile node, a proxy foreign agent, a home agent, and a communications node;

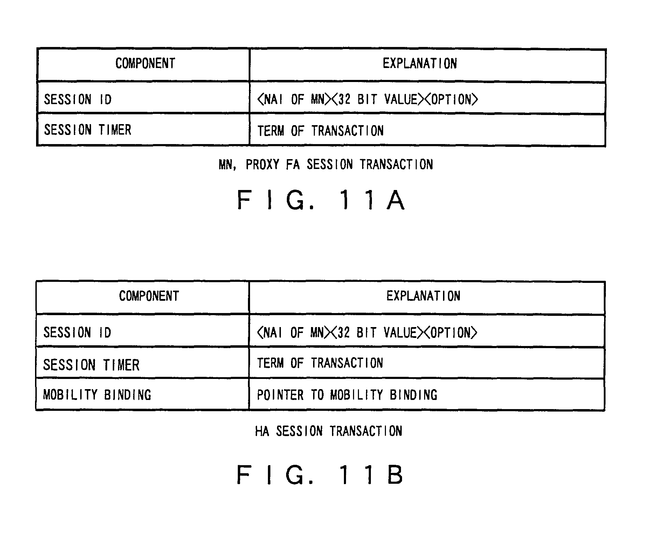

FIGS. 11A and 11B show an example of a session transaction held by a mobile node, a proxy foreign agent, and a home agent;

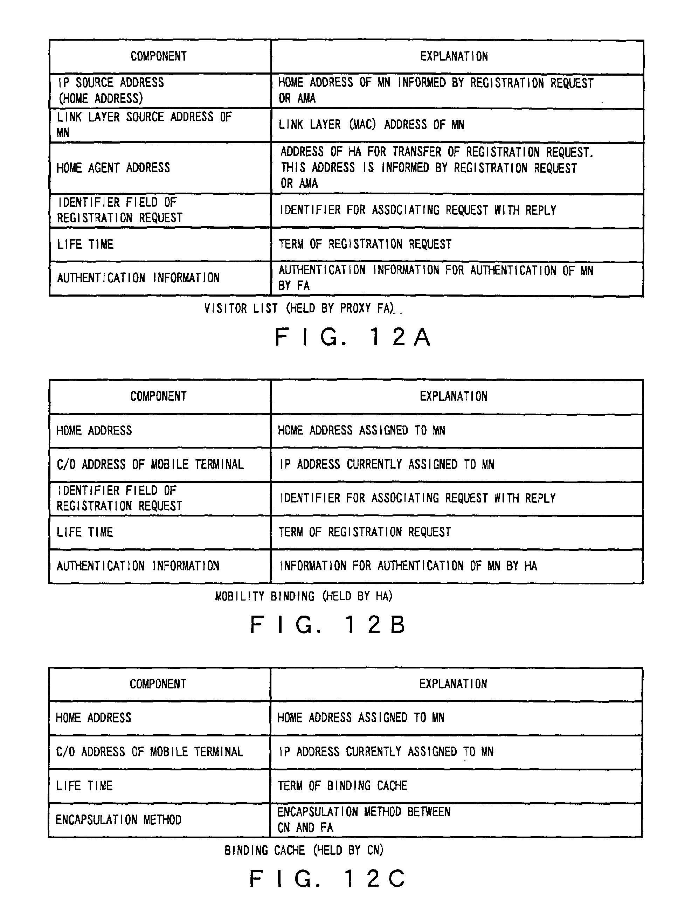

FIGS. 12A, 12B, and 12C respectively show examples of a visitor list, mobility binding, and binding cache;

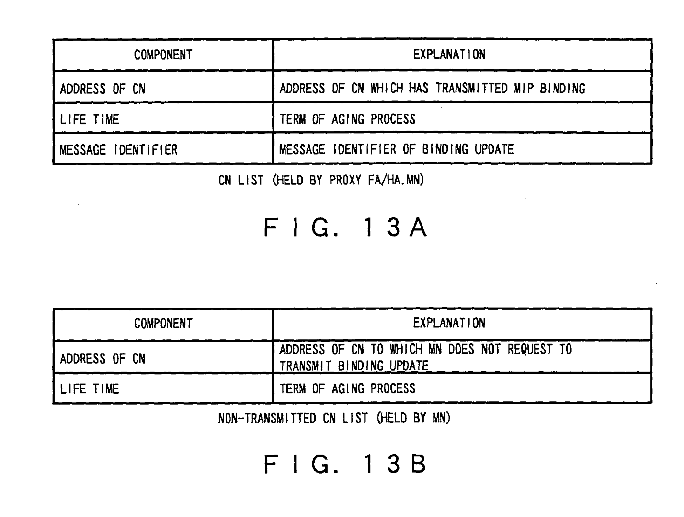

FIGS. 13A and 13B show examples of communications node list;

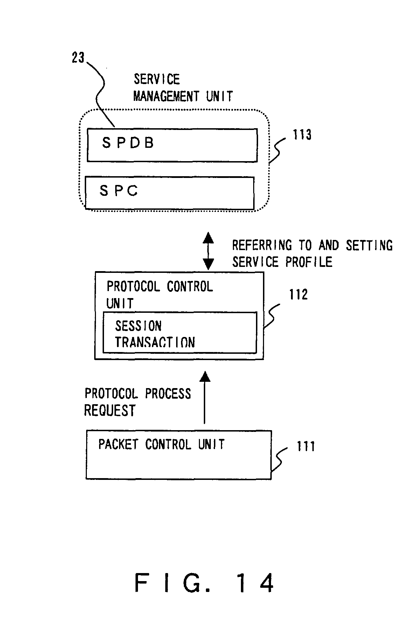

FIG. 14 is a block diagram of an AAAF and an AAAH;

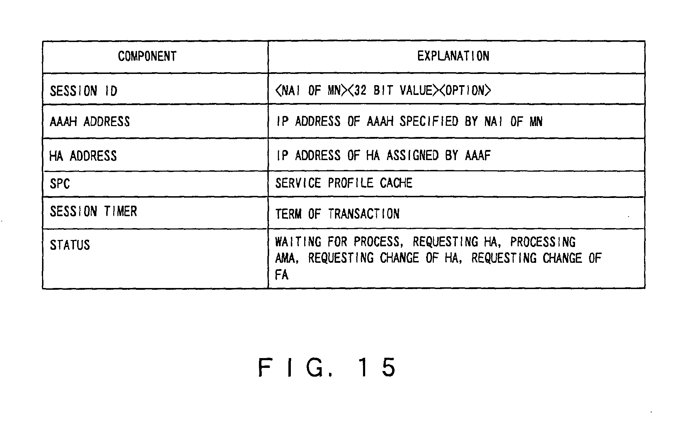

FIG. 15 shows an example of a session transaction held by an AAAF;

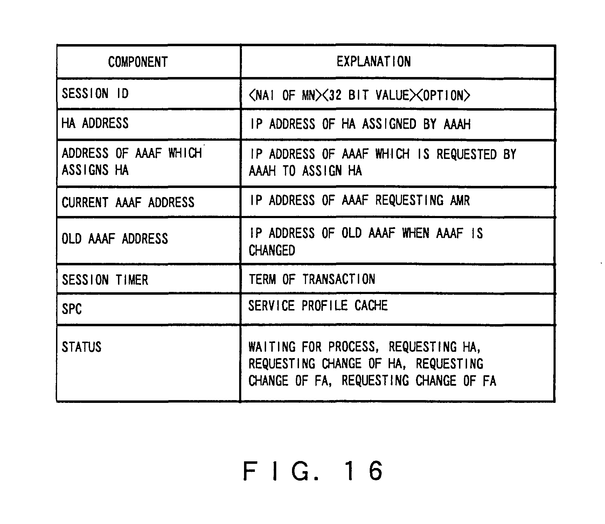

FIG. 16 shows an example of a session transaction held by an AAAH;

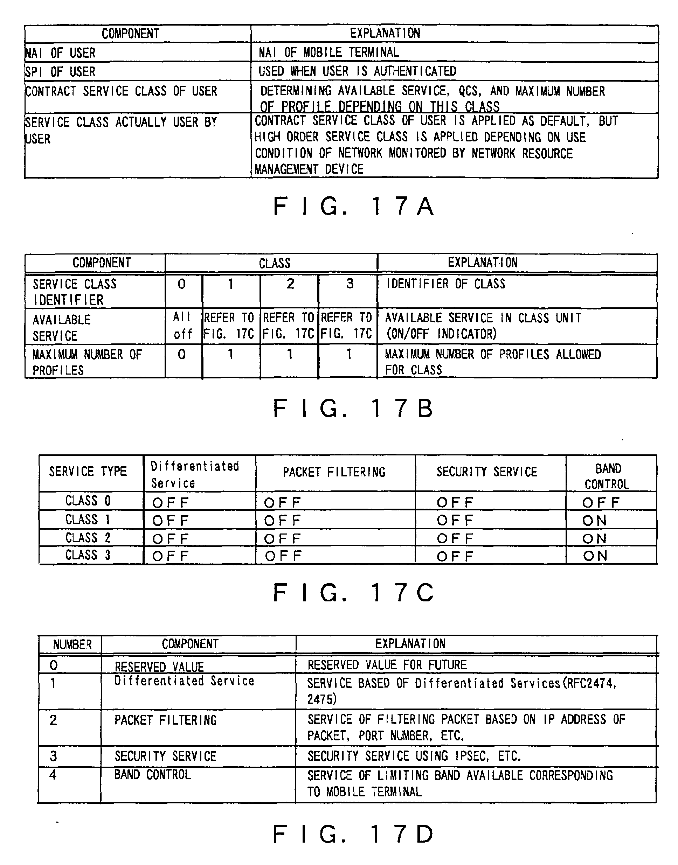

FIG. 17 shows the information stored in a database (SPDB);

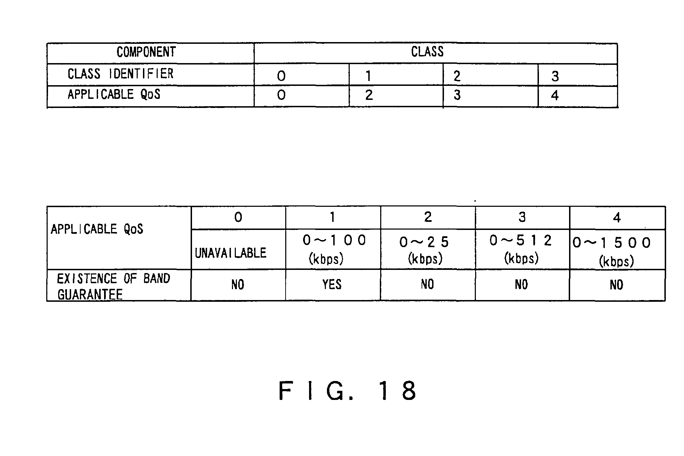

FIG. 18 shows a practical example of band control;

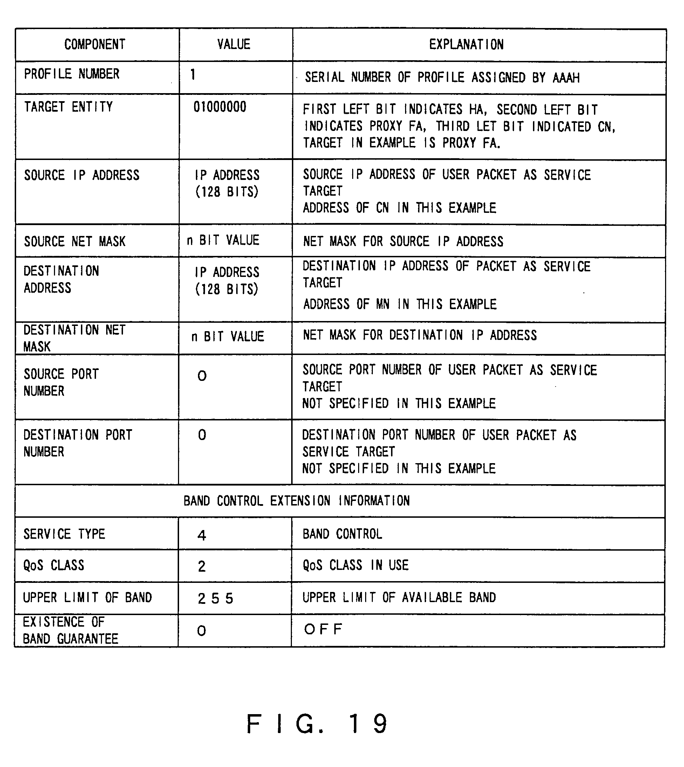

FIG. 19 shows an example of a service profile stored in service profile cache;

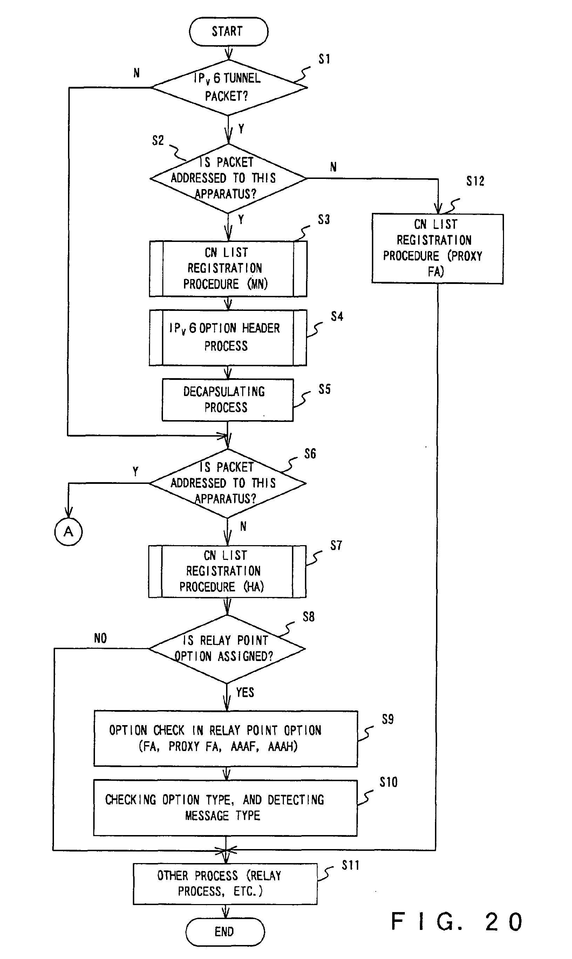

FIG. 20 is a flowchart (1) of the operations performed when a packet is received;

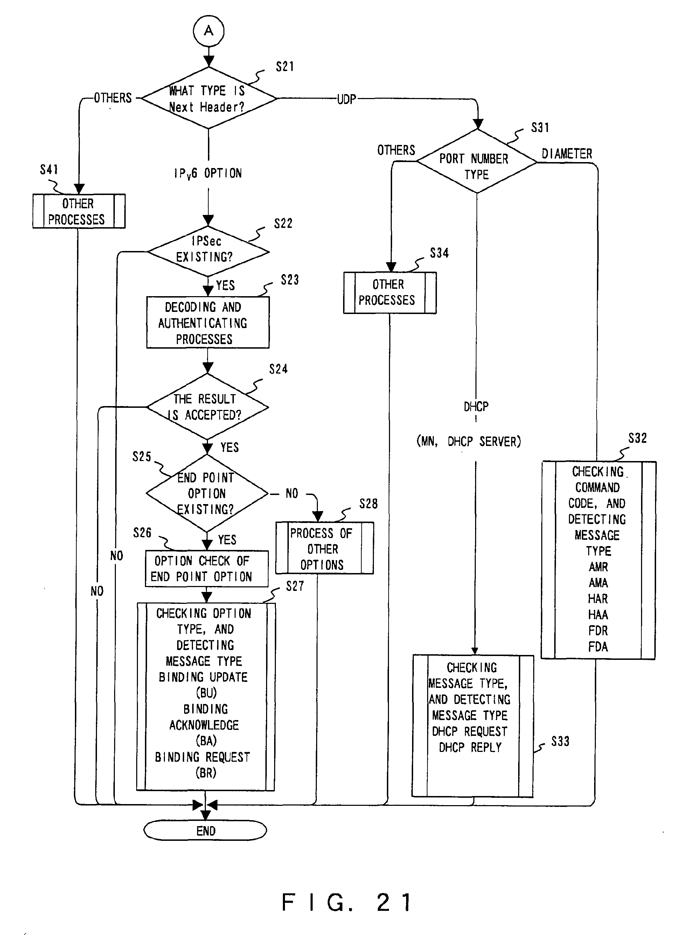

FIG. 21 is a flowchart (2) of the operations performed when a packet is received;

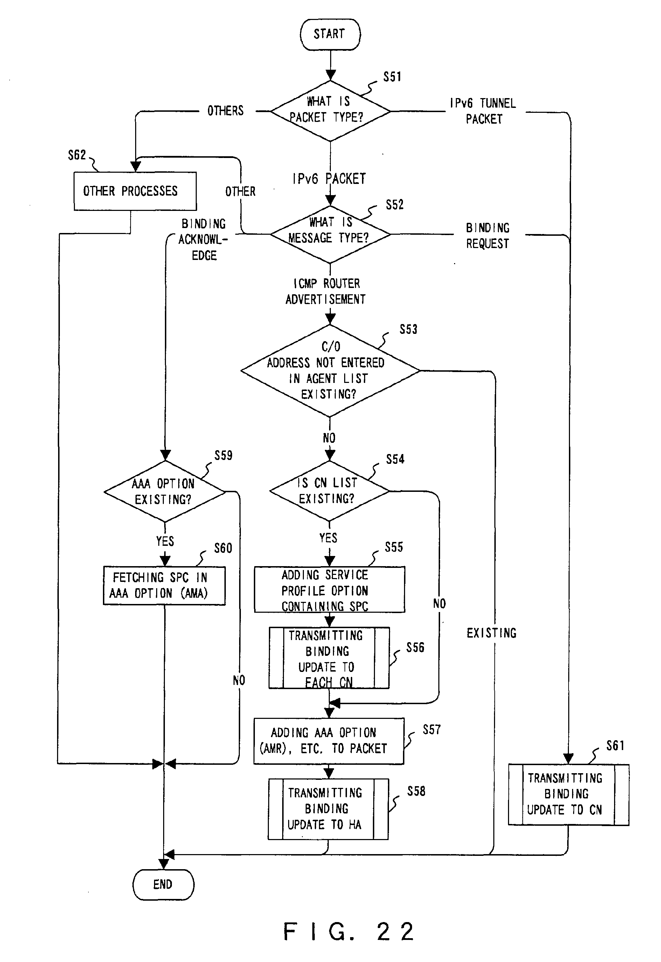

FIG. 22 is a flowchart of the operations of a mobile node according to the first embodiment of the present invention;

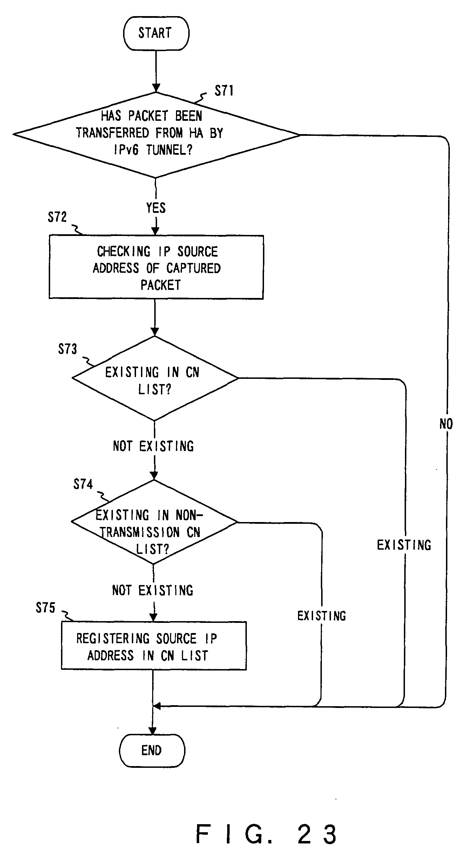

FIG. 23 is a flowchart of the process of registering a communications node in a communications node list in a mobile node;

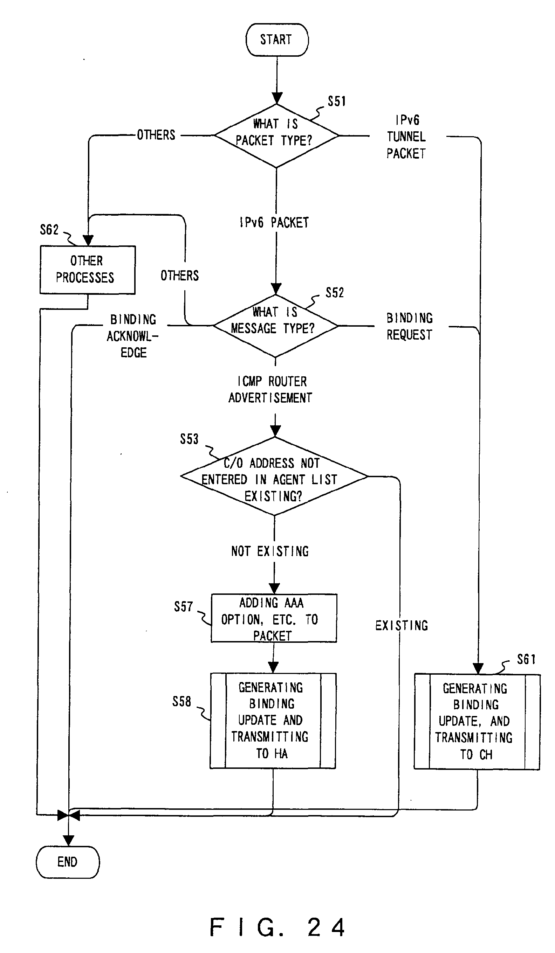

FIG. 24 is a flowchart of the operations of a mobile node according to the second embodiment of the present invention;

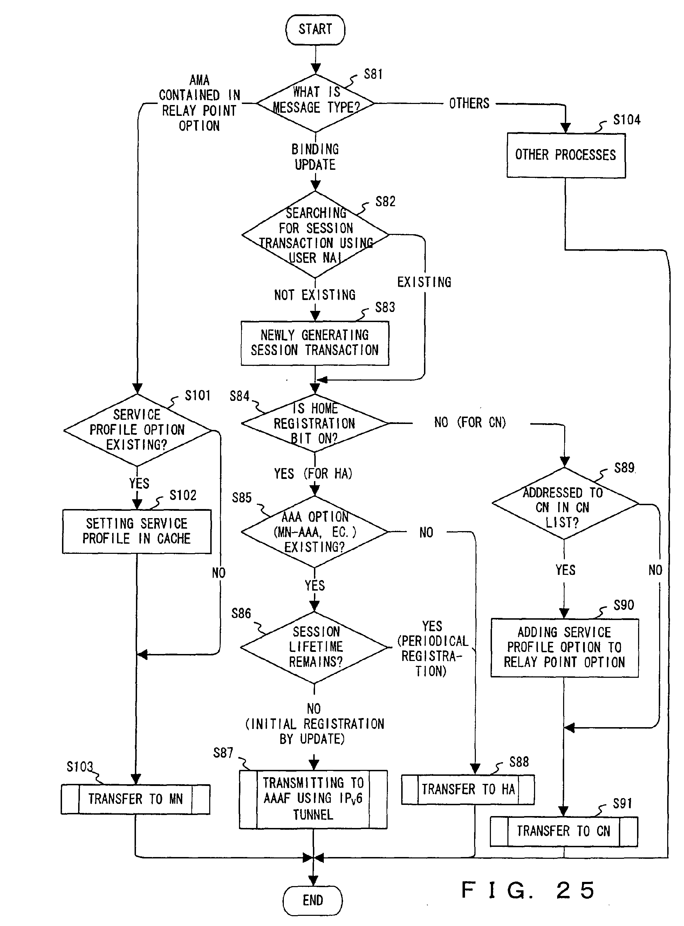

FIG. 25 is a flowchart of the operations of a proxy foreign agent;

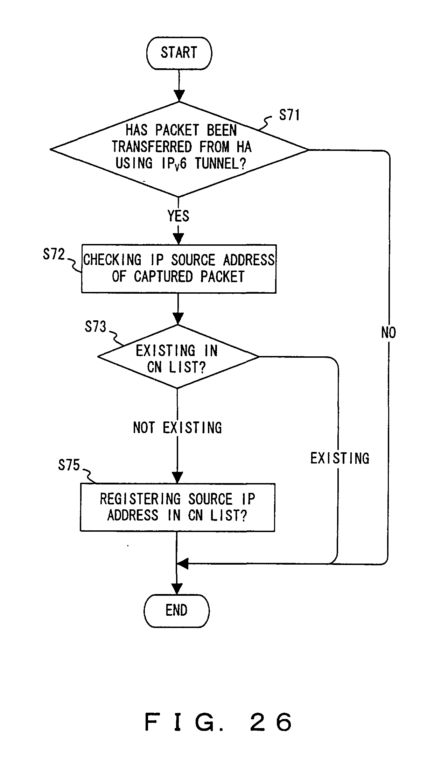

FIG. 26 is a flowchart of the process of registering a communications node in a communications node list in a proxy foreign agent;

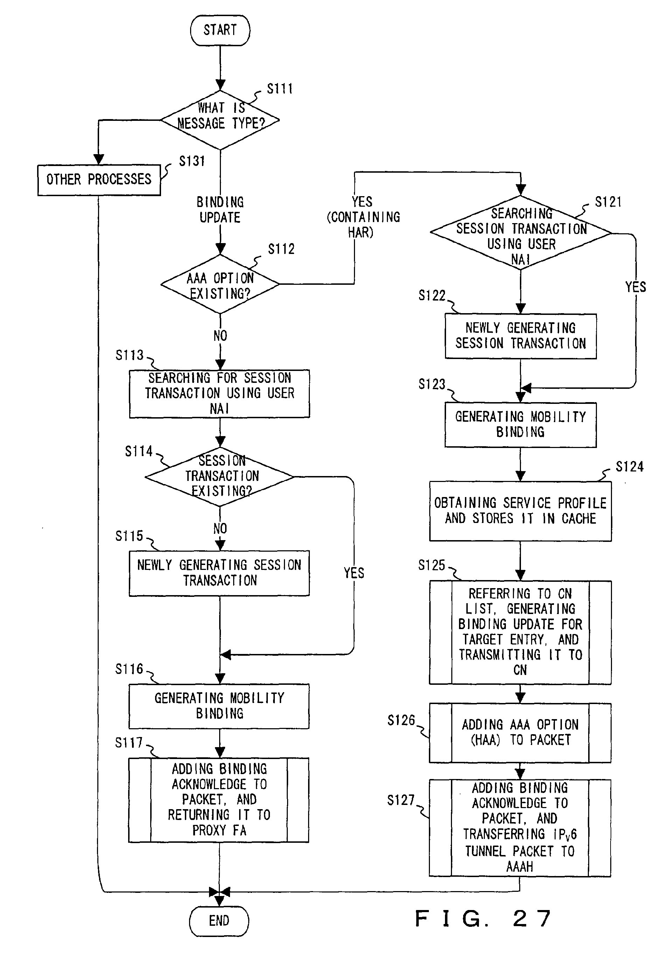

FIG. 27 is a flowchart of the operations of a home agent;

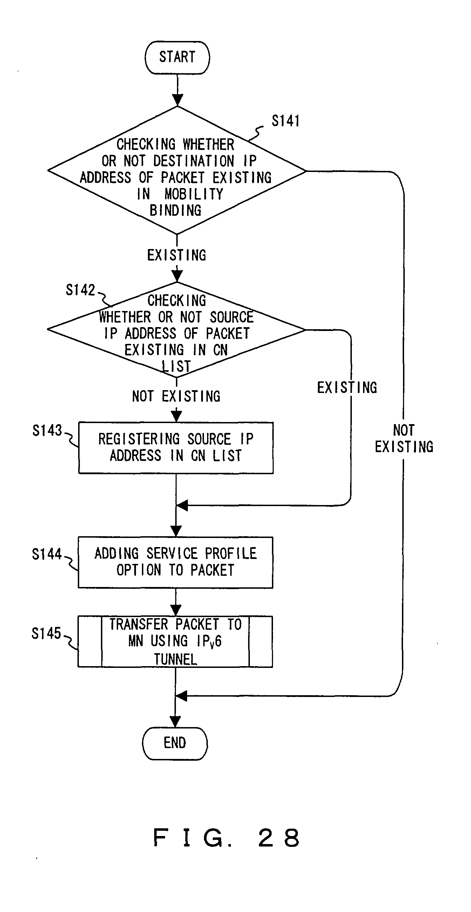

FIG. 28 is a flowchart of the process of registering a communications node in a communications node list in a home agent;

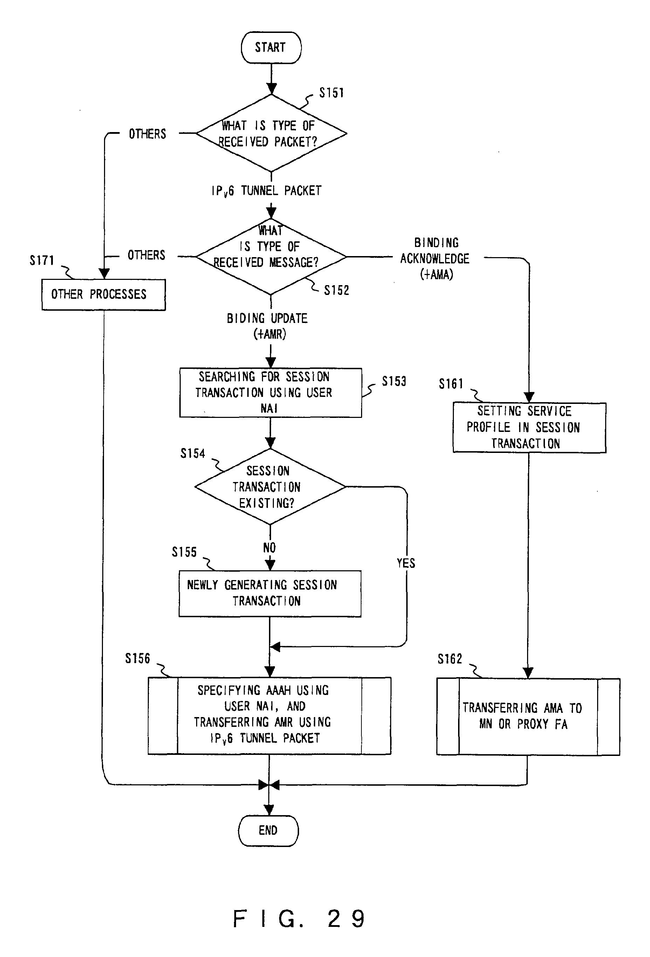

FIG. 29 is a flowchart of the operations of an AAAF;

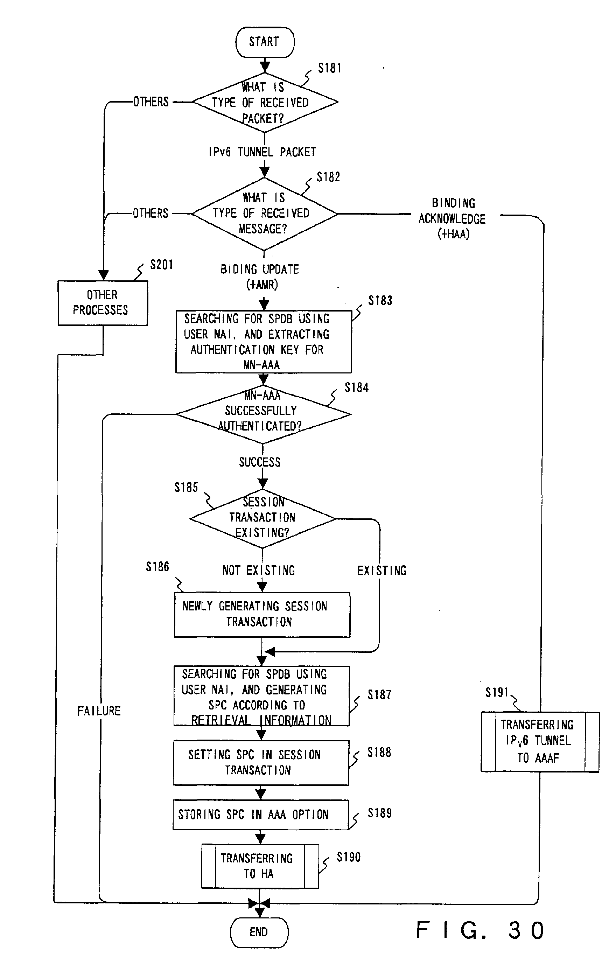

FIG. 30 is a flowchart of the operations of an AAAH;

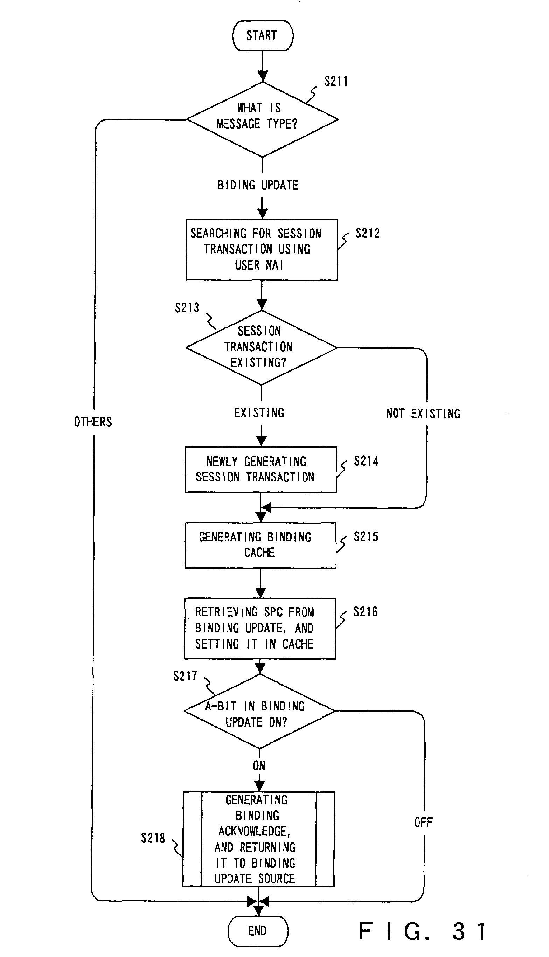

FIG. 31 is a flowchart of the operations of an communications node;

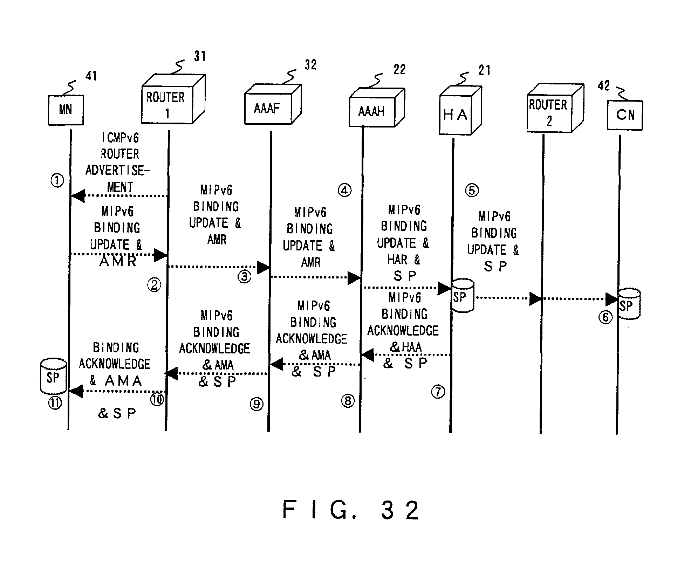

FIG. 32 shows the location registration sequence in the system according to the first embodiment of the present invention;

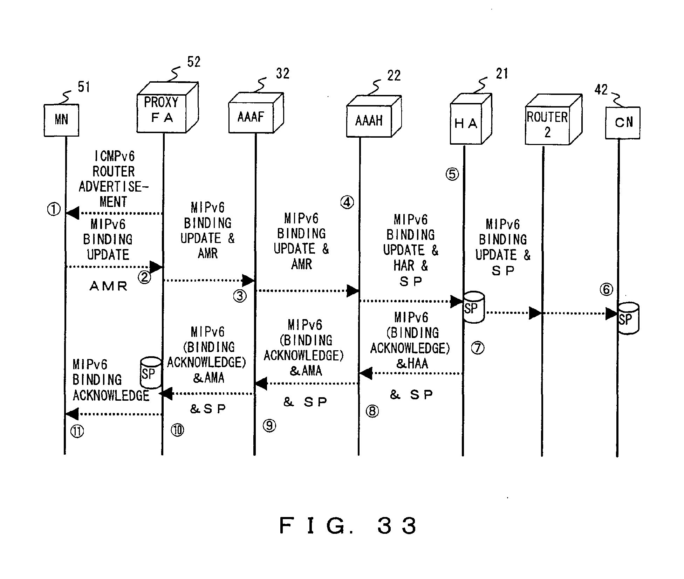

FIG. 33 shows the location registration sequence in the system according to the second embodiment of the present invention;

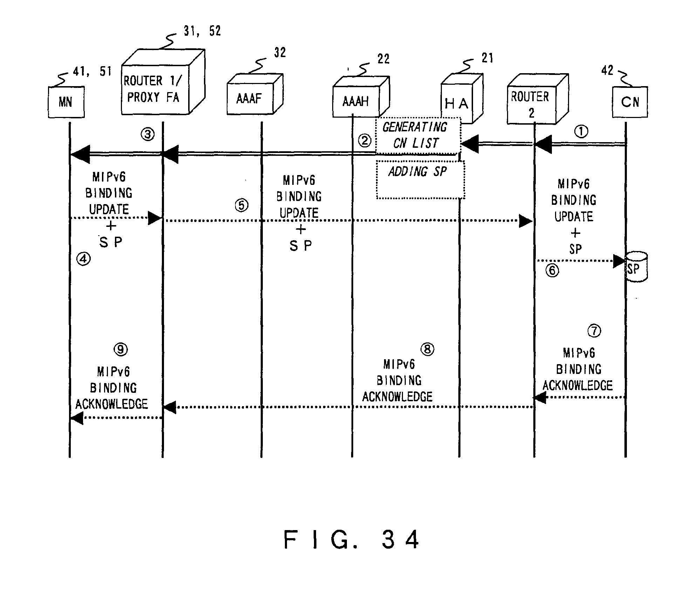

FIG. 34 shows the sequence of setting binding cache in a communications node from which a packet is transmitted to a mobile node (when a communications node list is generated in a home agent);

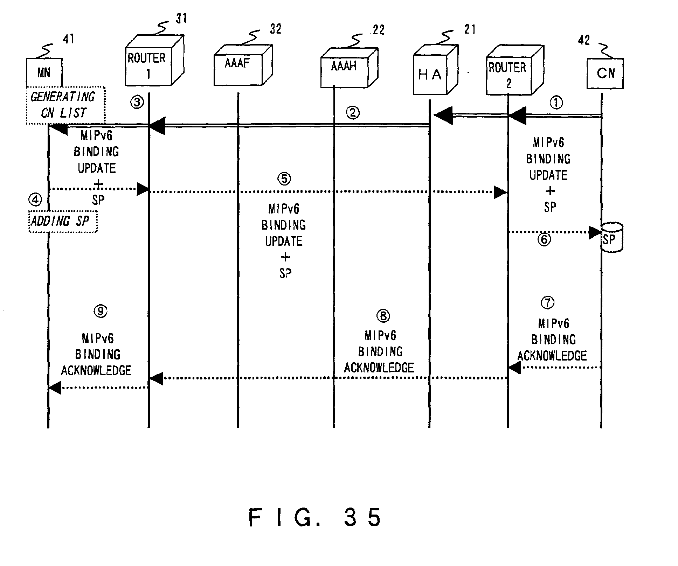

FIG. 35 shows the sequence of setting binding cache in a communications node from which a packet is transmitted to a mobile node (when a communications node list is generated in a mobile node);

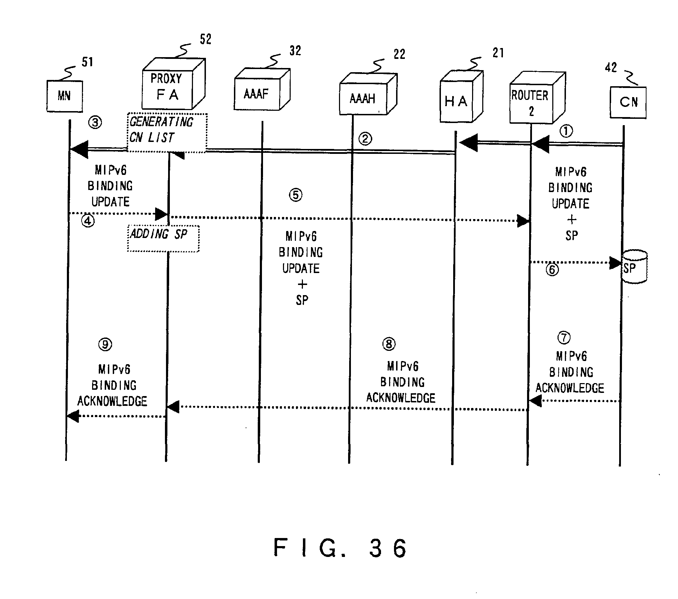

FIG. 36 shows the sequence of setting binding cache in a communications node from which a packet is transmitted to a mobile node (when a communications node list is generated in a proxy foreign agent);

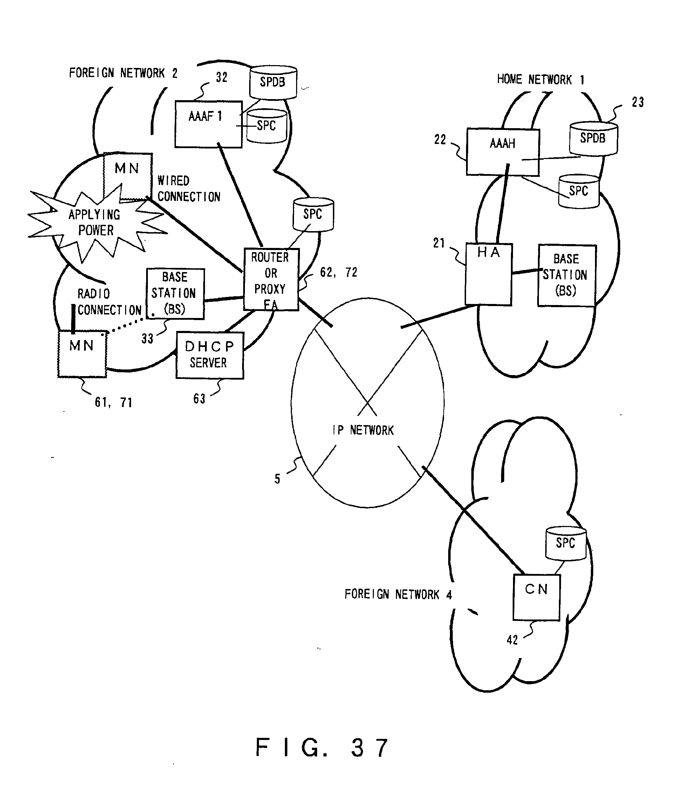

FIG. 37 shows the configuration of the network of the communications service providing system according to the third and fourth embodiments of the present invention;

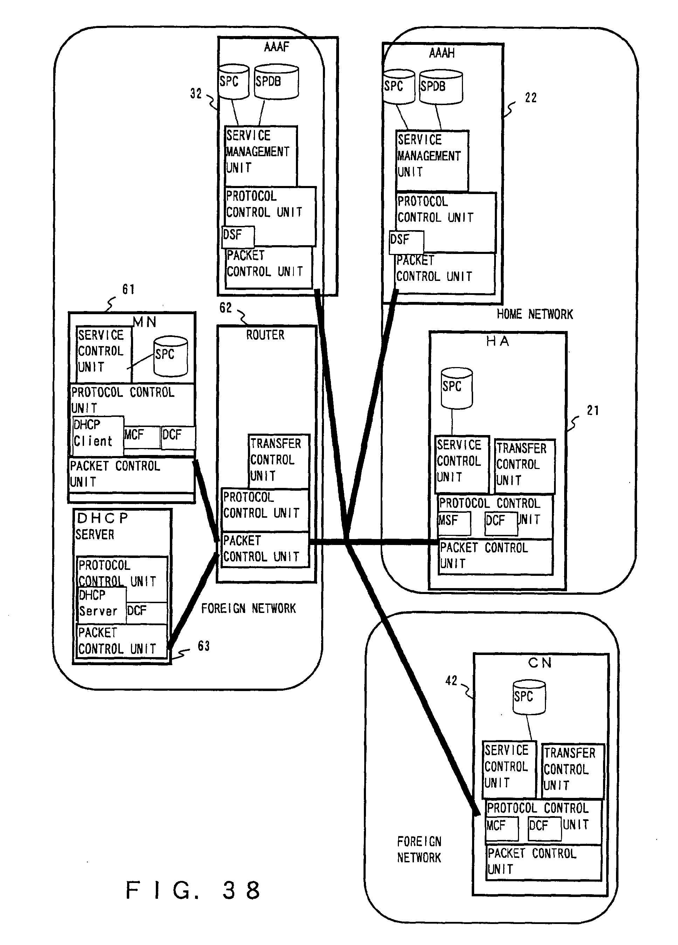

FIG. 38 shows the configuration of the main devices of the communications service providing system according to the third embodiment of the present invention;

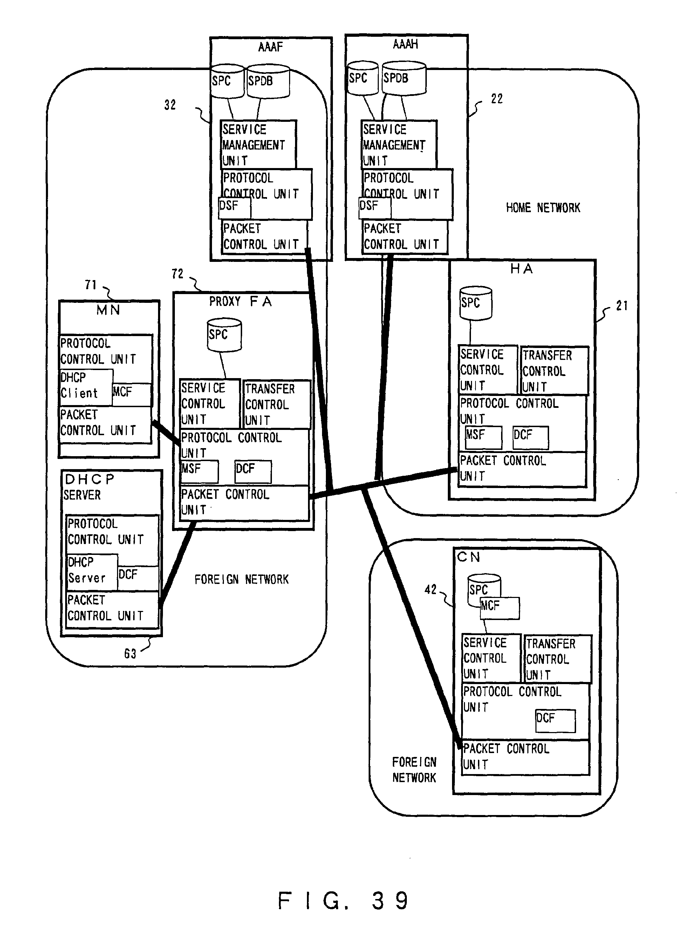

FIG. 39 shows the configuration of the main devices of the communications service providing system according to the fourth embodiment of the present invention;

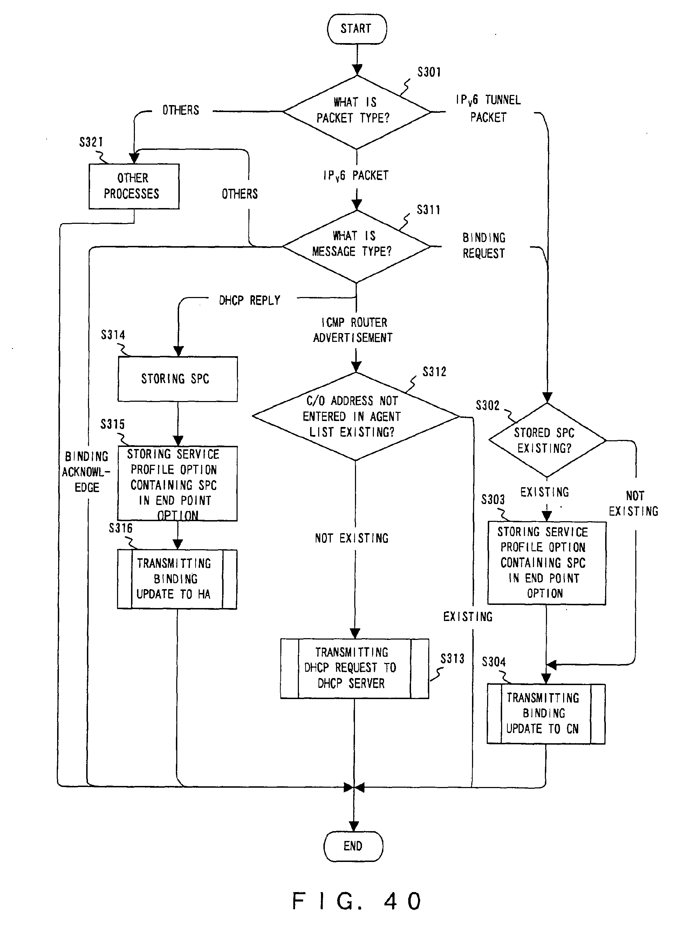

FIG. 40 is a flowchart of the operations of the mobile node according to the third embodiment of the present invention;

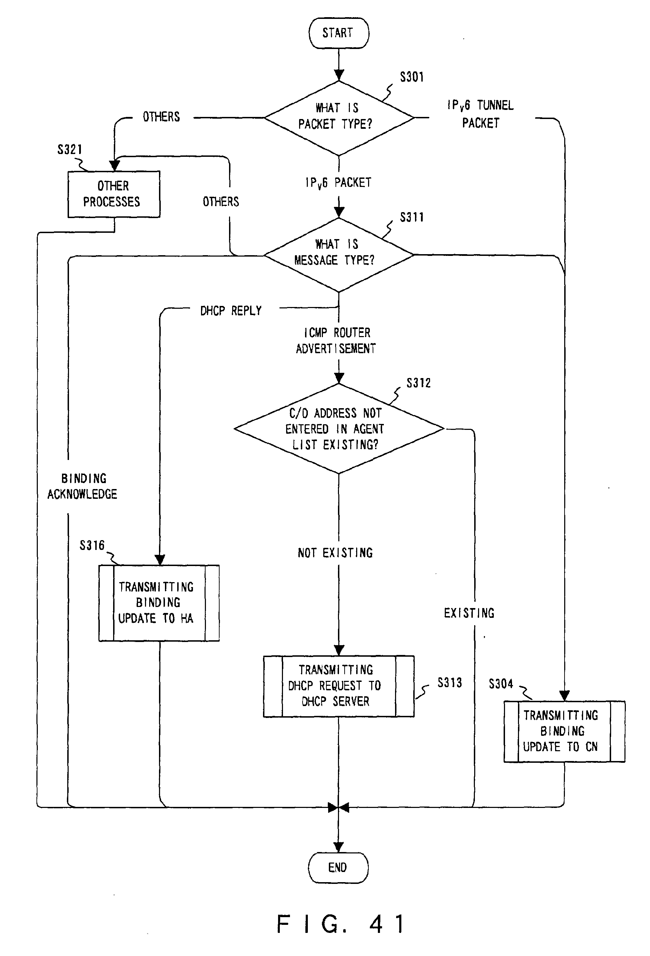

FIG. 41 is a flowchart of the operations of the mobile node according to the fourth embodiment of the present invention;

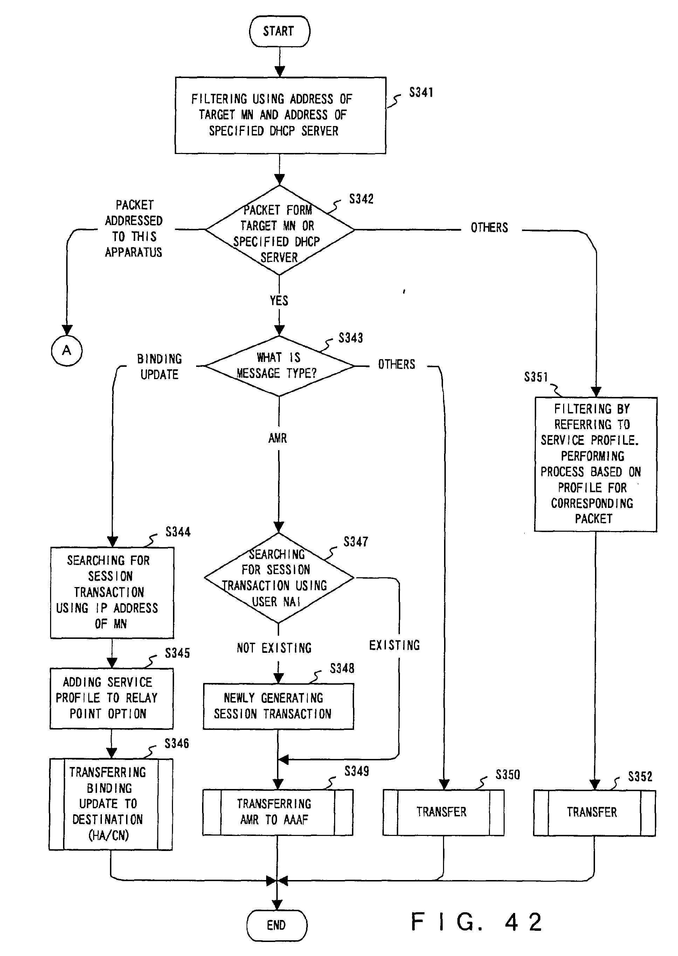

FIG. 42 is a flowchart (1) of the operations of the proxy foreign agent;

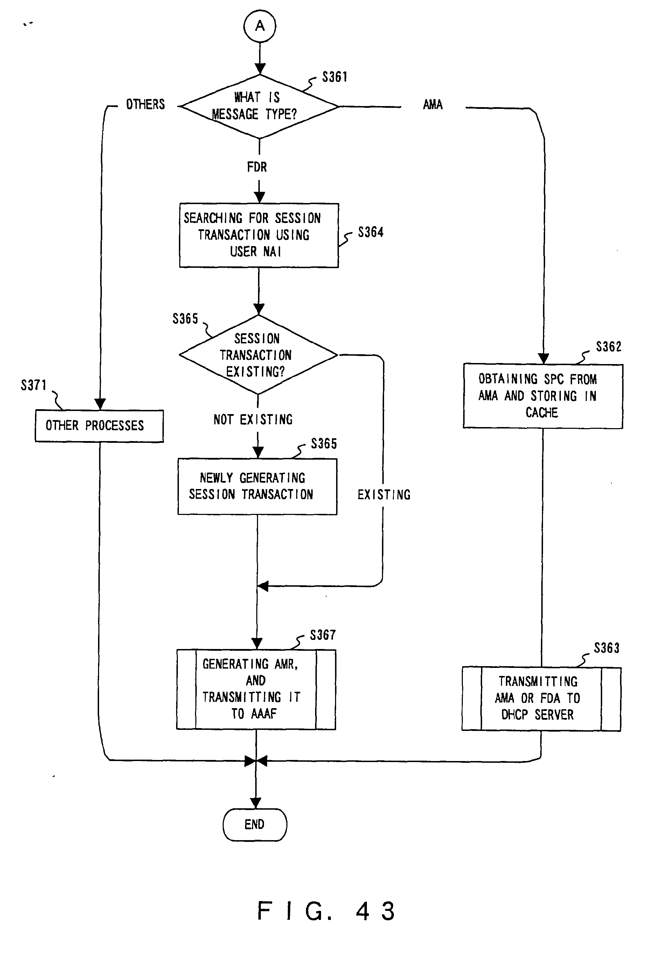

FIG. 43 is a flowchart (2) of the operations of the proxy foreign agent;

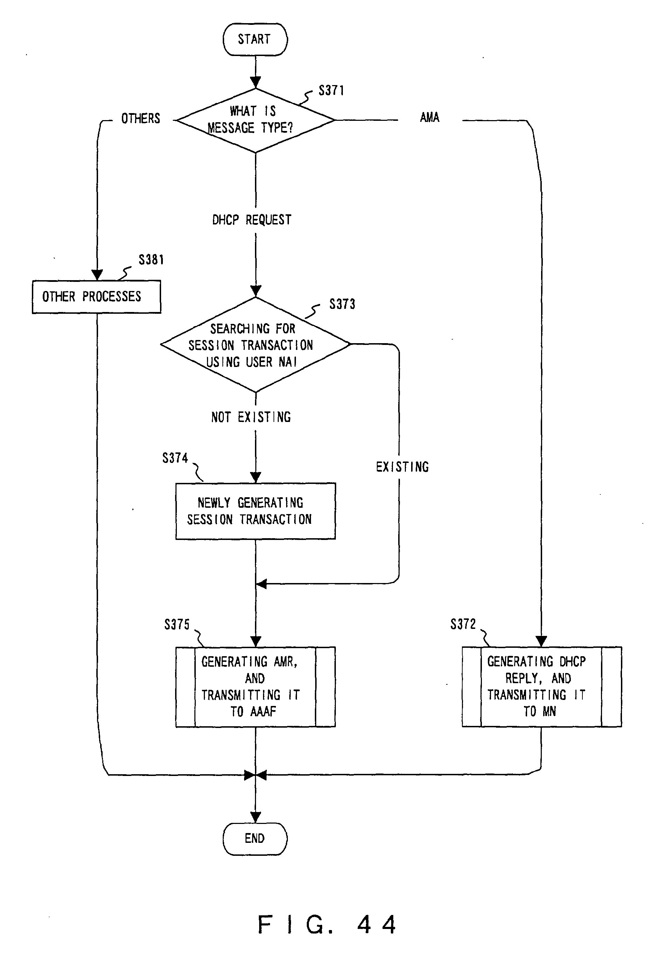

FIG. 44 is a flowchart of the operations of the DHCP server (when an FDR or an FDA is not used) ;

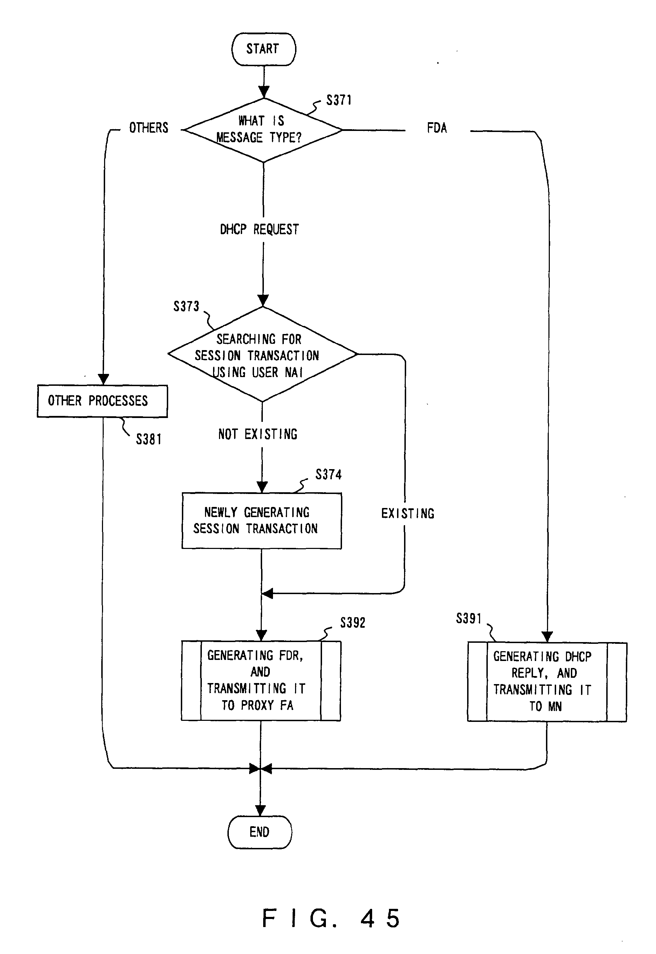

FIG. 45 is a flowchart of the operations of the DHCP server (when an FDR or an FDA is used);

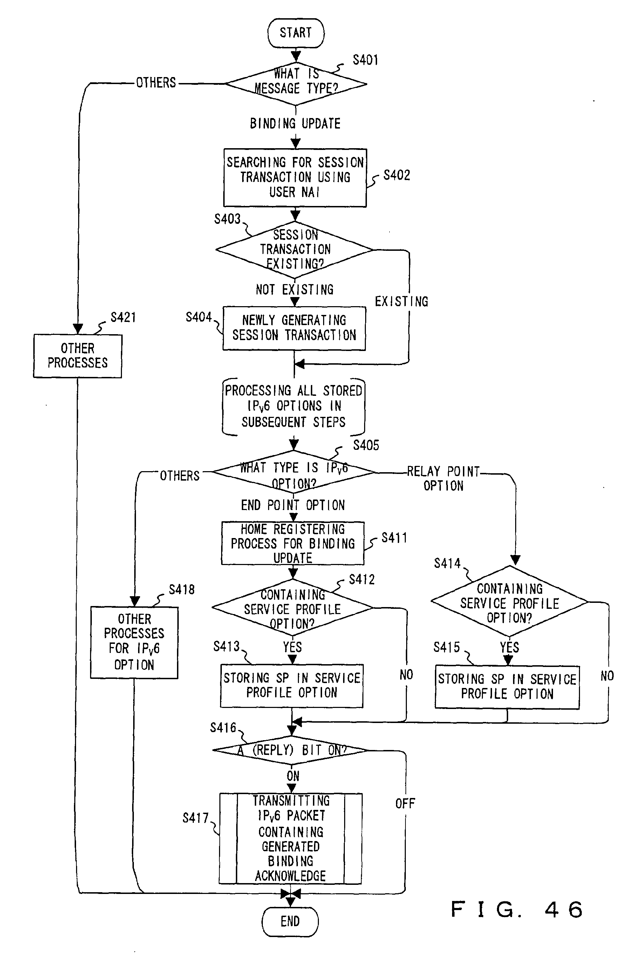

FIG. 46 is a flowchart of the operations of the home agent;

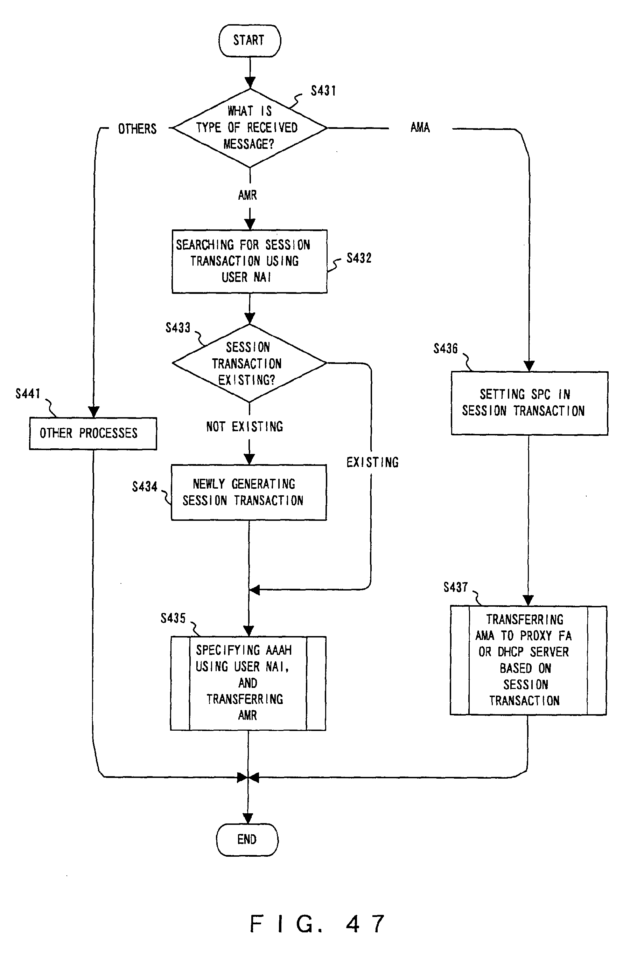

FIG. 47 is a flowchart of the operations of an AAAF;

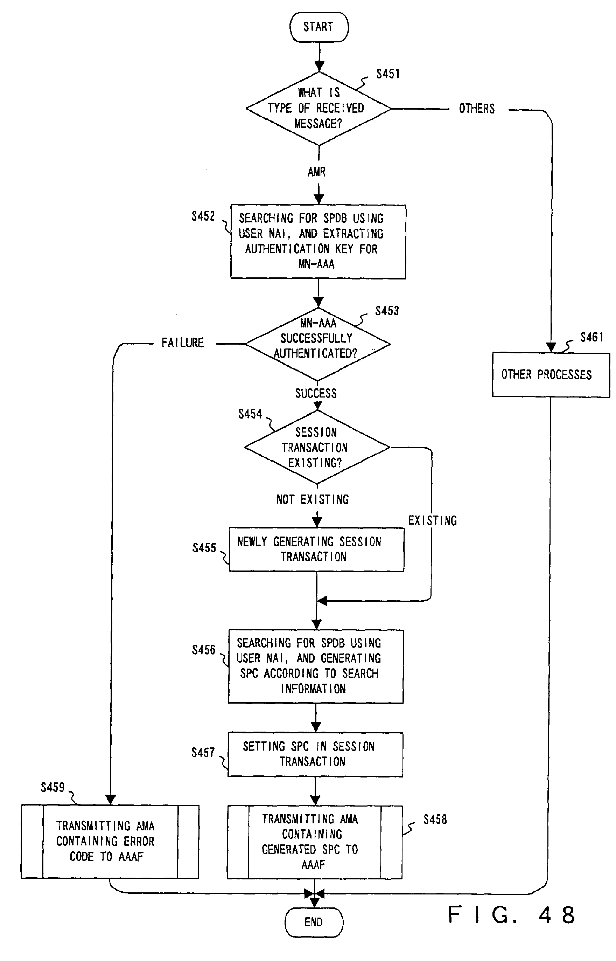

FIG. 48 is a flowchart of the operations of an AAAH;

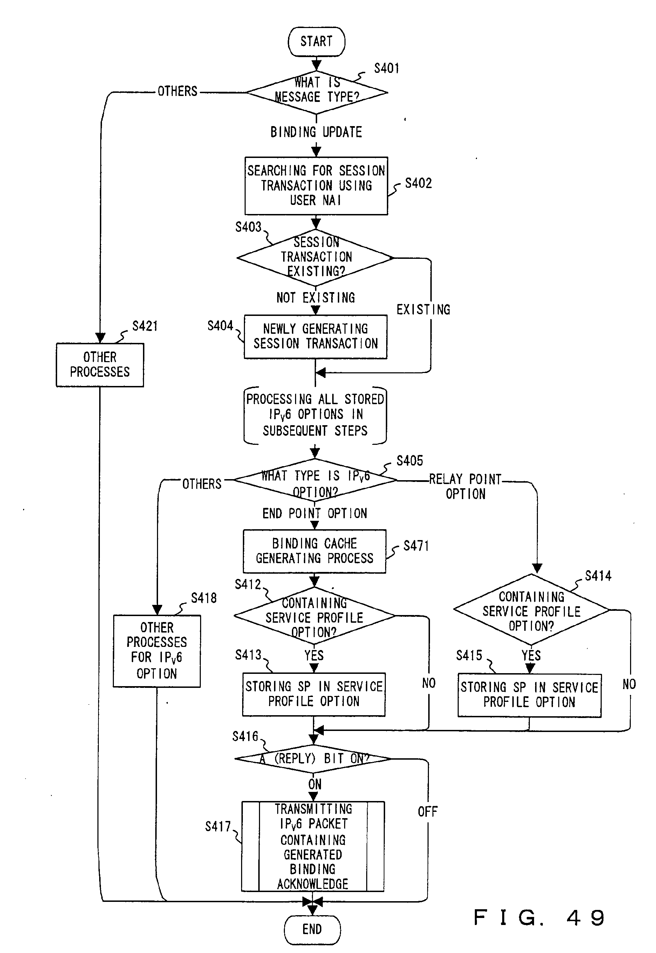

FIG. 49 is a flowchart of the operations of the communications node;

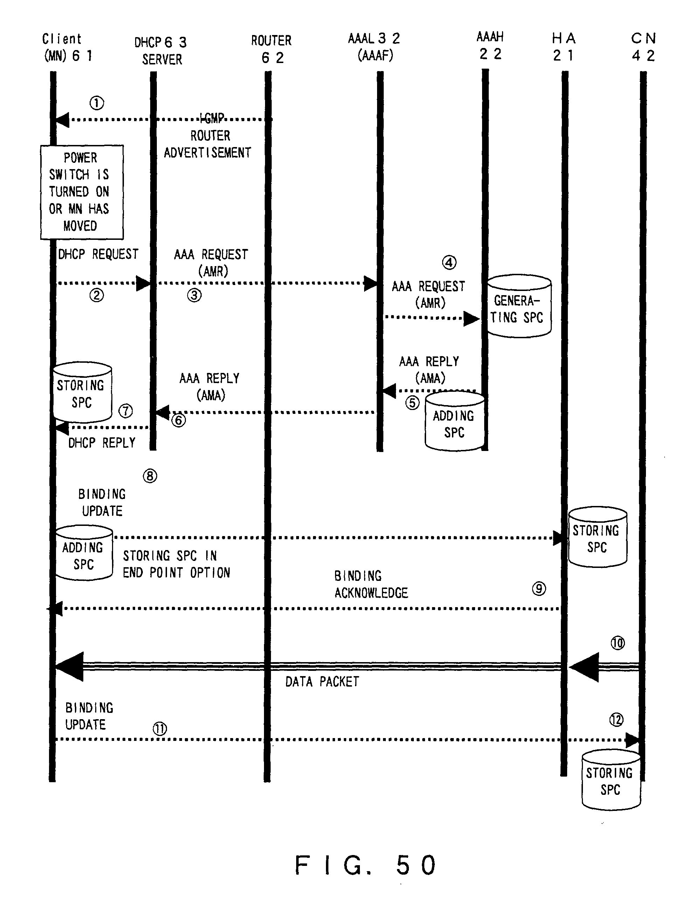

FIG. 50 shows the sequence of the DHCP-AAA cooperative operations according to the third embodiment of the present invention;

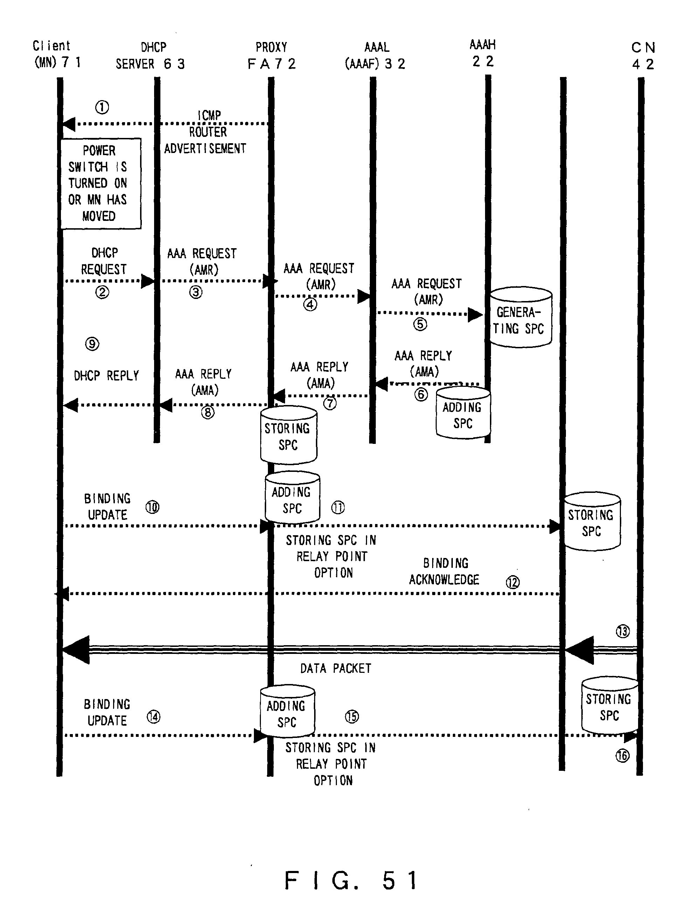

FIG. 51 shows the sequence of the DHCP-AAA cooperative operations according to the fourth embodiment of the present invention;

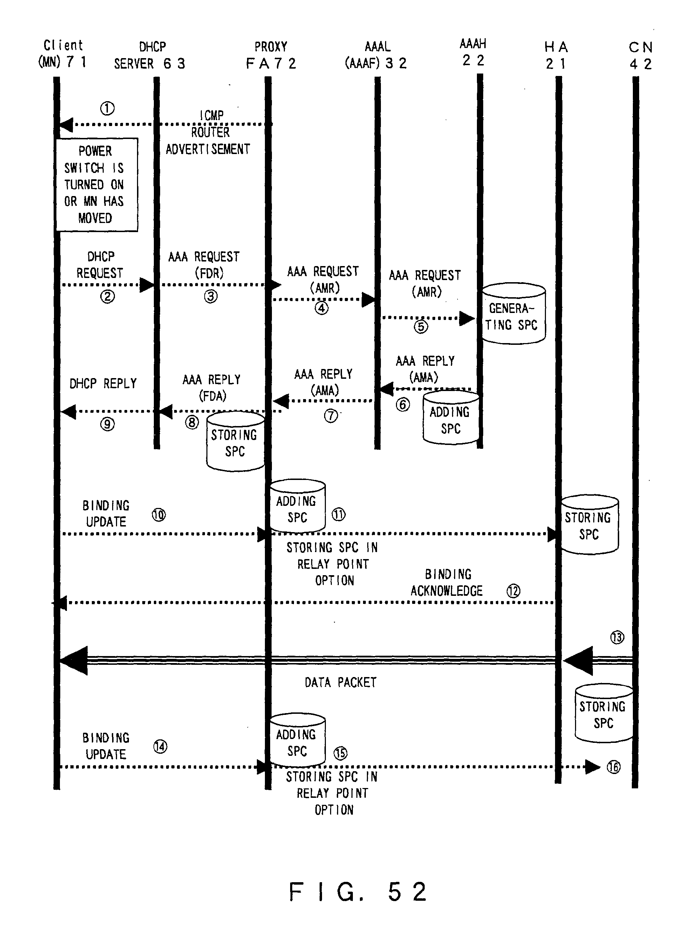

FIG. 52 shows the sequence of the DHCP-AAA cooperative operations when an FDR and an FDA are used;

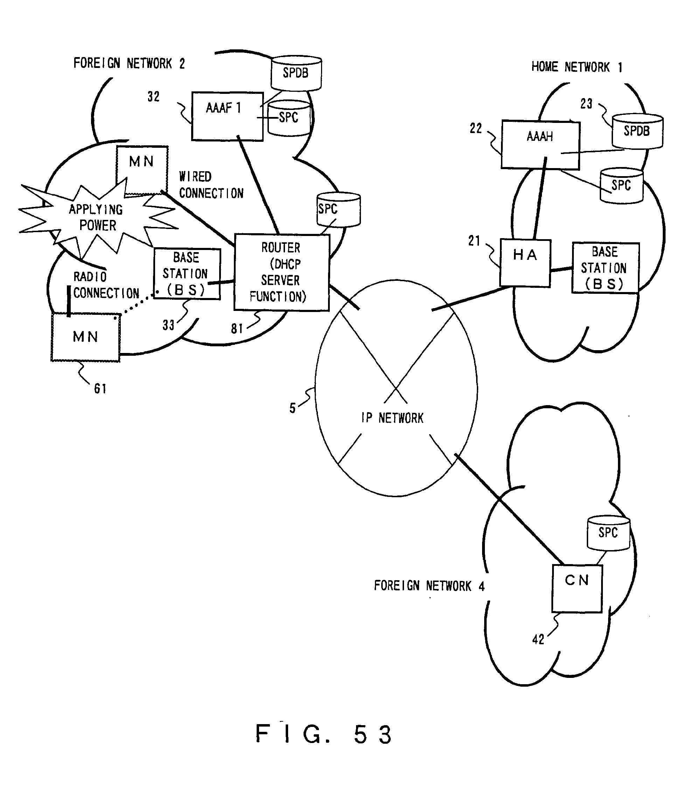

FIG. 53 shows the configuration of the network of the communications service providing system according to the fifth embodiment of the present invention;

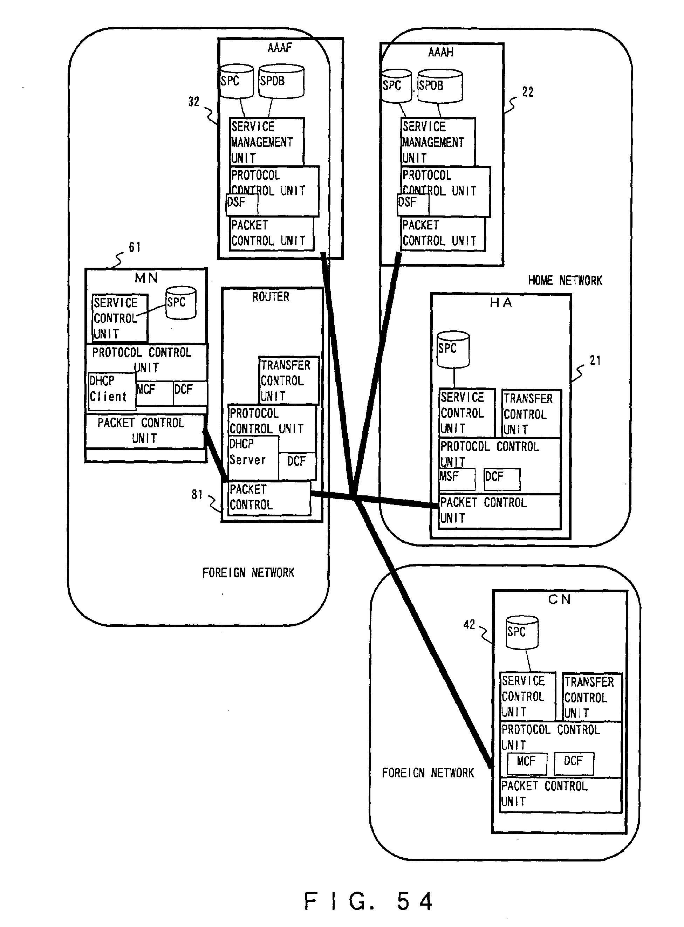

FIG. 54 shows the configuration of the main devices of the communications service providing system according to the fifth embodiment of the present invention;

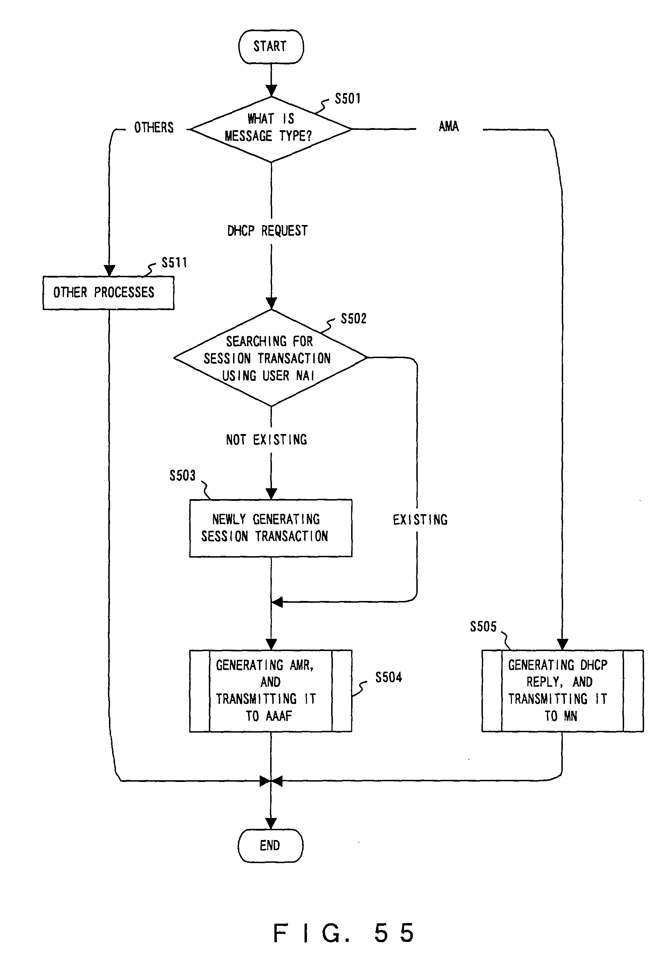

FIG. 55 is a flowchart of the router device according to the fifth embodiment of the present invention;

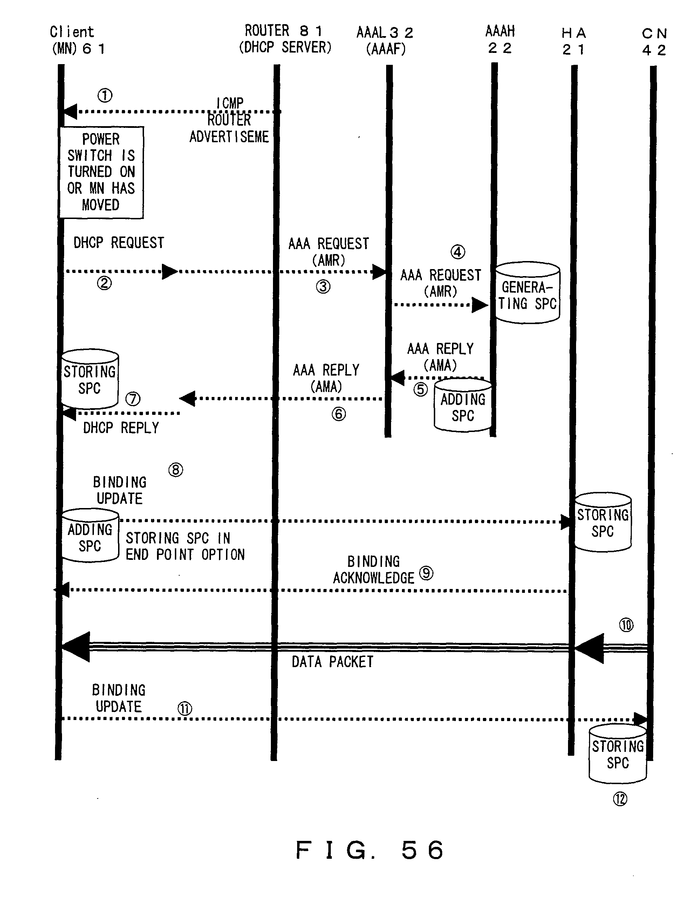

FIG. 56 shows the sequence of the DHCP-AAA cooperative operations according to the fifth embodiment of the present invention;

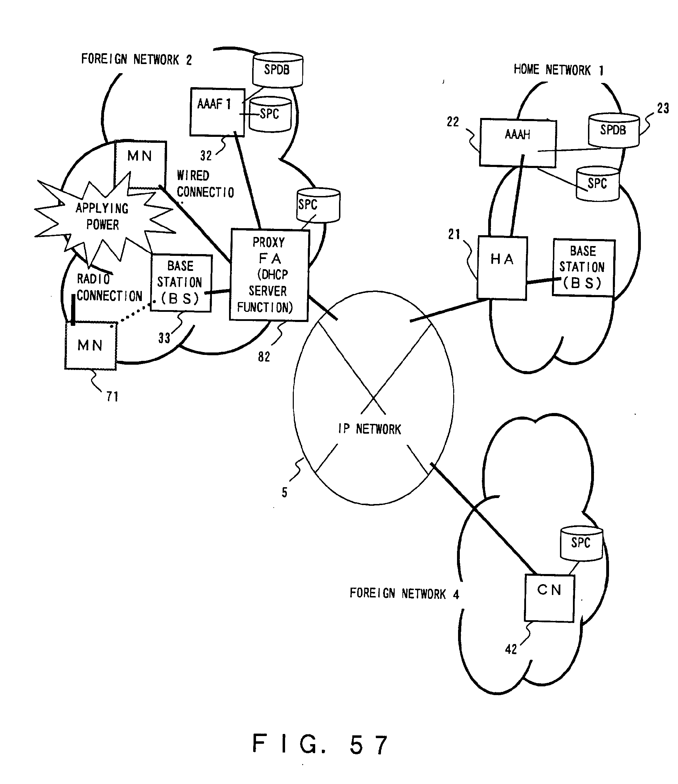

FIG. 57 shows the configuration of the network of the communications service providing system according to the sixth embodiment of the present invention;

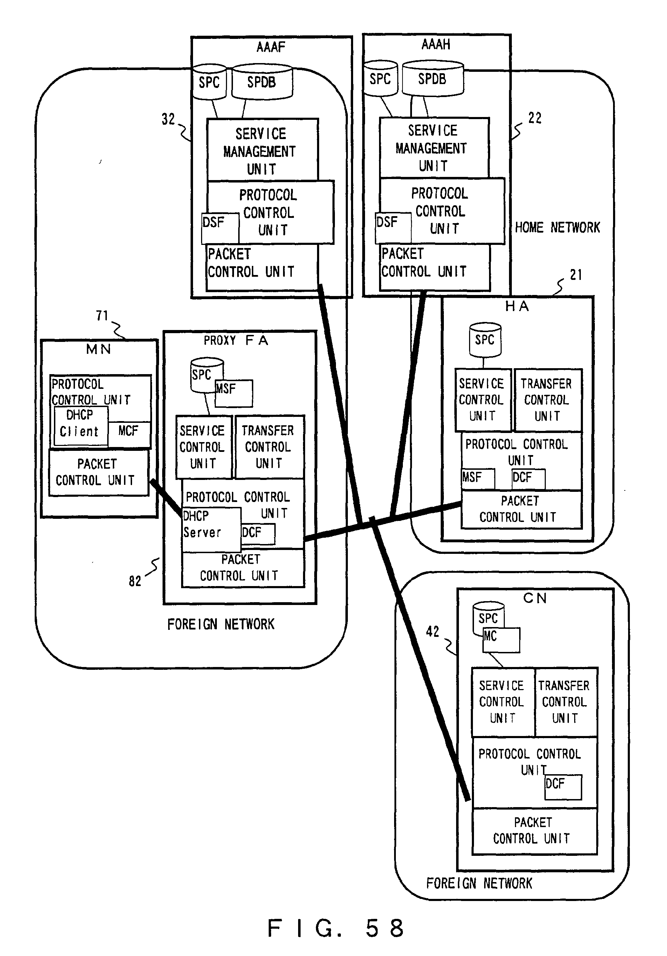

FIG. 58 shows the configuration of the main devices of the communications service providing system according to the sixth embodiment of the present invention;

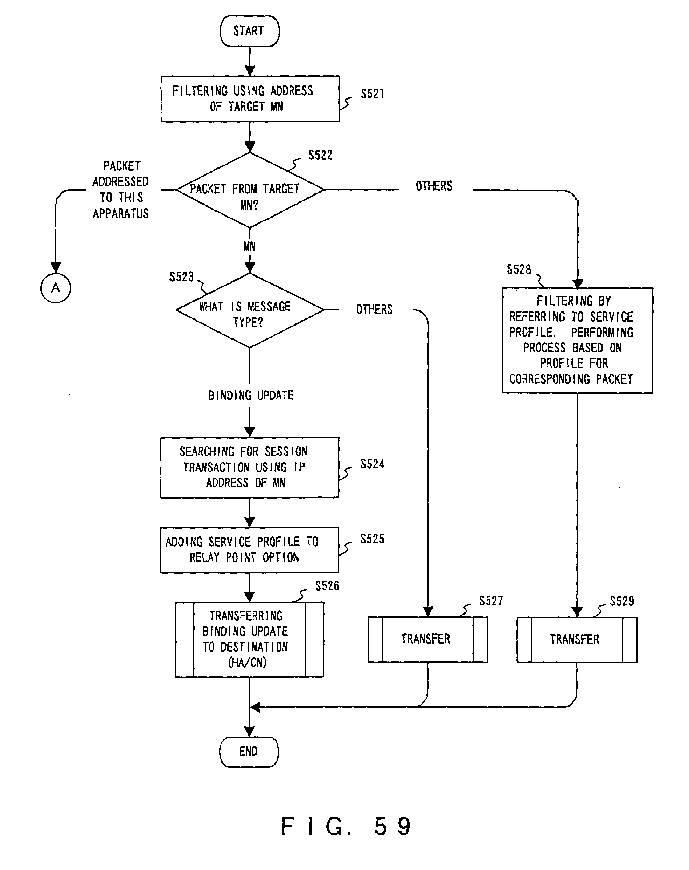

FIG. 59 is a flowchart (1) of the operations of the proxy foreign agent according to the sixth embodiment of the present invention;

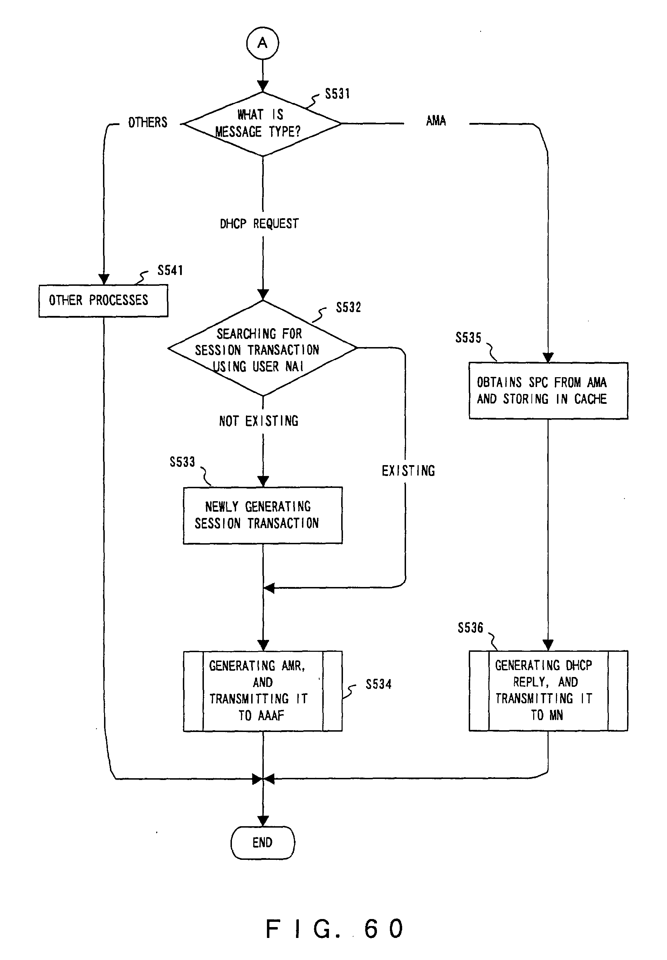

FIG. 60 is a flowchart (2) of the operations of the proxy foreign agent according to the sixth embodiment of the present invention;

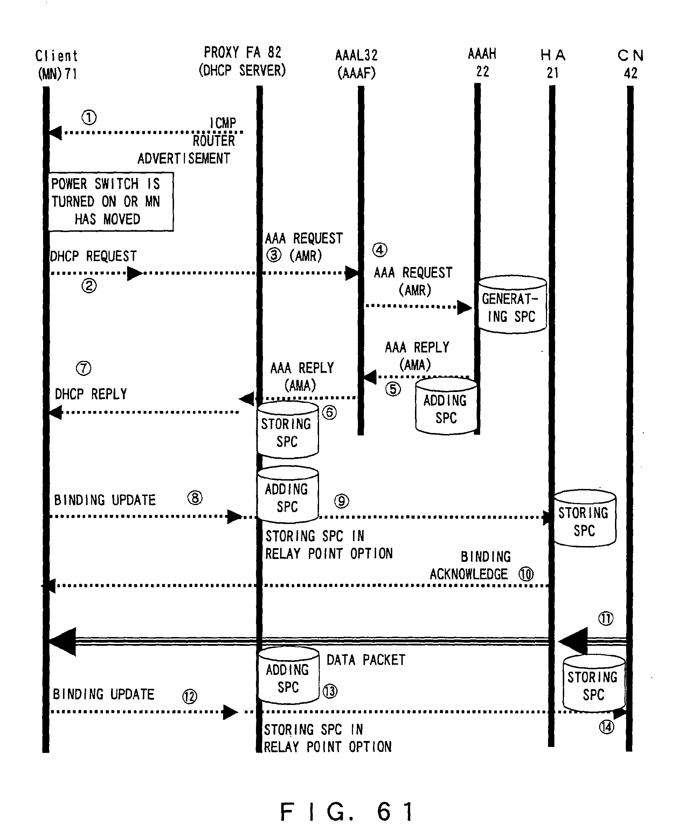

FIG. 61 shows the sequence of the DHCP-AAA cooperative operations according to the sixth embodiment of the present invention;

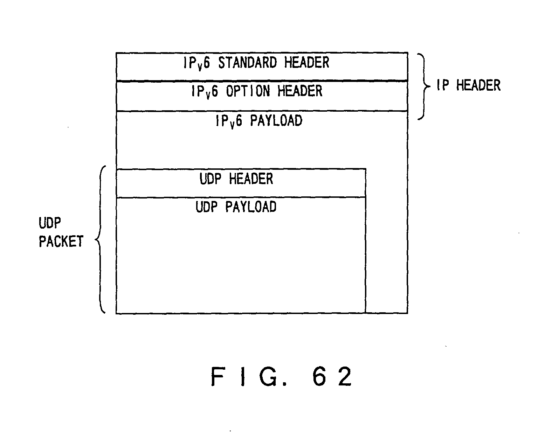

FIG. 62 shows the format of the IPv6 packet;

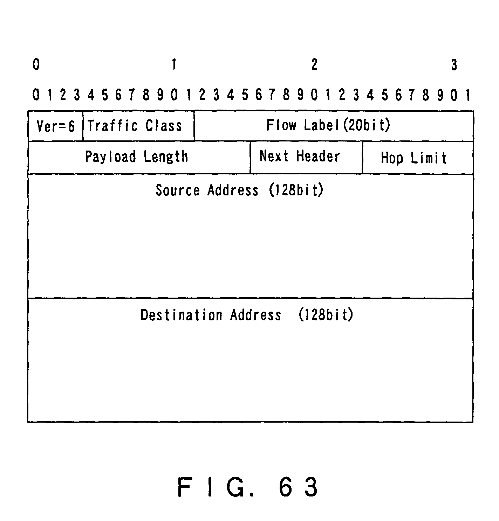

FIG. 63 shows the format of the standard header of the IPv6 packet;

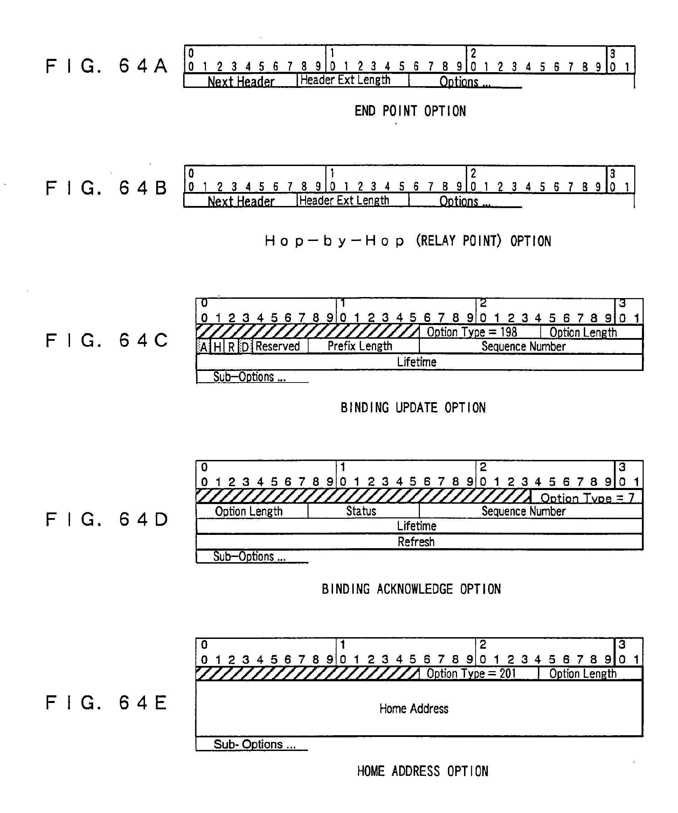

FIGS. 64A through 64E show the information stored in the option header of the IPv6 packet;

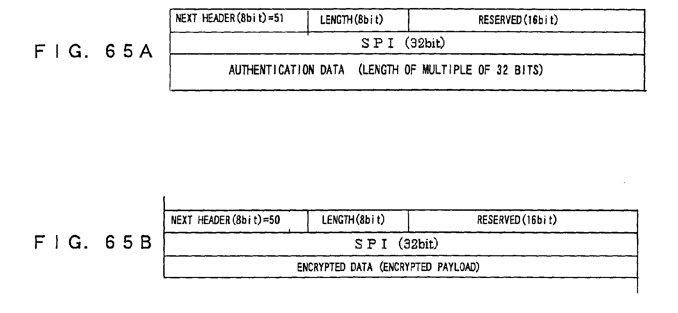

FIGS. 65A and 65B show the format of the IPsec header;

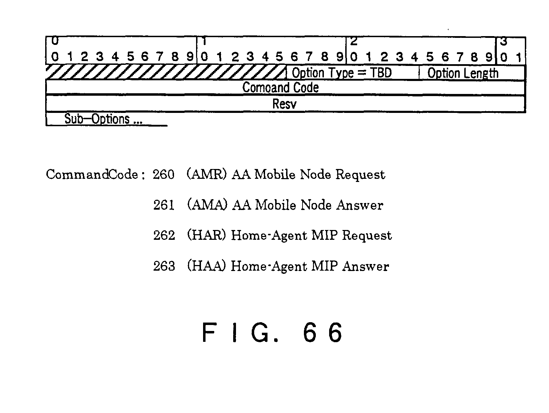

FIG. 66 shows the format of the AAA option;

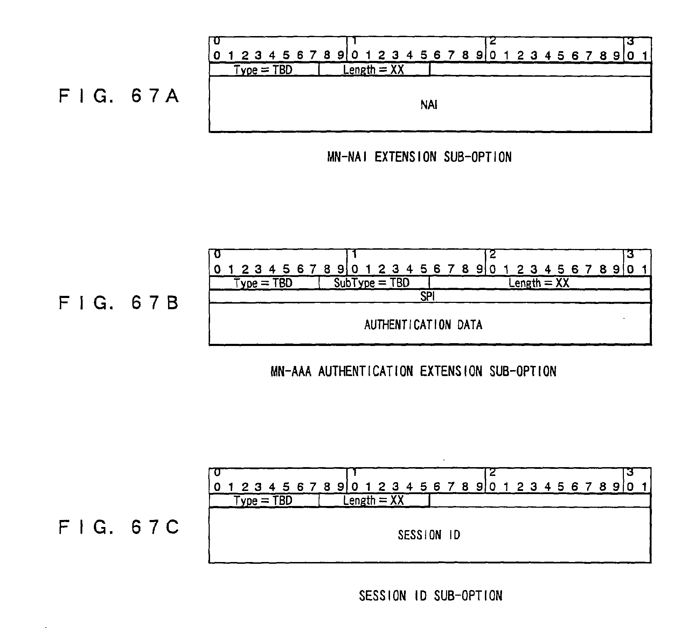

FIGS. 67A through 67C show the information stored in the sub-option area of the AAA option shown in FIG. 66;

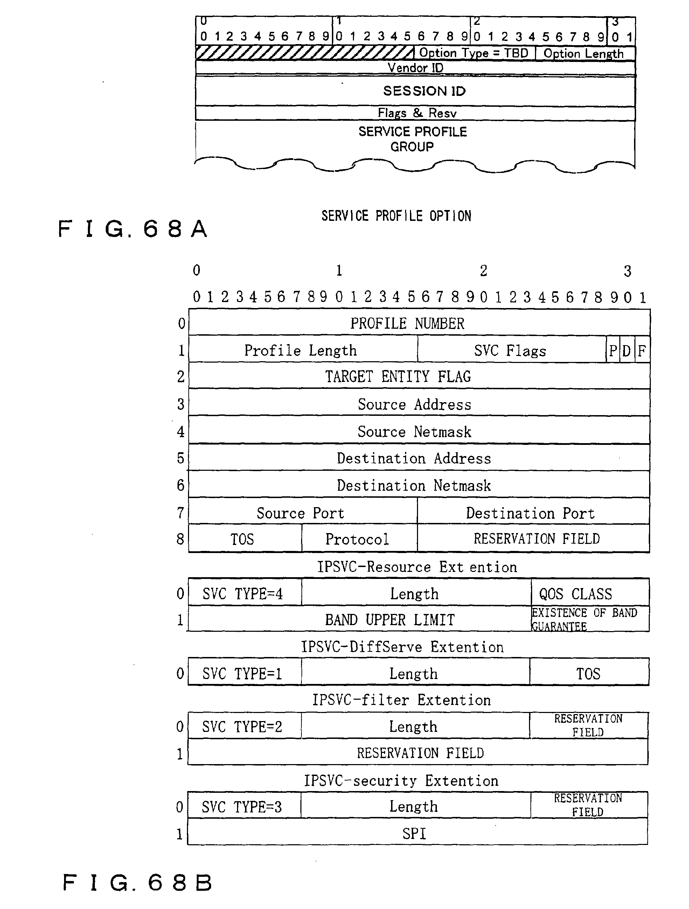

FIGS. 68A and 68B show an example of a service profile option;

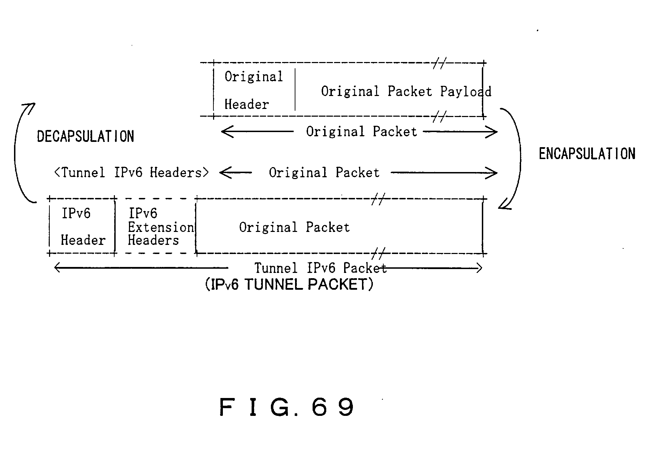

FIG. 69 shows the method of encapsulating the IPv6 packet;

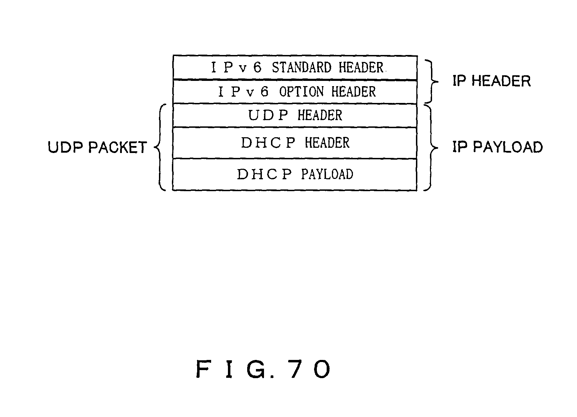

FIG. 70 shows the format of the IPv6 packet storing a DHCP message;

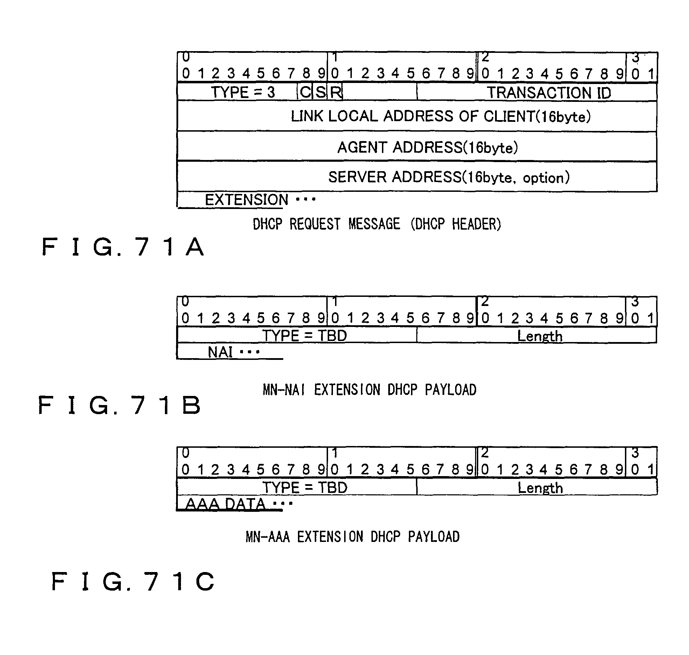

FIGS. 71A through 71C show the format of the information relating to a DHCP request;

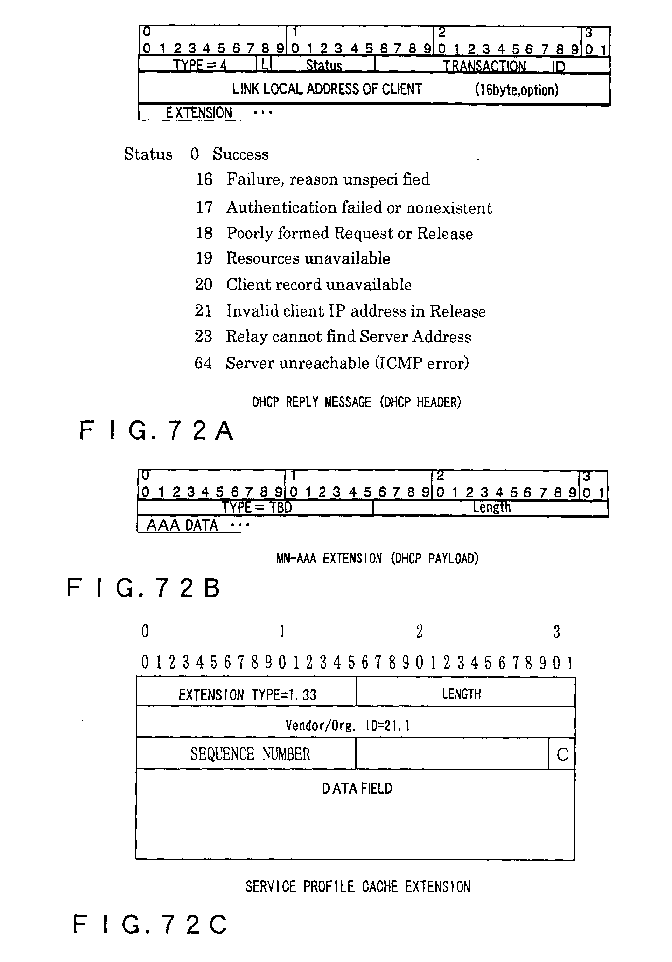

FIGS. 72A through 72C show the format of the information relating to a DHCP reply;

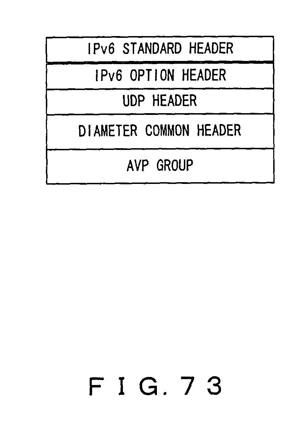

FIG. 73 shows the format of the IPv6 storing the information relating to DIAMETER;

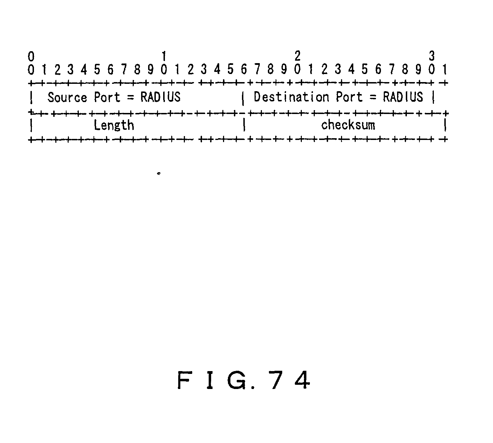

FIG. 74 shows the format of the UDP header

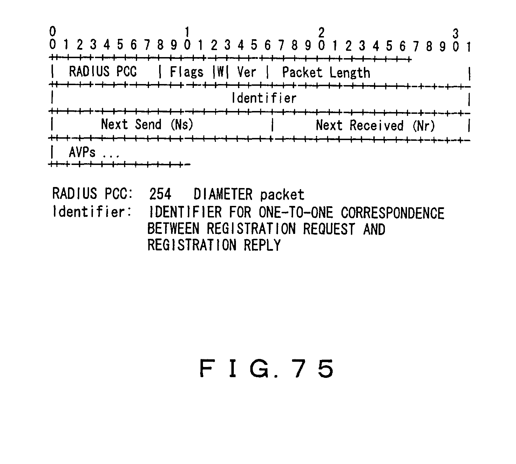

FIG. 75 shows the format of the DIAMETER common header;

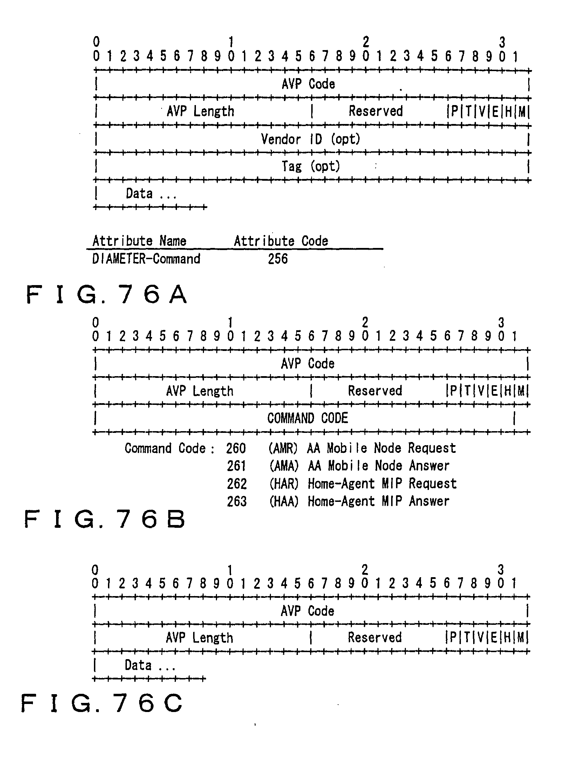

FIGS. 76A through 76C show the format of the AVP group;

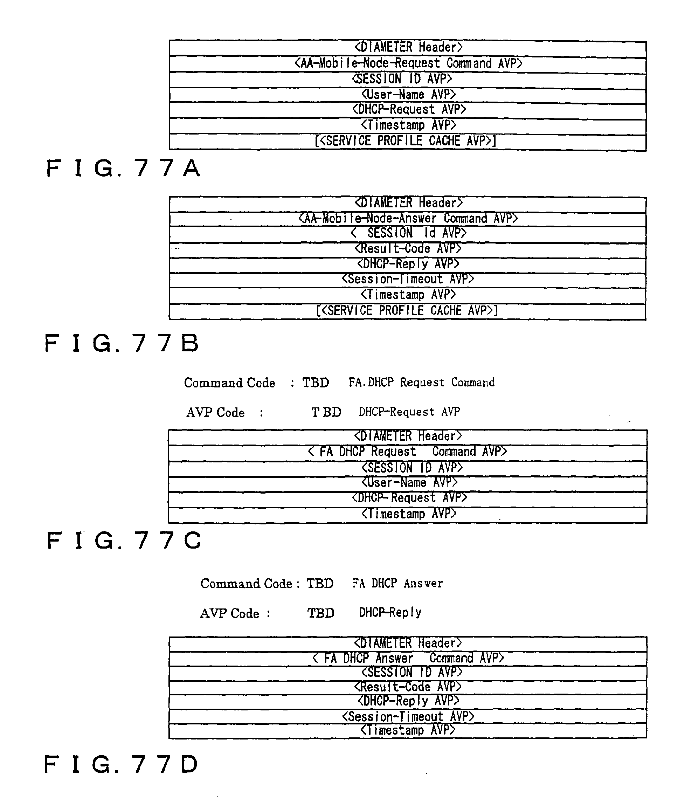

FIGS. 77A through 77D show the format of the DIAMETER message used in the system according to the third and fourth embodiments of the present invention; and

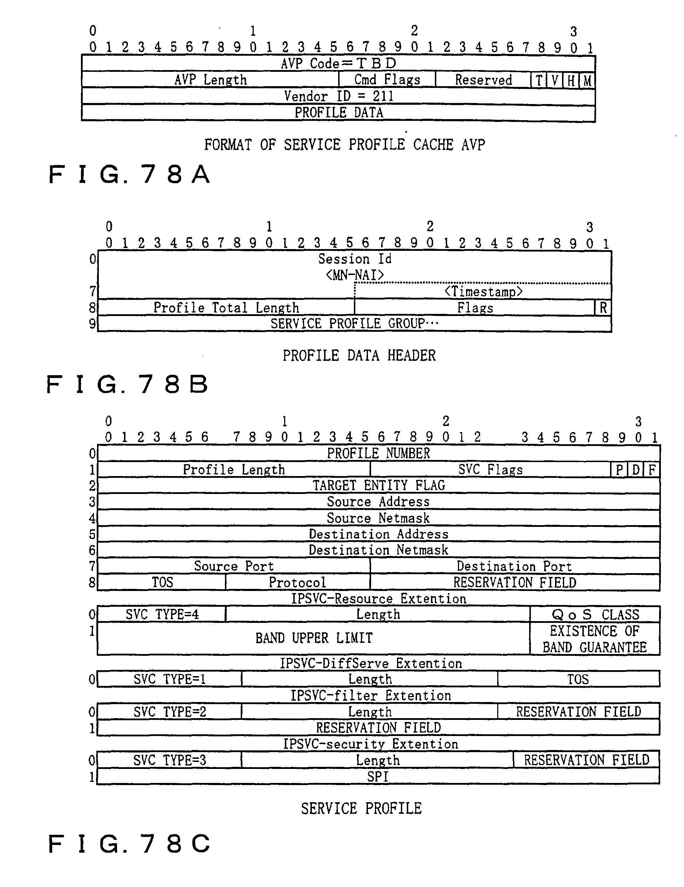

FIGS. 78A through 78C show the format of the service profile cache AVP.

### Description of the Preferred Embodiments

The embodiments of the present invention are described below by referring to the attached drawings.

### 1. Outline of the first and second embodiments

FIG. 5 shows the configuration of the network of the communications service providing system according to the first embodiment of the present invention. In the network according to the first embodiment shown in FIG. 5, the home network 1 managed by the service provider of the mobile node (MN) and the foreign networks 2 through 4 managed by other service providers are interconnected through the IP network 5. The IP network 5 supports the IPv6.

The mobile IP protocol used in the system according to the present embodiment is based on the IPv6. The protocol is hereinafter referred to as a "mobile IPv6", or a "MIPv6". The specification of the mobile IPv6 can be obtained from, for example, <draft-ietf-mobileip-ipv6-10.txt> as an Internet draft by the IETF (Internet engineering task force).

The home network 1 is provided with a home agent (HA) 21 and an AAAH (authentication, authorization, and accounting home) server 22. The home agent 21 is a function entity defined by the RFC2002 and the MIPv6, and can be realized by the router device. In addition, the home agent 21 holds and manages the home address assigned for the mobile node, and manages the location of the mobile node. On the other hand, the AAAH server 22 is a server device (authentication server) for performing the authenticating, authorizing, and accounting processes on a mobile node. The AAAH is the name used in the IETF.

The home network 1 is provided with one or more AAAHs, and one or more home agents. Furthermore, a plurality of home agents can be connected to each AAAH.

A database (SPDB) 23 stores necessary service control information (which can be referred to as a "service profile") for use in providing a communications service for each mobile node. The database 23 can be accessed only by the AAAH server 22. The AAAH server 22 and the home agent 21 are provided with a service profile cache (SPC). The service profile cache temporarily stores a service profile read from the database 23. The retrieval protocol of the database 23 is not specifically limited, but can be, for example, an LDAP (light weight directory access protocol).

Furthermore, a base station 24 is connected to each home agent 21. The base station 24 is provided with a radio interface, and establishes a radio transmission path to a terminal device (including a mobile node). A radio access system can be, for example, MC-CDMA (multicarrier-code division multiple access), DS-CDMA (direct spread-code division multiple access), etc.

The foreign networks 2 through 4 are provided with router devices 31 (31-1, 31-2), AAAF (authentication, authorization, and accounting foreign) servers 32 (32-1, 32-2), and base stations 33 (33-1, 33-2). Each router device 31 transfers a packet according to the destination address, etc. set in the header of each packet. Each router device 31 provides the function of a home agent for the mobile node in which the home address is held and managed by the router device. For example, the router device 31-1 operates as a home agent of a mobile node in contract with the foreign network 2.

As the AAAH server 22, the AAAF server 32 is a server device for performing the authenticating, authorizing, and accounting processes on a mobile node. However, each AAA device (including an AAAH and an AAAF) performs the authenticating, authorizing, and accounting processes only on the mobile node to be managed. Therefore, when each AAA device receives an access request from a mobile node which is not to be managed by the AAA device, it requests an AAA device which manages the mobile node to perform the process according to the request. Then, the requested AAA device processes the access request. At this time, the requesting AAA device is an AAAF for the mobile node, and the requested AAA device is an AAAH for the mobile node.

A mobile node (mobile terminal device) 41 is accommodated in the home agent 21 or any router device 31, and communicates with other terminal devices. In this example, the terminal device communicating with the mobile node 41 is referred to as a communications node (CN) 42. When the mobile node 41 establishes communications through a radio transmission path, it is accommodated by the router device 31 through the base station 33. In this case, the radio access system can be, for example, MC-CDMA, DS-CDMA, etc. The mobile node 41 can be connected to a radio LAN, or to the router device 31 through metal cable or optical fiber.

Thus, in the network according to the first embodiment, there is no foreign agent unlike the existing network shown in FIG. 1.

FIG. 6 shows the configuration of the main devices of the communications service providing system according to the first embodiment of the present invention. In this system, it is assumed that DIAMETER is used as a protocol for performing the authenticating, authorizing, and accounting processes on a mobile node. The prescriptions of the DIAMETER protocol as a draft by the IETF can be obtained from, for example, <draft-calhoun-diameter-12.txt> and <draft-calhoun-diameter-mobileip-07.txt>.

In the communications service providing system according to the first embodiment of the present invention, each of the home agent 21, the AAAH server 22, the AAAF server 32, the mobile node 41, and the communications node 42 is provided with a packet control unit, a protocol control unit, a service management unit or a service control unit, and service profile cache. The router device 31 is provided with a packet control unit. Each of the home agent 21, the mobile node 41, and the communications node 42 is provided with a transfer control unit. The configurations and the operations of the packet control unit, the protocol control unit, the service management unit or the service control unit, the service profile cache, and the transfer control unit are described later.

The router device 31 can function as a home agent for a mobile node in contract with the foreign network 2 or 3. In this case, the router device 31 is provided with the protocol control unit, the service control unit, the transfer control unit, the service profile cache (SPC), the function of the DIAMETER client described later, and the function of the mobile IP server described later.

Each of the mobile node 41 and the communications node 42 is provided with a mobile IP client function (MCF) for requesting another communications appliance to perform a process prescribed by the mobile IP. On the other hand, the home agent 21 is provided with a mobile IP server function (MSF) for accepting a request relating to the process prescribed by the mobile IP. Each of the mobile node 41 and the home agent 21 is provided with a DIAMETER client function (DCF) for requesting another communications appliance to perform the process prescribed by the DIAMETER protocol. On the other hand, each of the AAAH server 22 and the AAAF server 32 is provided with a DIAMETER server function (DSF) for accepting a request relating to the process prescribed by the DIAMETER protocol. Since these functions are known technologies, the detailed explanation is omitted here.

FIG. 7 shows the configuration of the network of the communications service providing system according to the second embodiment of the present invention. FIG. 8 shows the configuration of the main devices of the according to the second embodiment of the present invention. In the system according to the second embodiment, the communications appliance for accommodating a mobile node 51 functions as a proxy foreign agent (proxy FA) 52. The proxy foreign agent 52 is a communications appliance practically having the equivalent function of the foreign agent prescribed in the mobile IPv4, and can be realized by adding that function to the router device. That is, the proxy foreign agent 52 comprises not only a packet control unit, but also a protocol control unit, a service control unit, a transfer control unit, service profile cache (SPC) to realize the above mentioned function. The protocol control unit of the proxy foreign agent 52 comprises a mobile IP server function (MSF) and a DIAMETER client function (DCF).

Unlike the mobile node 41, the mobile node 51 does not comprise a service control unit, a transfer control unit, or service profile cache (SPC). In addition, in the system according to the second embodiment, a DIAMETER protocol is supported by the proxy foreign agent 52. As a result, the protocol control unit of the mobile node 51 is not necessarily provided with the DIAMETER client function (DCF).

In the system according to the first or second embodiment of the present invention, the location of a mobile node is registered in the following procedure.
(1) The router device 31 or the mobile node 51 announce an advertisement message.
(2) Upon receipt of the advertisement message, the mobile nodes 41 and 51 transmits a location registration request message to the router device 31 or the proxy foreign agent 52. At this time, the mobile nodes 41 and 51 also transmit an AMR (AA-mobile-node-request) message.
(3) Upon receipt of a location registration message, the router device 31 or the proxy foreign agent 52 transmits the AMR message to the AAAF server 32.
(4) Upon receipt of the AMR message, the AAAF server 32 transfers it to the AAAH server 22.
(5) Upon receipt of the AMR message, the AAAH server 22 performs the authenticating, authorizing, and accounting processes on the mobile nodes 41 or 51, and transmits an HAR (home-agent-MIP-request) message to the home agent 21.
(6) Upon receipt of the HAR message, the home agent 21 registers the locations of the mobile nodes 41 or 51, and returns an HAA (home-agent-MIP-answer) message to the AAAH server 22.
(7) Upon receipt of the HAA message, the AAAH server 22 transmits an AMA (AA-mobile-node-answer) message to the AAAF server 32.
(8) Upon receipt of the AMA message, the AAAF server 32 transfers it to the router device 31 or the proxy foreign agent 52.
(9) Upon receipt of the AMA message, the router device 31 or the proxy foreign agent 52 transmits a location registration reply message to the mobiles nodes 41 or 51. At this time, the router device 31 or the proxy foreign agent 52 can transmit the AMA message to the mobile nodes 41 or 51.
(10) When the mobile nodes 41 or 51 receives the location registration reply message, the location registration procedure terminates.

In the communications service providing method according to the present invention, the service control information (hereinafter referred to as a "service profile") corresponding to the mobile nodes 41 and 51 is distributed to a corresponding communications appliance in the above mentioned location registration procedure. Practically, the service profile corresponding to the mobile nodes 41 and 51 is extracted from the database 23 by the AAAH server 22. The service profile is distributed together with the HAR message to the home agent 21, and is distributed together with the AMA message to the AAAF server 32. Furthermore, the service profile is distributed to the mobile node 41 together with the AMA message according to the first embodiment, and is distributed together with the AMA message to the proxy foreign agent 52 according to the second embodiment. At this time, the distributed service profile is stored in service profile cache (SPC).

The above mentioned information (containing various messages, service profiles, etc.) is basically stored in an IPv6 packet and transmitted. Described below is the configuration of a packet transmitted and received in the system according to the first and second embodiments.

FIG. 62 shows the format of an IPv6 packet. An IPv6 packet comprises an IP header and an IP payload. In the IPv6, the IP header comprises a standard header and an option header. In the IP payload, a UDP packet is stored. The specification, etc. of the IPv6 is described in detail in the RFC2469 of the IETF.

In the IPv6, it is necessary to support an IPsec (IP security protocol). The IPsec contains an encryption protocol for encrypting the option header and the payload of the IP packet. It is determined depending on the setting of the C flag in the IP header as to whether or not the option header is to be encrypted.

FIG. 63 shows the format of the standard header of the IPv6 packet. The standard header comprises version information, a traffic class, a flow label, a payload length, a next header, the number of hop restrictions, a source address, and a destination address. Since the format of the standard header is well known, the detailed explanation is omitted here.

FIGS. 64A through 64E show the information stored in the option header of the IPv6 packet. FIG. 64A shows the format of an end point option. The end point option stores the information referred to by a terminal (including a mobile node, a home agent, a communications node).

FIG. 64B shows the format of a relay point option. The relay point option stores the information referred to by a relay device (including an AAA server, a home agent, a router device). The above mentioned C flag is provided in, for example, the option area of the relay point option.

FIG. 64C shows the format of a binding update option. The binding update option stores a binding update message generated by a mobile node. An A-bit indicates whether or not the device which has received the binding update message has to return the binding acknowledge message. An H-bit indicates whether or not home registration is to be performed on a mobile node. The mobile node sets the H-bit depending on whether or not the source of the received advertisement message matches the source of the previously received advertisement message in the environment in which, for example, a router device or a proxy foreign agent periodically transmits an advertisement message. At this time, when the sources of the above mentioned two messages match each other, the mobile node is assumed to have been registered in the home agent 21. If they do not match, a current location of the mobile node has not been registered in the home agent 21.

FIG. 64D shows the format of a binding acknowledge option. The binding acknowledge option stores a binding acknowledge message generated by the device which has received the binding update message.

The binding update option and the binding acknowledge option can be stored in, for example, the option area of the end point option shown in FIG. 64A.

FIG. 64E shows the format of a home address option. The home address option stores the home address of a mobile node.

FIGS. 65A and 65B show the format of the IPsec header. In the system according to the present embodiment, an authentication header (AH: authentication header) protocol or an ESP (encapsulating security payload) protocol is used to realize the IPsec.

FIG. 65A shows the format of an IP authentication header. The IP authentication header contains a next header, a payload length, an SPI (security parameters Index), and authentication data. FIG. 65B shows the format of an ESP header. The ESP header contains a next header, a payload length, an SPI, and encrypted data. These IPsec headers are stored in the option header of the IPv6 packet. The specification of the authentication header and the ESP is described in detail respectively in the RFC 2402 and the RFC 2406 of the IETF.

FIG. 66 shows the format of an AAA option. The AAA option contains a command code identifying the DIAMETER message. Practically, the command code identifies the AMR message, the AMA message, the HAR message, and the HAA message. The AAA option is stored in the option header of the IPv6 packet. Practically, the AAA option can be stored in, for example, the option area of the relay point option shown in FIG. 64B. In addition, the AAA option can also be stored in the option area of the end point option shown in FIG. 64A.

FIGS. 67A through 67C show the information stored in the sub-option area of the AAA option shown in FIG. 66. FIG. 67A shows an example of an MN-NAI extension sub-option. The MN-NAI extension sub-option stores the NAI (network access identifier) of a mobile node. Each mobile node is uniquely identified by the NAI.

FIG. 67B shows an example of an MN-AAA authentication extension sub-option. The MN-AAA authentication extension sub-option stores an SPI and an authentication data for authenticating a mobile node.

FIG. 67C shows an example of a session ID option. The session ID option stores a session ID. The session ID is identification information for correlating a plurality of messages used in the location registration sequence of each mobile node.

FIG. 68A shows the format of a service profile option. The service profile option contains a vendor ID, a session ID, a service profile group, etc. The service profile option is stored in the option header of an IPv6 packet. Practically, the service profile option can be stored in, for example, the option area of the relay point option shown in FIG. 64B or the option area of the end point option shown in FIG. 64A.

FIG. 68B shows an example of a service profile group stored in the service profile option shown in FIG. 68A. The service profile group comprises one or more service profiles for providing communications services for corresponding mobile node. The service profile of corresponding mobile node is extracted from the database (SPDB) 23 shown in FIGS. 5 through 8.

FIG. 69 shows the method of encapsulating an IPv6 packet. The encapsulation of a packet (tunnel transfer) is performed when an original packet is transferred to a destination other than a final destination of the original packet. In this case, a tunnel packet can be generated by assigning a header in which the other destination is set in the original packet. That is, the original packet is stored in the payload of the tunnel packet. The method of encapsulating the IPv6 packet is described in detail in the RFC 2473 of the IETF.

FIG. 9 shows a packet used in the location registration procedure of a mobile node. In this example, the packet according to the second embodiment in FIGS. 7 and 8 is shown.

The location registration is started by the mobile node 51 issuing a location registration request. Since the location registration request is practically a message requesting to update a mobility binding table provided in the home agent 21, the location registration request is hereinafter referred to as "binding update". A mobility binding table is a table for use by the home agent 21 in managing the location of the mobile node 51.

The binding update request transmitted by the mobile node 51 and the related information are stored in the option header of the IPv6 packet. Practically, the option header of the IPv6 packet transmitted from the mobile node 51 is assigned the relay point option shown in FIG. 64B, the AAA option shown in FIG. 66, the end point option shown in FIG. 64A, the binding update option shown in FIG. 64C, and the authentication header/ESP option shown in FIG. 65A or 65B. In this example, the AMR message is set in the AAA option. The sub-option of the AAA option stores the MN-AAA authentication extension sub-option shown in FIG. 67B. The IPv6 packet is transmitted to the proxy foreign agent 52.

Upon receipt of the IPv6 packet from the mobile node 51, the proxy foreign agent 52 encapsulates and transmits it to the AAAF server 32. At this time, a session ID option is set in the AAA option stored in the option header of the IPv6 packet.

Upon receipt of the IPv6 packet from the proxy foreign agent 52, the AAAF server 32 transfers it to the AAAH server 22. Then, the AAAH server 22 decapsulates the received IPv6 packet, and transfers it to the home agent 21. At this time, instead of the AMR message the HAR message is set in the AAA option of the IPv6 packet. In addition, the service profile option shown in FIGS. 68A and 68B is added to the option header of the IPv6 packet.

Upon receipt of the IPv6 packet, the home agent 21 obtains necessary information from the binding update option in the option header, updates the mobility binding table, and obtains the service profile of the of the mobile node 51 from the service profile option. Then, the binding acknowledge message is returned from the home agent 21 to the mobile node 51, but the detailed explanation of the procedure is omitted here. The home agent 21 notifies the communications node 42 of the binding update message and the service profile of the mobile node 51 as necessary.

The configuration of a packet is basically the same as in the first embodiment. However, in the first embodiment, the mobile node 41 assigns a session ID option.

Thus, the necessary information in the location registration procedure (including the procedure of authenticating a mobile node) of the mobile nodes 41 and 51, and the service profile of the mobile node are stored in the option header of the IPv6 packet, and is then transferred. Generally, the IPv6 packet is encrypted by the IPsec. However, in the IPv6, it can be selected whether or not the option header of the IPv6 packet is to be encrypted. Practically, for example, it can be selected whether or not the option header is to be encrypted using the C flag set in the above mentioned relay point option. In the system according to the first and second embodiment, the option header is not encrypted. Therefore, the proxy foreign agent 52, the AAAF server 32, and the AAAH server 22 can obtain necessary information (especially DIAMETER message, etc.) for the location registration of the mobile nodes 41 and 51 from the IPv6 packet transferred in the location registration procedure.

### 2. Configuration of each device

### 2.1 Mobile Node, Proxy Foreign Agent, Home Agent, and Communication Node

FIG. 10 is a block diagram of the mobile node, the proxy foreign agent, the home agent, and a communications node. The mobile node, the proxy foreign agent, the home agent, and a communications node have basically the same function block. However, the mobile node 51 according to the second embodiment does not have to be provided with a service control unit or a transfer control unit.

A packet control unit 101 has a filtering function, and classifies packets based on the header of each packet into data packets and protocol packets. The packet control unit 101 edits the packets and transmits them according to the instructions from a service control unit 103 and a transfer control unit 104.

A protocol control unit 102 performs a process based on the mobile IP, an AAA protocol (DIAMETER), and a DHCP (dynamic host configuration protocol). The protocol control unit 102 holds a session transaction for managing an AAA session. An example of the session transaction is shown in FIGS. 11A and 11B. FIG. 11A shows an example of the session transaction held by the mobile node 41 or the proxy foreign agent 52. FIG. 11B shows an example of the session transaction held by the home agent 21.

The service control unit 103 is provided with service profile cache, and holds a service profile extracted from the database (SPDB) 23.

The transfer control unit 104 manages the control information relating to packet transfer. A visitor list is held by the proxy foreign agent 52. As shown in FIG. 12A, the visitor list stores a home address (originally assigned IP address) of a mobile node, a link layer address (for example, a MAC address) of a mobile node, an address of the home agent managing a mobile node, information for authentication of a mobile node, etc.

The mobility binding is held by the home agent 21. As shown in FIG. 12B, the mobility binding stores a home address of a mobile node, an address currently assigned to a mobile node when the mobile node exits its home network, information for authentication of a mobile node, etc.

The binding cache is held by the communications node 42. The configuration of the binding cache is similar to that of the mobility binding. However, the binding cache stores the information for indicating a method of encapsulating a packet as shown in FIG. 12C.

A communications node list is held by a proxy foreign agent, a home agent, or a mobile node. The address of a communications node to which a binding update message has ever been transmitted is registered in the communications node list as shown in FIG. 13A. The address of the communications node registered in the communications node list is deleted after a period prescribed by "lifetime" has passed. In addition, as shown in FIG. 13B, the address of a communications node to which no binding update message is to be transmitted can be registered.

The routing table stores information for indicating the destination of a transferred packet although it is not shown in the attached drawings.

Described below are the basic operations of a mobile node, a proxy foreign agent, a home agent, and a communications node shown in FIG. 10. The operations performed when the devices receive a packet are described below.
(1) The packet control unit 101 extracts IP header information from a received packet.
(2) The packet control unit 101 checks whether the packet is a protocol packet or a data packet according to the destination address of the received packet, the port number, IPv6 option header information, etc.
   Case 1: When a received packet is a protocol packet,
(3) The packet control unit 101 passes control to the protocol control unit 102. The protocol control unit 102 detects what process is to be performed in the mobile IP, the DIAMETER, the DHCP, the ICMP, and DIAMETER-IPv6 option.
(4) When a service profile is distributed by the DIAMETER-IPv6 or the DIAMETER, the service control unit 103 stores the service profile in the service profile cache.
(5) The protocol control unit 102 updates the transfer control unit 104 according to the message set in the received packet.
(6) The packet control unit 101 generates and transmits a message corresponding to the received message as necessary according to the instruction from the transfer control unit 104.
   Case 2: When a received packet is a data packet,
(7) The packet control unit 101 notifies the service control unit 103 of the header information about a received packet.
(8) The service control unit 103 retrieves a service profile corresponding to the notified header information, and notifies the packet control unit 101 of the routing information/packet editing information according to the service profile.
(9) The transfer control unit 104 issues an instruction to the packet control unit 101 by referring to the visitor list, mobility binding, binding cache, a CN list, or a routing table based on the above mentioned service profile.
(10) The packet control unit 101 edits and transmits a packet according to an instruction from the service control unit 103 and the transfer control unit 104.

### 2.2. AAAF and AAAH

FIG. 14 is a block diagram of an AAAF and an AAAH. The AAAF and the AAAH basically have the same configurations.

A packet control unit 111 extracts necessary information from a received protocol packet, and provides it for a protocol control unit 112. The packet control unit 111 edits and transmits a packet to a corresponding destination at an instruction from a service management unit 113.

The protocol control unit 112 supports the DIAMETER and the DIAMETER-IPv6 option. The protocol control unit 112 also holds a session transaction for management of the DIAMETER session.

The service management unit 113 accesses the database (SPDB) 23 according to the header information of the packet received by the packet control unit 111, and extracts a corresponding service profile therefrom. Then, it holds the service profile in the service profile cache. The service management unit 113 issues a packet edit instruction to the packet control unit 111. At this time, the service management unit 113 provides a service profile for the packet control unit 111 as necessary. The AAAH can access the database 23, but the AAAF cannot access the database 23.

FIG. 15 shows an example of a session transaction held by the AAAF server 32. The session transaction of the AAAF server 32 includes a session ID, the address of an AAAH, the address of a home agent, the operation state of an AAAF, etc.

FIG. 16 shows an example of a session transaction held by the AAAH server 22. The session transaction of the AAAH server 22 includes a session ID, the address of a home agent, the address of an AAAF, and the operation of an AAAH, etc.

FIGS. 17A through 17D show the information stored in the database (SPDB) 23 accessed by the AAAH server 22. FIG. 17A shows the configuration of the database 23. The database 23 stores a corresponding service profile using the NAI of a mobile node (or a user) as a key. As the information stored for each mobile node, the SPI of a mobile node, the service class in contract between a service provider and a mobile node user, an actually used service class, etc. are registered.

A service class prescribes, as shown in FIG. 17B, an available value added service, QoS (quality of service), the maximum number of profiles, etc. An available value added service can be, for example, as shown in FIGS. 17C and 17D, Diff-Serv (differentiated service), packet filtering, security service, band control, etc. The Diff-Serv is a service for realizing QoS by setting the priority for each packet. The Diff-Serv is prescribed by the RFC 2474 and the RFC 2475 of the IETF. The packet filtering is a service for filtering a packet based on the IP address of each packet, the port number, etc. The security service is realized by, for example, the IPsec. The band control is a service for realizing the QoS by limiting the band available for each mobile node. FIG. 18 shows a practical example of a band control service. In the band control service, an applicable QoS is prescribed for each service class, and the existence of an available band and band compensation is prescribed for each QoS.

FIG. 19 shows an example of a service profile stored in the service profile cache. The service profile cache (SPC) is provided in the AAAH, the AAAF, the home agent, the proxy foreign agent, the mobile node, and the communications node, and stores a service profile extracted from the database 23. The service profile contains the information for specification of a packet to be filtered, the information for specification of a value added service to be provided, and so on.

### 3. Flowchart of the operations of each device according to the first or second embodiment

### 3.1 Common process

FIGS. 20 and 21 are flowcharts of the operations performed when each device (a mobile node, a proxy foreign agent, an AAAF, an AAAH, a home agent, a communications node) receives a packet.

Upon receipt of a packet, each device checks whether or not the packet is an IPv6 tunnel packet. It is detected whether or not a packet is an IPv6 tunnel packet according to the header information of the packet. If a received packet is an IPv6 tunnel packet, then control is passed to step S2. Otherwise, control is passed to step S6.

In step S2, it is checked whether or not a received packet is addressed to this corresponding apparatus. That is, it is checked whether or not the destination of the received packet is the device which has received the packet. It can be detected based on the destination address stored in the header of the received packet. If the received packet is addressed to this corresponding apparatus, then control is passed to step S3. Otherwise, control is passed to step S12. If the source of the received packet is a communications node in step S12, then the communications node is registered in the communications node list. This process is performed only by the proxy foreign agent 52.

When the source of the received packet is a communications node in step S3, the communications node is registered in the communications node list. This process is performed only by the mobile node 41 according to the first embodiment of the present invention. In step S4, the IPv6 option header of the received packet is analyzed to perform a corresponding process. Steps S3 and S4 are described later in detail.

In step S5, the IPv6 tunnel packet is decapsulated. In step S6, it is checked whether or not the packet obtained in the decapsulating process is addressed to this corresponding apparatus. If the packet obtained in the decapsulating process is addressed to this corresponding apparatus, control is passed to step S21. Otherwise, control is passed to step S7.

If the source of the received packet is a communications node, the communications node is registered in the communications node list. This process is performed only by the home agent 21.

In step S8, it is checked whether or not the relay point option shown in FIG. 64B is set in the option header of the received packet. If the relay point option is set, the type of message stored in the "option" in the relay point option is detected in steps S9 and S10. Practically, for example, the type of message is detected by referring to the command code of the AAA option shown in FIG. 66. Then, in step S11, another predetermined process (relaying process, etc.) is performed as necessary.

In step S21, the type of "Next Header" is checked. That is, the header information to be referred to is specified. If the "IPv6 option header" is referred to, control is passed to step S22 to perform the process relating to the option header shown in FIGS. 64 through 68. If the "UDP header" is referred to, control is passed to step S31. When an area other than the "IPv6 option header" or the "UDP header" is referred to, the other process is performed in step S41. The other process refers to, for example, a process relating to the ICMP (Internet control message protocol).

In step S22, it is checked whether of not the IPsec is being used. If the IPsec is being used, the decoding process and the authenticating process relating to the IPsec are performed in steps S23 and S24. At this time, if the result of the decoding or authenticating process is accepted, it is checked in step S25 whether or not the end point option shown in FIG. 64A is set in the option header of the received packet. If the end point option is set, the option area in the end point option is checked in steps S26 and S27 to detect the type of message. As the type of message, the binding update message, the binding acknowledge message, the binding request message, etc. are contained. The processes in steps S26 and S27 are performed by the mobile node, the home agent, or the communications node. On the other hand, if the end point option is not set, then the process relating to a corresponding option is performed in step S28.

In step S31, a specified protocol is recognized by checking the UDP port number. If the DIAMETER is specified, then the type of message is detected in step S32. If the DHCP is specified, then it is determined in step S33 which is specified, a DHCP request or a DHCP reply. The process in step S33 is performed by a mobile node or a DHCP server. If a protocol other than DIAMETER or DHCP is specified, then a corresponding process is performed in step S34.

### 3.2 Mobile node

FIG. 22 is a flowchart of the operation of the mobile node 41 according to the first embodiment of the present invention. The flowchart shows the operation performed after the mobile node 41 receives a packet.

In step S51, the type of the received packet is checked. If an IPv6 packet is received, then the processes in and after step S52 are performed. When an IPv6 tunnel packet is received, a binding update message is transmitted to the communications node 42 in step S61. If a packet other than an IPv6 packet or an IPv6 tunnel packet is received, a corresponding process is performed in step S62.

In step S52, the type of message stored in the received packet is checked. The type of message is detected by referring to the end point option shown in FIG. 64A in the option header. When an ICMP router advertisement message is received, the processes in and after step S53 are performed. When a binding request message is received, the process in step S61 is performed. When a binding update message is received, the processes in and after step S59 are performed.

In step S53, it is checked whether or not the source address of a received advertisement message has already been registered in an agent list. In this example, an agent list refers to the memory for holding the source address of the message in a case where a router advertisement message periodically broadcast by each router device is received. An example of no registration of a source address of a received advertisement message in the agent list can be the case in which power source has been supplied to the mobile node, or the mobile node has moved from the communications area of a router to the communications area of another router.

When the source device of the advertisement message is not registered in the above mentioned agent list, it is checked in step S54 whether or not the mobile node is provided with a communications node list. In the communications node list, a communications node to which a binding update message is to be transmitted is registered as shown in FIG. 13A.

When a mobile node is provided with a communications node list, a service profile is added in the option header of the IPv6 packet. The service profile is stored in the service profile option shown in FIG. 68A. Then, in step S56, the binding update option shown in FIG. 64C is set in the block diagram option header. Thus, the service profile and the binding update message are stored in the option header of the IPv6 packet. The IPv6 packet is transmitted to each communications node registered in the communications node list.

In step S57, an AAA option is added to the option header. The AAA option is shown in FIG. 66, and an AMR message is set in the AAA option in this example. In the sub-option area of the AAA option, the MN-NAI extension sub-option, the MN-AAA authentication extension sub-option, and the session ID sub-option shown in FIGS. 67A through 67C are stored. Then, in step S58, the binding update message is stored in the above mentioned option header. Thus, the AMR message and the binding update message are stored in the option header of the IPv6 packet. The IPv6 packet is transmitted to the home agent 21.

In step S59, it is checked whether or not an AAA option is set in the option header of the IPv6 packet containing the binding acknowledge message. If the AAA option is set, a service profile stored in the option header is obtained in step S60. The service profile is stored in the service profile cache.

Thus, upon receipt of the router advertisement message, the mobile node 41 according to the first embodiment transmits the AMR message and the binding update message to the home agent 21. At this time, if a communications node list is provided, the mobile node 41 can transmit the service profile and the binding update message to one or more communications nodes registered in the list. Furthermore, upon receipt of the IPv6 tunnel packet, the mobile node 41 transmits the binding update message to the communications node which is the source of the packet. If the mobile node 41 receives the service profile together with the binding acknowledge message, then it stores the service profile in its own service profile cache.

FIG. 23 is a flowchart of the process of registering a communications node in the communications node list in the mobile node 41.

In step S71, it is checked whether or not a received packet is an IPv6 tunnel packet transmitted from the home agent 21. If the packet is the IPv6 packet transmitted from the home agent 21, then the source IP address of the original packet stored in the tunnel packet is checked in step S72.

In step S73, it is checked whether or not the IP address detected in step S72 has been registered in the communications node list. In step S74, it is checked whether or not the IP address detected in step S72 has been registered as the address of the communications node to which the binding update message is not to be transmitted. If the IP address has not been registered in the communications node list, and has not been registered as the address of the communications node to which the binding update message is not to be transmitted, then the IP address is registered in the communications node list in step S75.

Thus, upon receipt of a packet from the communications node not registered in the communications node list, the mobile node 41 registers the IP address of the communications node in the communications node list.

FIG. 24 is a flowchart of the operations of the mobile node 51 according to the second embodiment of the present invention. The processes in this flowchart are the operations performed after the mobile node 51 receives a packet.

The operations of the mobile node 51 are basically the same as those of the mobile node 41 shown in FIG. 22. However, the mobile node 51 requests the communications node 42 to perform a part of the functions of the mobile node 41. Therefore, the mobile node 51 does not perform the processes in steps S54 through S56 shown in 22. Furthermore, the mobile node 51 is not provided with a service profile cache. Therefore, the mobile node 51 does not perform the processes in steps S59 and S60 shown in FIG. 22.

In addition, the mobile node 51 according to the second embodiment is not provided with a communications node list. Therefore, the mobile node 51 does not perform the processes in the flowchart shown in FIG. 23.

### 3.3 Proxy foreign agent

The proxy foreign agent 52 is a function entity provided in the system according to the second embodiment, and is provided with a part of the functions of the mobile node 41 in the first embodiment.

FIG. 25 is a flowchart of the operations of a proxy foreign agent. The flowchart shows the operations performed after the proxy foreign agent 52 receives a packet.

In step S81, the type of message stored in the option header of the received packet is checked. If a binding update message is stored in the received packet, the processes in and after step S82 are performed.. If the received packet stores an AMA message, the process in and after step S101 are performed. If another message is stored, the process corresponding to the message is performed.

In step S82, a session transaction is retrieved using the NAI identifying the source of the binding update message. The session transaction managed by the proxy foreign agent 52 is shown in FIG. 11A. If no session transaction corresponding to the NAI is detected, then a session transaction corresponding to the NAI is newly generated in step S83.

In step S84, it is checked whether or not a home registration bit is set in the option header of the received packet. The home registration bit is provided in the binding update option shown in FIG. 64C. When the home registration bit is set, it is checked in step S85 whether or not an AAA option is set in the option header. Then, in step S86, the remainder of the lifetime of the corresponding session transaction is checked. If an AAA option is set in the option header, and the remainder of the lifetime of the session transaction is 0, then the received binding update message is transmitted to the AAAF server 32 in step S87. At this time, the message is stored in the IPv6 tunnel pack, and is transferred. In addition, the MN-AAA authentication extension sub-option, etc. is set in the AAA option. If no AAA option is set in the option header, or if the lifetime of the session transaction still remains, then the binding update message is transmitted to the home agent 21 in step S88.

In step S89, it is checked whether or not the destination of the binding update message has been registered in the communications, node list. If the destination has been registered in the communications node list, the service profile option shown in FIG. 68A is added to the relay point option of the option header in step S90. The service profile option stores the service profile of the mobile node 51. In step S91, the packet storing the binding update message is transferred to the communications node. That is, if the destination of the binding update message has been registered in the communications node list, then the binding update message and the service profile of the mobile node are transferred to one or more communications nodes registered in the list. If it has not been registered, then the binding update message is transferred, but the service profile of the mobile node is not transferred.

In step S101, it is checked whether or not the service profile option is stored in option header of the IPv6 packet storing the AMA message. If the service profile option is stored, then the service profile stored in the service profile option is obtained in step S102. The obtained service profile is stored in the service profile cache provided in the proxy foreign agent 52. In step S103, the packet storing the AMA message is transferred to the mobile node.

As described above, upon receipt of the binding update message, the proxy foreign agent 52 transfers it to the AAAF server 32, the home agent 21, or the communications node 42. At this time, the packet is transferred to the communications node registered in the communications node list after the service profile of the mobile node 51 is added. Upon receipt of the packet storing the AMA message, the proxy foreign agent 52 extracts the service profile of the mobile node 51 from the packet, and then transfers the packet to the mobile node 51.

FIG. 26 is a flowchart of the process of registering a communications node in the communications node list in the proxy foreign agent 52.

The registering process in the proxy foreign agent 52 is basically the same as the process in mobile node 41 shown in FIG. 23. However, the proxy foreign agent 52 is not provided with the list in which a communications node to which the binding update message is not to be transmitted is registered. Therefore, the process in step S74 shown in FIG. 23 is not performed.

### 3.4 Home agent

The home agent 21 is a function entity for managing the location of the mobile nodes 41 and 51 using the mobility binding table.

FIG. 27 is a flowchart of the operations of a home agent. The flowchart shows the operations performed after the home agent 21 receives a packet.

In step S111, the type of message stored in the option header of the received packet is checked. If a binding update message is stored in the received packet, the processes in and after step S112 are performed. If the binding update message is not stored, another process is performed in step S131.

In step S112, it is checked whether or not the AAA option is stored in the option header of the above mentioned packet. If the AAA option is not stored, the processes in steps S113 through S117 are performed. In steps S113 through S115, a session transaction is searched for using the NAI of the mobile nodes 41 and 51 as a key. If a corresponding session transaction is not detected, it is generated. Then, in step S116, the mobility binding table shown in FIG. 12B is generated. The information to be registered in the mobility binding table is basically extracted from the option header of a received packet. Then, in step S117, an IPv6 packet storing the binding acknowledge message in the option header is generated, and is returned to the mobile node 41 or the proxy foreign agent 52. The binding acknowledge message is stored in the binding acknowledge option shown in FIG. 64E.

When the received packet stores the AAA option, the processes in and after step S121 are performed. In steps S121 and S122, a session transaction is searched for using the NAI of the mobile nodes 41 and 51 as a key. If a corresponding session transaction is not detected, it is generated. Then, in step S123, the mobility binding table is generated.

In step S124, the service profile of a mobile node is extracted from the option header of the received packet, and is stored in the service profile cache provided in the home agent. In step S125, the communications node list is referred to, and a packet storing the binding update message is transmitted to the communications node registered in the list. In step S126, the AAA option containing the HAA message is added to the option header of the packet. Furthermore, in step S127, the binding acknowledge message is added to the option header. The packet having this option header is transferred to the AAAH server 22. Since the destination of the binding acknowledge message is a mobile node, the packet is encapsulated in an IPv6 tunnel packet, and is transmitted to the AAAH server 22.

As described above, upon receipt of the binding update message, the home agent 21 generates a mobility binding table according to the message. Upon receipt of the HAR message together with the binding update message, the home agent 21 returns the HAA message to the AAAH server 22, and transfers the binding update message and the service profile to a predetermined communications node as necessary.

FIG. 28 is a flowchart of the process of registering a communications node in the communications node list in the home agent 21.

In step S141, it is checked whether or not the destination IP address of the received packet has been registered in the mobility binding table. If the destination IP address has been registered in the mobility binding table, it is checked in step S142 whether or not the source IP address of the packet has been registered in the communications node list. If the source IP address has not been registered in the communications node list, then the source IP address is registered in the communications node list in step S143.

Then, in step S144, the service profile held by the home agent is added to the service profile option in the option header of the received packet. Then, in step S145, the packet is transferred to the mobile nodes 41 and 51 by the IPv6 tunnel.

As described above, upon receipt of the packet addressed to a mobile node, the home agent 21 registers the mobile node which has transmitted the packet in the communications node list, and transfers the service profile of the mobile node to the mobile node.

### 3.5 AAAF

FIG. 29 is a flowchart of the operations of the AAAF. The flowchart shows the operation performed after the AAAF server 32 receives a packet.

In step S151, the type of a received packet is checked. If the received packet is an IPv6 tunnel packet, the processes in and after step S152 are performed. Otherwise, a corresponding process is performed in step S171.

In step S152, the type of the message stored in the option header of the received packet is checked. When the binding update message (and the AMR message) is stored in the received packet, the processes in and after step S153 are performed. On the other hand, when the received packet stores the binding acknowledge message (and the AMA message), the processes in and after step S161 are performed.

In steps S153 through S155, a session transaction is searched for using the NAI of the mobile nodes 41 and 51 as a key. Here, the NAI of a mobile node is extracted from the option header of a received packet. If a corresponding session transaction is not detected, it is generated. Then, in step S156, the AAAH for authenticating a mobile node according to the NAI is specified. Then, the binding update message and the AMR message are transferred to the specified AAAH using an IPv6 tunnel packet.

In step S161, the service profile of the mobile node transmitted together with the AMA message is extracted from the option header, and stored in the service profile cache. Then, in step S162, the IPv6 packet containing the binding acknowledge message, the AMA message, and the service profile is transferred to the mobile node 41 or the proxy foreign agent 52. Practically, in the system according to the first embodiment, the IPv6 is transferred to the mobile node 41. In this case, this packet is not encapsulated. In the system according to the second embodiment, the IPv6 packet is encapsulated and transferred to the proxy foreign agent 52.

As described above, upon receipt of the binding update message and the AMR message, the AAAF server 32 transfers them to the AAAH. On the other hand, upon receipt of the binding acknowledge message and the AMA message, the AAAF server 32 transfers them to a proxy foreign agent or a mobile node.

### 3.6 AAAH

FIG. 30 is a flowchart of the operations of the AAAH. The flowchart shows the operation performed after the AAAH server 22 receives a packet.

In step S181, the type of a received packet is checked. If the received packet is an IPv6 tunnel packet, the processes in and after step S182 are performed. If the received packet is not an IPv6 tunnel packet, a corresponding process is performed in step S201.

In step S182, the type of the message stored in the option header of the received packet is checked. When the binding update message (and the AMR message) is stored in the received packet, the processes in and after step S183 are performed. On the other hand, when the received packet stores the binding acknowledge message (and the HAA message), the processes in and after step S191 are performed.

In step S183, according to the NAI of the mobile nodes 41 and 51 stored in the option header of the received packet, a database (SPDB) 23 is accessed to extract a key (an authentication key for the MN-AAA) for authentication of the mobile node. In step S184, the mobile node is authenticated using the key.

When the mobile node is successfully authenticated, a session transaction is searched for in steps S185 and S186. At this time, a corresponding session transaction cannot be detected, it is generated.

In step S187, the database 23 is accessed again according to the NAI of the above mentioned mobile node to extract the service profile of the mobile node. In step S188, the extracted service profile is associated with the above mentioned session transaction. In step S189, the extracted service profile is added to the AAA option in the option header of the received packet. At this time, the HAR message is set in the AAA option. Then, in step S190, the packet is transferred to the home agent 21.

In step S191, the IPv6 tunnel packet containing the binding acknowledge message and the AMA message is transferred to the AAAF server 32. The packet stores the service profile of the mobile node.

As described above, upon receipt of the binding update message, the AAAH server 22 authenticates the mobile node, obtains the service profile of the mobile node, and distributes it to the home agent 21. On the other hand, upon receipt of the binding acknowledge message, the AAAH server 22 transfers it to the AAAF server 32.

### 3.7 Communications node

FIG. 31 is a flowchart of the operations of a communications node. The flowchart shows the operations performed after the communications node 42 receives a packet.

In step S211, the type of the message stored in the received packet is checked. If the received packet stores the binding update message, the processes in steps S212 through S218 are performed. In steps S212 through S214, a session transaction is searched for according to the NAI of the mobile node. If a corresponding session transaction is not detected, it is generated.

In step S215, the address, etc. of the mobile node is extracted from the option header of the received packet, and the binding cache shown in FIG. 12C is generated or updated. In step S216, the service profile of the mobile node is extracted from the option header, and is stored in the service profile cache. In step S217, it is checked whether or not the "A bit" of the binding update option shown in FIG. 64C is set. If the "A bit" is set, the binding acknowledge message is generated in step S218, and is returned to the source of the binding update message. The binding acknowledge message is stored in, for example, the end point option in the option header of the IPv6 packet.

As described above, upon receipt of the binding update message, the communications node 42 generates binding cache for management of the location of the mobile node, and obtains the service profile of the mobile node. The communications node returns the binding acknowledge message to the mobile node as necessary.

### 4. Explanation of the sequence of the system according to the first and second embodiments

### 4.1 Location registration sequence in the system according to the first embodiment

This sequence is executed immediately after electric power is applied to the mobile node 41, or when the mobile node 41 moves from the communications area of a router device to the communications area of another router device. The location registration sequence of the mobile node 41 is described below by referring to FIG. 32.
(1) Upon receipt of the ICMPv6 router advertisement message from the router device 31, the mobile node 41 performs the processes in steps S53 through S58 in the flowchart shown in FIG. 22. That is, the mobile node 41 generates an IPv6 packet to transmit the binding update message to the home agent 21. The binding update message is stored in the option header of the IPv6 packet. The option header is assigned the AAA option containing the AMR message.
   The mobile node 41 transmits the packet to the home agent 21. However, since the packet contains the message of requesting the AAA process, it has to be transferred to the AAA server. Therefore, the packet is encapsulated for transfer to the AAAF server 32, and is transmitted as an IPv6 packet.
   In this sequence, it is assumed that the communications node list is not provided for the mobile node 41. That is, it is assumed that the processes in steps S55 and S56 in the flowchart shown in FIG. 22 are not performed.
(2) Upon receipt of the IPv6 packet containing the binding update message, the router device 31 transfers it to the AAAF server 32.
(3) Upon receipt of the IPv6 tunnel packet containing the binding update message, the processes in steps S153 through S156 in flowchart shown in FIG. 29 are performed. That is, the AAAF server 32 specifies the AAAH corresponding to the mobile node 41 according to the NAI of the mobile node 41 set in the option header of the received packet. Then, the received packet is transferred to the specified AAAH.
(4) Upon receipt of the IPv6 tunnel packet containing the binding update message, the AAAH server 22 performs the processes in steps S183 through S190 of the flowchart shown in FIG. 30. That is, after the AAAH server 22 authenticates the mobile node 41, it extracts the service profile of the mobile node 41 from the database 23. Then, with the binding update message, the extracted service profile is transferred to the home agent 21. At this time, the AMR message is replaced with the HAR message.
(5) Upon receipt of the IPv6 packet containing the binding update message and the HAR message, the home agent 21 performs the processes in steps S121 through S125 in the flowchart shown in FIG. 27. That is, the home agent 21 generates and updates the mobility binding table according to the binding update message, and obtains the service profile of the mobile node 41 transmitted from the AAAH server 22. Then, the home agent 21 transmits the binding update message and the service profile of the mobile node 41 to one or more communications nodes registered in the communications node list.
(6) Upon receipt of the IPv6 packet containing the binding update message, the communications node 42 performs the processes in steps S212 through S218 of the flowchart shown in FIG. 31. That is, the communications node 42 generates and updates binding cache according to the binding update message, and obtains the service profile of the mobile node 41 transmitted from the AAAH server 22.
(7) After transmitting the binding update message to the communications node 42, the home agent 21 performs the processes in steps S126 and S127 shown in FIG. 27. That is, the home agent 21 generates an IPv6 packet to return the binding acknowledge message to the mobile node 41. The binding acknowledge message is stored in the option header of the packet. The AAA option containing the HAA message and the service profile option containing the service profile of the mobile node 41 are added to the option header.
   The home agent 21 encapsulates the packet to transfer the IPv6 packet to the AAA server. The IPv6 tunnel packet obtained by the encapsulation is transmitted to the AAAH server 22.
(8) Upon receipt of the IPv6 tunnel packet containing the binding acknowledge message, the AAAH server 22 performs the process in step S191 of the flowchart shown in FIG. 30. That is, the AAAH server 22 transfers the received IPv6 tunnel packet to the AAAF server 32. At this time, the option header of the packet stores the AAA option containing the AMA message, the service profile option containing the service profile of the mobile node 41, and the MN-AAA authentication extension sub-option indicating the authentication result about the mobile node 41.
(8) Upon receipt of the IPv6 tunnel packet containing the binding acknowledge message, the AAAF server 32 the processes in steps S161 and S162 of the flowchart shown in FIG. 29. That is, the AAAF server 32 decapsulates the received packet, and transfers it to the mobile node 41.
(10) Upon receipt of the IPv6 packet containing the binding acknowledge message, the router device 31 transfers it to the mobile node 41.
(11) Upon receipt of the IPv6 packet containing the binding acknowledge message, the mobile node 41 performs the processes in steps S59 and S60 of the flowchart shown in FIG. 22. That is, the mobile node 41 obtains the service profile stored in the option header of the received packet.

As described above, in the system according to the first embodiment, the service profile of the mobile node in the location registration sequence is distributed to a predetermined communications appliance. In this sequence, the messages of the AAA protocol and the MIP are stored in the option header of an IPv6 packet, and are then transferred. At this time, the option header is not encrypted. Therefore, the mobile node can be authenticated and registered for location while supporting the IPsec, and can distribute the service profile to the mobile node 41 and the communications node 42.

### 4.2 location Registration Sequence in system according to second embodiment

This sequence is executed immediately after electric power is applied to the mobile node 51, or when the mobile node 51 moves from the communications area of a proxy foreign agent to the communications area of another proxy foreign agent. The location registration sequence of the mobile node 51 is described below by referring to FIG. 33.
(1) Upon receipt of the ICMPv6 router advertisement message from the proxy foreign agent 52, the mobile node 51 performs the processes in steps S57 and S58 in the flowchart shown in FIG. 24. In this case, the mobile node 51 generates an IPv6 packet to transmit the binding update message to the home agent 21. The binding update message is stored in the option header of the packet. The option header is assigned the AAA option containing the AMR message. In the system according to the second embodiment, the above mentioned packet is output to a network without being encapsulated, and is transmitted to the proxy foreign agent 52 accommodating the mobile node 51.
(2) Upon receipt of the IPv6 packet containing the binding update message, the proxy foreign agent 52 performs the processes in step S82 through S87 of the flowchart shown in FIG. 25. That is, the proxy foreign agent 52 encapsulates the above mentioned packet so that it can be transferred to the AAA server. The IPv6 tunnel packet obtained by the capsulation is transferred to the AAAF server 32.
(3) through (8) The processes are the same as those in the sequence according to the first embodiment described by referring to FIG. 32.
(9) Upon receipt of the IPv6 tunnel packet containing the binding acknowledge message, the AAAF server 32 performs the processes in steps S161 and S162 of the flowchart shown in FIG. 29. That is, the AAAF server 32 transfers the received packet to the proxy foreign agent 52.
(10) Upon receipt of the IPv6 tunnel packet containing the binding acknowledge message, the proxy foreign agent 52 performs the processes in steps S101 and S103 of the flowchart shown in FIG. 25. That is, the proxy foreign agent 52 obtains the service profile of the mobile node 51 from the option header of the received packet, and stores it in the service profile cache. Then, it transfers the IPv6 packet containing the binding acknowledge message to the mobile node 51.
(11) The mobile node 51 receives the binding acknowledge message, thereby terminating the location registration sequence.

As described above, the system according to the second embodiment is basically the same as the system according to the first embodiment. However, the service profile of a mobile node is not distributed to the mobile node, but to a proxy foreign agent. Then, the proxy foreign agent provides a communications service based on the service profile. Therefore, the configuration of the mobile node can be simpler than in the system according to the first embodiment.

### 4.3 Setting binding cache of communications node (when a communications node list is provided in a home agent)

The sequence is executed when a data packet is transferred to the mobile nodes 41 and 51 from the communications node 42. The sequence is described below by referring to 34.
(1) The communications node 42 transmits a data packet (IPv6 packet) to the mobile nodes 41 and 51. At this time, it is assumed that the communications node 42 does not have binding cache for the mobile nodes 41 and 51. In this case, the communications node 42 transmits the above mentioned data packet to the home addresses of the mobile nodes 41 and 51. Therefore, the data packet is first transmitted to the home agent 21.
(2) Upon receipt of the data packet addressed to the mobile nodes 41 and 51, the home agent 21 performs the processes in steps S7 through S10 of the flowchart shown in FIG. 20. That is, the home agent 21 registers the communications node 42 in the communications node list. As shown in FIG. 28, the procedure of registering a communications node in the home agent 21 includes the process of adding the service profile of the mobile nodes 41 and 51 to the option header of a packet, and the process of transferring the packet to the mobile nodes 41 and 51. As a result, an IPv6 tunnel packet obtained by adding the service profile of the mobile nodes 41 and 51 to the option header of the data packet is transferred from the home agent 21 to the mobile nodes 41 and 51.
(3) The above mentioned IPv6 tunnel packet is transmitted to the router device 31 accommodating the mobile node 41 or the proxy foreign agent 52. Then, the router device 31 or the proxy foreign agent 52 transfers the packet to the mobile node 41.
(4) Upon receipt of the IPv6 tunnel packet from the home agent 21, the mobile nodes 41 and 51 perform the processes in steps S3 through S5 of the flowchart shown in FIG. 20. It is assumed that no communications node list is provided in the mobile nodes 41 and 51. Therefore, the mobile nodes 41 and 51 perform the process in step S4 by skipping the process in step S3. The practical process in step S4 is shown in FIG. 22 or 24. That is, upon receipt of the IPv6 tunnel packet, the mobile nodes 41 and 51 transmit the binding update message to the communications node 42 in step S61. The binding update message is stored in the option header of the IPv6 packet addressed to the communications node. At this time, the option header of the IPv6 packet also stores the service profile of the mobile nodes 41 and 51 transmitted from the home agent 21.
(5) Upon receipt of the IPv6 packet addressed to the communications node 42 containing the binding update message, the router device 31 or the proxy foreign agent 52 transmits it to the router device accommodating the communications node 42. In the system according to the second embodiment, the process in step S91 shown in FIG. 25 corresponds to the above mentioned process.
(6) The router device accommodating the communications node 42 receives the packet and transfers it to the communications node 42.
(7) Upon receipt of the IPv6 packet containing the binding update message, the communications node 42 performs the processes in steps S212 through S218 of the flowchart shown in FIG. 31. That is, the communications node 42 generates or updates binding cache according to the binding update message, and obtains the service profile of the mobile nodes 41 and 51 from the option header. Furthermore, it generates an IPv6 packet containing the binding acknowledge message, and returns it to the mobile nodes 41 and 51. At this time, the packet is transmitted to the address obtained according to the binding update message.
(8) The packet containing the binding acknowledge message is transmitted to the router device 31 or the proxy foreign agent 52.
(9) The router device 31 or the proxy foreign agent 52 transfers the received packet to the mobile nodes 41 and 51.

Thus, according to the above mentioned sequence, a communications node which transmits a packet to a mobile node can recognize the location of the mobile node (currently assigned address) by receiving a binding update message from the mobile node. At this time, the service profile of the mobile node is distributed to the communications node. Therefore, a value added service prescribed by a service profile is provided not only for the communications from the mobile node to the communications node, but also for the communications from the communications node to the mobile node.

### 4.4 Setting binding cache of communications node (when a communications node list is provided for a mobile node)

The sequence shown in FIG. 34 is based on that a communications node list is provided for the home agent 21. On the other hand, this sequence is based on that a communications node list is provided for the mobile node 41 of the system according to the first embodiment, and is described below by referring to FIG. 35.
(1) The communications node 42 transmits a data packet to the mobile node 41. At this time, it is assumed that the communications node 42 does not have binding cache for the mobile node 41. The communications node 42 transmits the above mentioned data packet to the home address of the mobile node 41. Therefore, the data packet is first transmitted to the home agent 21.
(2) Upon receipt of the data packet addressed to the mobile node 41, the home agent 21 performs the processes in steps S7 through S10 of the flowchart shown in FIG. 20. However, the home agent 21 is not provided with a communications node list. In this example, it is assumed that the home agent 21 does not transmit a service profile of the mobile node 41. Therefore, the home agent 21 performs only the processes in step S145 shown in FIG. 28. That is, the home agent 21 transfers the packet received from the communications node 42 to the mobile node 41. At this time, the transferred packet is an IPv6 tunnel packet.
(3) The above mentioned IPv6 tunnel packet is transmitted to the router device 31 accommodating the mobile node 41. The router device 31 transfers the packet to the mobile node 41.
(4) Upon receipt of the IPv6 tunnel packet transmitted from the home agent 21, the mobile node 41 performs the processes in steps S3 through S5 shown in FIG. 20. That is, the mobile node 41 first registers the communications node 42 which is the source of the data packet in the communications node list. Then, the mobile node 41 transmits the binding update message to the communications node 42 by performing the processes in step S61 shown in FIG. 22. The binding update message is stored in the option header of the IPv6 packet addressed to the communications node. At this time, the option header of the IPv6 packet also stores the service profile of the mobile node 41 stored in the service profile cache of the mobile node 41.
(5) through (9) The processes are the same as those described above by referring to FIG. 34.

As described above, in the sequence shown in FIG. 35, the service profile stored in the service profile of the mobile node 41 is transmitted together with the binding update message to the communications node.

### 4.5 Setting binding cache of communications node (when a communications node list is provided for a proxy foreign agent)

The sequence shown in FIGS. 34 and 35 is based on that a communications node list is provided for the home agent 21 and the mobile node 41, respectively. On the other hand, this sequence is based on that a communications node list is provided for the proxy foreign agent 52 in the system according to the second embodiment, and described below by referring to FIG. 36.
(1) and (2) refer to the processes the same as the processes described above by referring to FIG. 35.
(3) The IPv6 tunnel packet from the home agent 21 is transmitted to the proxy foreign agent 52 accommodating the mobile node 51. Upon receipt of the IPv6 tunnel packet, the proxy foreign agent 52 performs the processes in steps S12 and S11 of the flowchart shown in FIG. 20. That is, the proxy foreign agent 52 registers the communications node 42 which is the source of the data packet in the communications node list. Then, the IPv6 tunnel packet is transferred to the mobile node 51.
(4) Upon receipt of the packet, the mobile node 51 performs the process in step S61 of the flowchart shown in FIG. 24. That is, it generates an IPv6 packet containing a binding update message, and transmits it to the communications node 42.
(5) Upon receipt of the IPv6 packet containing the binding update message, the proxy foreign agent 52 performs the processes in steps S89 through S91 of the flowchart shown in FIG. 25. That is, the proxy foreign agent 52 first stores the service profile of the mobile node 51 in the option header of the IPv6 packet received from the mobile node 51. The service profile is held in the service profile cache of the proxy foreign agent 52. Then, the proxy foreign agent 52 transfers the IPv6 packet containing the binding update message and the service profile of the mobile node 51 to the communications node 42.
(6) through (9) refer to the processes the same as those described above by referring to FIG. 34.

As described above, in the sequence shown in FIG. 36, the service profile stored in the service profile cache of the proxy foreign agent 52 is transmitted to the communications node together with the binding update message.

### 5. Outline of the third and fourth embodiments

FIG. 37 shows the configuration of the network of the communications service providing system according to the third and fourth embodiments of the present invention. The system according to the third and fourth embodiments is designed based on the system according to the first and second embodiments, respectively.

In the system according to the third and fourth embodiments, one or more DHCP servers are provided in an external network. The DHCP server is an address server for managing the address to be assigned to a terminal in a local domain. That is, the mobile nodes 61 and 71 access the DHCP server 63 and obtain an address when a power switch is turn ON, or when they are moved from the communications area of a router device to the communications area of another router device.

FIG. 38 shows the configuration of the main devices of the communications service providing system according to the third embodiment. The home agent 21, the AAAH server 22, the AAAF server 32, and the communications node 42 are basically the same as the systems according to the first or second embodiment.

The mobile node 61 is provided with the DHCP client function in addition to corresponding function provided in the mobile node 41 used according to the first embodiment. In this example, the "DHCP client" requests the DHCP server 63 to transmit the address temporarily used by the mobile node 61. The router device 62 accommodates the DHCP server 63. The DHCP server 63 is provided with a packet control unit and a protocol control unit. In addition, the protocol control unit has the DIAMETER client function (DCF) and the DHCP server function. The "DHCP server" assigns an address to the terminal at the DHCP request from the terminal (including the mobile node 61).

FIG. 39 shows the configuration of the main devices of the communications service providing system according to the fourth embodiment of the present invention. The system according to the fourth embodiment has a smaller number of functions provided for a mobile node than the system according to the third embodiment. That is, the mobile node 71 is not provided with a service control unit, service profile cache, and a DIAMETER client function (DCF). These functions are provided for the proxy foreign agent 72.

In the systems according to the third and fourth embodiments, the mobile nodes 61 and 71 are authenticated in the AAAH server 22 when the mobile nodes 61 and 71 request the DHCP server 63 to transmit an address. In the authentication procedure, the service profiles of the mobile nodes 61 and 71 are distributed to a predetermined communications appliance (including the mobile node 61). At this time, each type of information (including a DHCP request message) is stored in an IPv6 packet and transmitted. Described below is the configuration of the packet used in the system according to third and fourth embodiments.

FIG. 70 shows the format of the IP packet stored in the DHCP message. The IPv6 packet comprises an IP header and an IP payload as described above, and a UDP packet is stored in the IP payload. The UDP packet comprises a UDP header and a UDP payload. The DHCP message is stored in the UDP payload. The DHCP message comprises a DHCP header and a DHCP payload.

FIGS. 71A through 71C show the format of the information relating to a DHCP request. FIG. 71A shows the format of a DHCP request message. A transaction ID and various addresses are set in a DHCP request message. The message is stored in the DHCP header.

FIG. 71B shows the format of the MN-NAI extension. The NAI of a mobile node is set in this extension area. FIG. 71C shows the format of the MN-AAA extension. Data (AAA data) relating to an AAA protocol is stored in this extension area. In this embodiment, the AAA protocol is DIAMETER. The extension data is stored in a DHCP payload.

FIGS. 72A through 72C show the format of the information relating to a DHCP reply. FIG. 72A shows the format of a DHCP reply message. A status, a transaction ID, a client address, etc. are set in the DHCP reply message. The status indicates the result of the DHCP request, etc. The message is stored in the DHCP header.

FIG. 72B shows the format of the MN-AAA extension. Data (AAA data) relating to an AAA protocol is stored in this extension area. The extension data is stored in the DHCP payload. FIG. 72C shows the format of the service profile cache extension stored in the DHCP reply message. The data field of this extension area stores the service profile of the mobile node extracted from the database 23. The service profile cache extension is stored in the AAA data area of the MN-AAA extension shown in FIG. 72B.

FIG. 73 shows the format of the IPv6 packet storing the information about the DIAMETER according to the third and fourth embodiments. The information about the DIAMETER is stored in the option header of the IPv6 packet according to the first and second embodiments, but in the UDP payload according to the third and fourth embodiments. The information about the DIAMETER comprises a DIAMETER common header and an AVP (attribute value pair) group.

FIG. 74 shows the format of the UDP header. A port number, a data length, etc. are set in the UDP header.

FIG. 75 shows the format of the DIAMETER common header. An identifier, etc. for one-to-one correspondence between a registration request message and a registration reply message is set in the DIAMETER common header.

FIGS. 76A through 76C show the format of the AVP group. FIG. 76A shows the basic format of the AVP. If the AVP code = 256 is set in this format, it refers to a command (or a message). FIG. 76B shows the format of the DIAMETER command AVP. In this format, the type of message (AMR, AMA, HAR, HAA, etc.) is identified. FIG. 76C shows a typical format of the AVP other than a command. The service profile of the mobile node extracted from the database 23 can be stored in the data area of the AVP group.

FIGS. 77A through 77D show the format of the DIAMETER message used in the system according to the third and fourth embodiments.

FIG. 77A shows the format of the AMR message including a DHCP request. This message is obtained by adding the DHCP request AVP and the service profile cache AVP to a common AMR message. FIG. 77B shows the format of the AMA message including a DHCP reply. The message can be obtained by adding the DHCP reply AVP and the service profile cache AVP to a common AMA message.

FIG. 77C shows the format of an FDR (FA DHCP request) message. An FDR message notifies the proxy foreign agent 72 of the DHCP request from the DHCP server 63, and comprises a DIAMETER header, an FA-DHCP request command, a session ID, a user name, a DHCP request, and a time stamp. FIG. 77D shows the format of an FDA (FA DHCP answer) message. An FDA message notifies the DHCP server 63 of the DHCP reply from the proxy foreign agent 72, and comprises a DIAMETER header, and an FA-DHCP reply command, a session ID, a result code, and a time stamp. The formats of the FDR message and the FDA message are based on the DIAMETER.

FIGS. 78A through 78C show the format of the service profile cache AVP. This AVP is stored in the AMR message shown in FIG. 77A, and the AMA message shown in FIG. 77B.

FIG. 78A shows the basic format of the service profile cache AVP stored in the AMR message or the AMA message. FIG. 78B shows the header of the profile data area of the service profile cache AVP. The service profile is managed by the session ID (NAI of a mobile node) set in the header. FIG. 78C shows an example of a service profile stored as the profile data of the service profile cache AVP.

### 6. Flowchart of the operations of each device in the third or fourth embodiment

In the system according to the third or fourth embodiment, in the AAA process started according to the DHCP request, a message relating to an AAA protocol is basically stored in the payload of a UDP packet. If a service profile of a mobile node is distributed in this AAA process, the service profile is also stored in the UDP packet. On the other hand, when the location of a mobile node is registered in a home agent or a communications node after the above mentioned AAA process, the message used in the location registering process is basically stored in the option header of the IPv6 packet. When a service profile of a mobile node is distributed in this location registering process, the service profile is also stored in the option header of the IPv6 packet.

### 6.1 Mobile node

FIG. 40 is a flowchart of the operation of a mobile node according to the third embodiment. The flowchart shows the operation performed after the mobile node 61 has received a packet.

In step S301, the type of a received packet is checked. If the received packet is an IPv6 tunnel packet, the processes in and after step S302 are performed. If the received packet is an IPv6 packet, the processes in and after step S311 are performed. If the received packet is not an IPv6 tunnel packet or an IPv6 packet, a corresponding process is performed in step S321.

In step S302, it is checked whether or not a service profile is stored in the service profile cache provided in the mobile node 61. If such a service profile exists, the above mentioned service profile is stored in the end point option in the option header of the IPv6 packet in step S303. In step S304, the binding update message is stored in the option header. Then, the IPv6 packet with the option header is transmitted to the communications node 42.

In step S311, the type of message stored in the received packet is checked. If the binding request message is received, control is passed to step S302. If the ICMP router advertisement message is received, control is passed to step S312. If the DHCP reply message is received, control is passed to step S314.

In step S312, it is checked whether of not the source address of the received advertisement message has been registered in the agent list. The agent list is described above in relation to step S53 shown in FIG. 22. If the source address of the received advertisement message has not been registered in the agent list, the DHCP message is transmitted to the DHCP server 63 in step S313. The DHCP request message is stored in the IPv6 packet and transferred as described above by referring to FIGS. 70 and 71.

In step S314, the service profile transmitted together with the DHCP reply message is obtained. The service profile is stored in the service profile cache provided in a mobile node. In step S315, the above mentioned service profile is stored in the end point option in the option header of the IP packet. In step S316, the binding update message is stored in the option header. Then, the IPv6 packet with that option header is transmitted to the home agent 21.

FIG. 41 is a flowchart of the operations of a mobile node according to the fourth embodiment. The operations of the mobile node 71 according to the fourth embodiment is basically the same as the operations of the mobile node 61 according to the third embodiment shown in FIG. 40. However, the mobile node 71 according to the fourth embodiment is not provided with a service profile cache. Therefore, the process of obtaining a service profile from a received packet, and the process of distributing a service profile to a home agent or a communications node are not performed. That is, the mobile node 71 does not perform the processes in step S302, S303, S314, and S315 of the flowchart shown in FIG. 40.

As described above, upon receipt of the IPv6 tunnel packet from the communications node 42, the mobile node in the system according to the third and fourth embodiments transmits the binding update message to the communications node 42. In addition, upon receipt of the router advertisement message, it transmits the DHCP request message to the DHCP server 63. Furthermore, upon receipt of the DHCP reply message, it transmits the binding update message to the home agent 21. According to the third embodiment, the service profile of the mobile node is distributed to the home agent and the communications node.

### 6.2 Proxy foreign agent

FIGS. 42 and 43 are flowcharts of the operations of the proxy foreign agent. This flowchart shows the operations performed after the proxy foreign agent 72 receives a packet. The proxy foreign agent 72 is provided in the system according to the fourth embodiment.

In steps S341 and S342, a received packet is filtered using a source address and a destination address. If the source of the received packet is a predetermined DHCP server 63 or a target mobile node, then the processes in and after step S343 are performed. If the destination of the received packet is the proxy foreign agent 72, then the processes in and after step S361 are performed. If the above mentioned two cases are not applied, a received packet is processed and transferred according to the service profile provided for the proxy foreign agent 72 in steps S351 and S352.

In step S343, the type of the message stored in the received packet is checked. If the binding update message is received, the processes in and after step S344 are performed. If the AMR message is received, the processes in and after step S347 are performed. If the above mentioned two messages are not received, then the received packet is transferred according to the destination address in step S350.

In step S344, a session transaction is retrieved using the IP address of the mobile node 71. Thus, the service profile of the mobile node 71 is extracted. Then, in step S345, the service profile extracted in step S344 is added to the relay point option in the option header of the IPv6 packet. In step S346, the binding update message is added to the option header. Then, the IPv6 packet with that option header is transferred to the destination (home agent 21 or communications node 42).

In steps S347 and S348, the session transaction is searched for using the user NAI of the mobile node 71. When a corresponding session transaction is not detected, it is generated. Then, in step S349, a received packet containing the AMR message is transferred to the AAAF server 32.

In step S361, the type of the message stored in the received packet is checked. If the AMA message is received, the processes in and after step S362 are performed. If the FDR message is received, the processes in and after step S364 are performed. If the AMA message or the FDR message is not received, then a corresponding process is performed in step S371.

In step S362, a service profile transmitted together with the AMA message is obtained. The service profile is stored in the service profile cache provided for the proxy foreign agent 72.

The process in step S363 depends on whether the system uses the FDR and the FDA. That is to say, in the system which does not use the FDR and the FDA, the packet containing the AMR message is transferred to the DHCP server 63 in step S363. On the other hand, in the system using the FDR and the FDA, the FDA message is generated in step S363, and the FDA message is transmitted to the DHCP server 63 instead of the AMA message. The format of the FDA message is shown in FIG. 77D.

In steps S364 through S366, the session transaction is searched for using the user NAI of the mobile node 71. If a corresponding session transaction is not detected, it is generated. Then, an AMR message is generated and transmitted to the AAAF server 32 in step S367. The AMR message is set using the AVP shown in FIG. 76.

As described above, upon receipt of the binding update message, the proxy foreign agent 72 transmits the message together with the service profile of the mobile node 71 to the home agent 21 or the communications node 42. Upon receipt of the AMR message, it transfers the received message to the AAAF server 32. Upon receipt of the AMA message, it transfers the message to the DHCP server 63. Upon receipt of the FDR message, it transmits the AMR message to the AAAF server 32.

### 6.3 DHCP server

FIG. 44 is a flowchart of the operations of the DHCP server. The flowchart shows the operation performed after the DHCP server 63 receives a packet. In this example, the FDR message and the FDA message are not used.

In step S371, the type of the message stored in the received packet is checked. When the AMA message is received, the DHCP reply message is generated and transmitted to the mobile nodes 61 and 71 in step S372. The DHCP reply message is stored in the IPv6 packet and transferred as shown in FIGS. 70 and 72.

When the DHCP request message is received, the processes in steps S373 through 375 are performed. In steps S373 and S374, the session transaction is searched for using the user NAI of the mobile node. Then, a corresponding session transaction is not detected, it is generated. Then, in step S375, the AMR message is generated and transmitted to the AAAF server 32.

If the AMA message or the DHCP request message has not been received, a corresponding process is performed in step S381.

As described above, upon receipt of the AMA message, the DHCP server 63 transmits the DHCP reply message to the mobile nodes 61 and 71. Upon receipt of the DHCP request message, it transmits the AMR message to the AAAF server 32.

FIG. 45 is a flowchart of the operations of the DHCP server when the FDR message and the FDA message are used.

In the system in which the FDR message and the FDA message are used, the DHCP server 63 transmits the DHCP reply to the mobile nodes 61 and 71 when the FDA message is received (step S391). In addition, upon receipt of the DHCP request message, the DHCP server 63 transmits the FDR message to the AAAF server 32 (step S392).

### 6.4 Home agent

FIG. 46 is a flowchart of the operations of a home agent. The flowchart shows the operations performed after the home agent 21 receives a packet.

In step S401, the type of the message stored in the received packet is checked. When the binding update message is received, the processes in and after step S402 are performed. Otherwise, a corresponding process is performed in step S421.

In steps S402 through S404, the session transaction is searched for using the user NAI of the mobile node. If a corresponding session transaction is not detected, it is generated. Afterwards, the process relating to the information stored in the option header of the received IPv6 packet is performed.

In step S405, the type of the option stored in the option header is checked. If the end point option is stored, then the processes in steps S411 through S417 (excluding steps S414 and S415) are performed. If the relay point option is stored, the processes in steps S414 through S417 are performed. In the case other than the above mentioned two cases, a corresponding process is performed in step S418.

In step S411, the mobile nodes 61 and 71 are registered based on the binding update option stored in the end point option, thereby generating or updating the mobility binding table. In steps S412 and S413, the service profiles of the mobile nodes 61 and 71 are extracted from the service profile option in the end point option. On the other hand, in steps S414 and S415, the service profiles of the mobile nodes 61 and 71 are extracted from the service profile option in the relay point option.

In step S416, it is checked whether or not the A-bit of the binding update option shown in FIG. 64C is set. If the A bit is set, the IPv6 packet containing the binding acknowledge message is generated, and transmitted to the mobile nodes 61 and 71 in step S417.

As described above, upon receipt of the binding update message, the home agent 21 obtains the service profile transmitted together with the message, and returns the binding acknowledge message to the mobile node.

### 6.5 AAAF

FIG. 47 is a flowchart of the operations of the AAAF. The flowchart shows the operations performed after the AAAF server 32 receives a packet.

The operations of the AAAF server 32 in the system according to the third or fourth embodiment are basically the same as those according to the first or second embodiment. However, in the system according to the third or fourth embodiment, the AAAF server 32 does not receive the binding update message or the binding acknowledge message.

In step S43, the type of the message stored in the received packet is checked. When the AMR message is received, the processes in and after step S432 are performed. When the AMA message is received, the processes in steps S436 and S437 are performed. When the AMR message or the AMA message is not received, a corresponding process is performed in step S441.

In steps S432 through S434, a session transaction is searched for using the user NAI of the mobile node. If a corresponding session transaction is not detected, it is generated. In step S435, the AAAH of the mobile node is specified based on the user NAI of the mobile node. Then, the packet containing the AMR message is transferred to the specified AAAH.

In step S436, the service profile of the mobile node transmitted together with the AMA message is obtained, and it held as being associated with the session transaction. In step S437, based on the session, the packet containing the AMA message is transferred to the proxy foreign agent 72 or the DHCP server 63. Thus, the service profile of the mobile node is distributed to the proxy foreign agent 52 or the DHCP server 63.

As described above, upon receipt of the AMR message, the AAAF server 32 transfers it to the AAAH server 22. Upon receipt of the AMA message (and the service profile of the mobile node), it is transferred to the proxy foreign agent 52 or the DHCP server 63.

### 6.6 AAAH

FIG. 48 is a flowchart of the operations of the AAAH. This flowchart shows the operations performed after the AAAH server 22 receives a packet.

The operations of the AAAH server 22 in the system according to the third or fourth embodiment are basically the same as those according to the first or second embodiment. However, in the system according to the third or fourth embodiment, the AAAH server 22 does not receive the binding update message and the binding acknowledge message.

In step S451, the type of the message stored in the received packet is checked. If the AMR message is received, the processes in and after step S452 are performed. Otherwise, a corresponding process is performed in step S461.

In steps S452 and S453, the mobile node is authenticated. In steps S454 and S455, a session transaction is searched for. In step S456, a service profile corresponding to the mobile node is extracted. In step S457, the service profile extracted in step S456 is held as being associated with the session transaction. Then, in step S458, a packet containing the AMA message and the extracted service profile is transmitted to the AAAF server 32.

When the mobile node cannot be successfully authenticated, the AMA message containing an error code is transmitted to the AAAF server 32.

As described above, upon receipt of the AMR message, the AAAH server 22 first authenticates the mobile node, and then returns the AMA message to the AAAF server 32. At this time, the service profile of the mobile node is transmitted together with the AMA message to the AAAF server 32.

### 6.7 Communications node

FIG. 49 is a flowchart of the operations of the communications node. The flowchart shows the operations performed after the communications node 42 receives a packet.

The operations of the communications node 42 are basically the same as the operations of the home agent 21 shown in FIG. 46. However, the home agent 21 performs a home registering process when it receives a binding update message (step S412), while the communications node 42 generates or updates binding cache when it receives a binding update message (step S471).

### 7. Explanation of the sequence of the third and fourth embodiments

### 7.1. Sequence of distributing a service profile in the system according to the third embodiment

This sequence is performed immediately after electric power is applied to the mobile node 61, or when the mobile node 61 moves from the communications area of a router device to the communications area of another router device. The DHCP-AAA cooperation started by a DHCP request is described below by referring to FIG. 50.
(1) The router device 102 transmits an ICMP router advertisement message.
(2) Upon receipt of the advertisement message, the mobile node 61 performs the processes in steps S312 and S313 of the flowchart shown in FIG. 42. That is, the mobile node 61 transmits a DHCP request message to the DHCP server 63 to inquire about the address. The DHCP server 63 is the nearest DHCP server. The DHCP request message has the format shown in FIG. 71, and is stored in a UDP packet. The UDP packet is stored in the payload of the IPv6 packet.
(3) Upon receipt of a packet containing a DHCP request message, the DHCP server 63 performs the processes in steps S373 through S375 of the flowchart shown in FIG. 44 to request the AAA process. That is, the DHCP server 63 generates an AMR message containing the DHCP request message, and transmits it to the AAAF server 32. The AMR message containing the DHCP request message has the format shown in FIG. 77A, and is stored in the UDP packet.
(4) Upon receipt of the AMR message, the AAAF server 32 performs the processes in steps S432 through S435 of the flowchart shown in FIG. 47. That is, the AAAF server 32 extracts the NAI of the mobile node 61 from the received packet, specifies the AAAH server 22 for performing the AAA process for the mobile node 61 based on the NAI, and then transfers the packet containing the AMR message to the AAAH server 22.
(5) Upon receipt of the packet containing the AMR message, the AAAH server 22 performs the processes in steps S452 through S458 of the flowchart shown in FIG. 48. That is, the AAAH server 22 first authenticates the mobile node 61 using the MN-AAA authentication extension sub-option stored in the received packet. Then, it extracts the service profile of the mobile node 61 from the database 23, generates an AMA message containing the service profile, and returns it to the AAAF server 32. The AMA message storing the service profile has the format shown in FIG. 77B, and is stored in the UDP packet. However, at this time, no DHCP reply message is stored in the AMA message.
(6) Upon receipt of the packet containing the AMA message, the AAAF server 32 performs the processes in steps S436 and S437 of the flowchart shown in FIG. 47. Here, the AAAF server 32 has received the AMR message from the DHCP server 63 in (4) above. Therefore, the AAAF server 32 transfers the packet received from the AAAH server 22 to the DHCP server 63.
(7) Upon receipt of the packet containing the AMA message, the DHCP server 63 performs the process in step S372 of the flowchart shown in FIG. 44. That is, the DHCP server 63 generates a DHCP reply message, and transmits it to the mobile node 61. At this time, the DHCP reply message is stored in the AMA message shown in FIG. 77B. Thus, the AMA message, the DHCP reply message, and the service profile of the mobile node 61 are transferred from the DHCP server 63 to the mobile node 61.
(8) Upon receipt of the DHCP reply message, the mobile node 61 performs the processes in steps S314 through S316 of the flowchart shown in FIG. 40. That is, the mobile node 61 first stores the received service profile in the service profile cache, stores the binding update message and the service profile in the end point option in the option header of the IPv6 packet, and transmits the packet to the home agent 21.
(9) Upon receipt of the IPv6 packet containing the binding update message, the home agent 21 performs the processes in steps S402 through S417 of the flowchart shown in FIG. 46. That is, the home agent 21 first performs the home registration of the mobile node 61. Thus, a mobility binding table is generated or updated. Then, the service profile transmitted together with the binding update message is obtained and stored in the service profile cache. After that, the binding acknowledge message is returned to the mobile node 61. The binding acknowledge message is stored in the end point option in the option header of the IPv6 packet.
(10) The communications node 42 transmits a data packet to the mobile node 61. At this time, it is assumed that the communications node 42 is not informed of the address currently assigned to the mobile node 61. Therefore, the communications node 42 transmits the data packet to the home address of the mobile node 61. In this case, the packet is encapsulated into an IPv6 tunnel packet by the home agent 21, and is transferred to the mobile node 61.
(11) Upon receipt of the IPv6 tunnel packet, the mobile node 61 performs the processes in steps S302 through S304 of the flowchart shown in FIG. 40. That is, the mobile node 61 retrieves the service profile from the service profile cache, stores the binding update message and the service profile in the end point option in the option header of the IPv6 packet, and then transmits the packet to the communications node 42.
(12) Upon receipt of the IPv6 packet containing the binding update message, the communications node 42 performs the processes in steps S402 through S413 (containing step S471) of the flowchart shown in FIG. 49. That is, the communications node 42 first generates (or updates) the binding cache according to the binding update message, obtains the service profile transmitted together with the binding update message, and stores it in the service profile cache.

Thus, in the above mentioned sequence, the AAA process sequence for the mobile node 61 is performed at the DHCP request, and a service profile is distributed to the mobile node 61 in the AAA process sequence. When the DHCP process is completed, the location of the mobile node 61 is registered in the home agent 21. In the location registration sequence, the service profile is distributed from the mobile node 61 to the home agent 21. Furthermore, the service profile is distributed to the communications node 42 which has transmitted the packet to the mobile node 61.

### 7.2 Sequence of distributing a service profile in the system according to the fourth embodiment

This sequence is performed immediately after electric power is applied to the mobile node 71 or when the mobile node 71 moves from the communications area of a router device to the communications area of another router device. The DHCP-AAA cooperation started by a DHCP request is described below by referring to FIG. 51. In this example, it is assumed that the DHCP server 63 is accommodated in the proxy foreign agent 72. The proxy foreign agent 72 captures and analyzes all packets transmitted by the DHCP server 63.
(1) The proxy foreign agent 72 transmits an ICMP router advertisement message.
(2) The process (2) shown in FIG. 50 is performed. That is to say, upon receipt of the advertisement message, the mobile node 61 transmits the DHCP request message to the DHCP server 63.
(3) The process (3) shown in FIG. 50 is performed. That is to say, upon receipt of the packet containing the DHCP request message, the DHCP server 63 generates an AMR message containing the DHCP request message, and transmits it to the AAAF server 32.
(4) Upon receipt of the packet transmitted from the DHCP server 63, the proxy foreign agent 72 performs the process in step S350 of the flowchart shown in FIG. 42. That is, the proxy foreign agent 72 transfers the AMR message containing the DHCP request message to the AAAF server 32.
   The processes (5) and (6) are the same as the processes (4) and (5) shown in FIG. 50. That is, the AMR message is transferred from the AAAF server 32 to the AAAH server 22, and the AMA message is returned from the AAAH server 22 to the AAAF server 32. The AMA message stores the service profile of the mobile node 71.
(7) Upon receipt of the packet containing the AMA message, the AAAF server 32 performs the processes in steps S436 and S437 of the flowchart shown in FIG. 47. The AAAF server 32 has received the AMR message from the proxy foreign agent 72 in the process (5) above. Therefore, the AAAF server 32 transfers the packet received from the AAAH server 22 to the proxy foreign agent 72.
(8) Upon receipt of the packet containing the AMA message, the proxy foreign agent 72 performs the processes in steps S362 and S363 of the flowchart shown in FIG. 43. That is, the proxy foreign agent 72 first obtains the service profile of the mobile node 71 from the received packet, stores it in the service profile cache, and transfers the packet containing the AMA message to the DHCP server 63.
(9) The process (7) shown in FIG. 50 is performed. That is, upon receipt of the packet containing the AMA message, the DHCP server 63 generates a DHCP reply message, and transmits it to the mobile node 71. At this time, the DHCP reply message is stored in the AMA message.
(10) Upon receipt of the DHCP reply message, the mobile node 71 performs the process in step S316 of the flowchart shown in FIG. 41. That is, the mobile node 61 stores the binding update message in the end point option in the option header of the IPv6 packet, and transmits the packet to the home agent 21.
(11) Upon receipt of the packet containing the binding update message, the proxy foreign agent 72 performs the processes in steps S344 through S346 of the flowchart shown in FIG. 42. That is, the proxy foreign agent 72 first stores the service profile of the mobile node 71 in the relay point option in the option header of the IPv6 packet containing the binding update message, and transmits the packet to the home agent 21.
(12) The process (9) shown in FIG. 50 is performed. That is, upon receipt of the IPv6 packet containing the binding update message, the home agent 21 performs the home registering process for the mobile node 71, obtains the service profile of the mobile node 71, and returns the binding acknowledge message to the mobile node 71.
(13) The process (10) shown in FIG. 50 is performed. That is, the communications node 42 transmits the data packet to the mobile node 71. The packet is encapsulated into an IPv6 tunnel packet by the home agent 21, and is transferred to the mobile node 71.
(14) Upon receipt of the IPv6 tunnel packet, the mobile node 71 performs the process in step S304 of the flowchart shown in FIG. 41. That is, the mobile node 71 transmits the binding update message to the communications node 42.
(15) Upon receipt of the packet containing the binding update message, the proxy foreign agent 72 performs the processes in steps S344 through S346 of the flowchart shown in FIG. 42 as in the process (11) above. That is, the proxy foreign agent 72 first stores the service profile of the mobile node 71 in the relay point option in the option header of the IPv6 packet containing the binding update message, and transmits the packet to the communications node 42.
(16) Upon receipt of the IPv6 packet containing the binding update message, the communications node 42 generates or updates binding cache according to the binding update message as in the process (12) shown in FIG. 50, and obtains the service profile.

Thus, when the proxy foreign agent 72 is provided, the service profile is not distributed to the mobile node 71. When the mobile node 71 transmits a binding update message to the home agent 21 and the communications node 42, the service profile is transferred from the proxy foreign agent 72 to the home agent 21 and the communications node 42, respectively.

### 7.3 Sequence of using an FDR message and an FDA message in the system according to the fourth embodiment

The sequence is basically the same as the sequence according to the fourth embodiment shown in FIG. 51. In this sequence, an FDR message and an FDA message are used between the DHCP server 63 and the proxy foreign agent 72. These messages are newly introduced in the present invention. The sequence is described below by referring to FIG. 52.
(1) and (2) are the same as the processes (1) and (2) shown in FIG. 51.
(3) Upon receipt of the packet containing the DHCP request message, the DHCP server 63 performs the processes in steps S373, S374, and S392 of the flowchart shown in FIG. 45. That is, the DHCP server 63 generates an FDR message containing the DHCP request message, and transmits the message to the proxy foreign agent 72. The FDR message has the format shown in FIG. 77C, and is stored in the UDP packet.
(4) Upon receipt of the FDR message containing the DHCP request message, the proxy foreign agent 72 performs the processes in steps S364 through S367 of the flowchart shown in FIG. 43. That is, the proxy foreign agent 72 generates an AMR message containing the DHCP request message, and transmits the message to the AAAF server 32. The format of the AMR message is shown in FIG. 77A.
(5) through (7) are the same as the processes (5) through (7) shown in FIG. 51. That is, the AMR message is transferred from the AAAF server 32 to the AAAH server 22, the AMA message is returned from the AAAH server 22 to the AAAF server 32, and the AMA message is transferred from the AAAF server 32 to the proxy foreign agent 72. At this time, the AMA message stores the service profile of the mobile node 71.
(8) Upon receipt of the packet containing the AMA message, the proxy foreign agent 72 performs the processes in steps S362 and S363 of the flowchart shown in FIG. 43. That is, the proxy foreign agent 72 first obtains the service profile of the mobile node 71 from the received packet, and stores it in the service profile cache. Then, it generates an FDA message according to the received AMA message. The format of the FDA message is shown in FIG. 77D. The FDA message stored the DHCP reply message. The proxy foreign agent 72 transmits the packet containing the FDA message to the DHCP server 63.
(9) Upon receipt of the packet containing the FDA message, the DHCP server 63 performs the process in step S391 of the flowchart shown in FIG. 45. That is, the DHCP server 63 generates a DHCP reply message, and transmits it to the mobile node 61.
(10) through (16) are the same as the corresponding processes shown in FIG. 51

### 8. Fifth and Sixth Embodiment

### 8.1 Fifth embodiment

FIG. 53 shows the configuration of the network of the communications service providing system according to the fifth embodiment of the present invention. The system according to the fifth embodiment is designed based on the system according to the third embodiment. However, a router device 81 used in the system according to the fifth embodiment is provided not only with the routing function specific to a common router device, but also with the DHCP server function.

FIG. 54 shows the configuration of the main devices of the communications service providing system according to the fifth embodiment. The home agent 21, the AAAH server 22, the AAAF server 32, the communications node 42, and the mobile node 61 are the same as the corresponding devices in the system according to the third embodiment.

The router device 81 comprises a packet control unit, a protocol control unit, and a transfer control unit. The protocol control unit is provided with a DIAMETER client function (DCF), and a DHCP server function. The DHCP server function dynamically assigns an address at a DHCP request from a terminal (including the mobile node 61).

FIG. 55 is a flowchart of the operations of the router device according to the fifth embodiment of the present invention. The flowchart shows the operation performed after the router device 81 receives a packet.

In step S501, the type of message stored in the received packet is checked. If a DHCP request message is received, then a session transaction is searched for using the user NAI of the mobile node in steps S502 and S503. If a corresponding session transaction is not detected, it is generated. Then, in step S504, an AMR message containing a DHCP message is generated, and the message is transmitted to the AAAF server 32. The format of the AMR message is shown in FIG. 77A. The AMR message is stored in the UDP packet.

If an AMA message is received, a DHCP reply message is generated and transmitted to the mobile node 61 in step S505. The format of the DHCP reply message is shown in FIGS. 72A through 72C. Its extension area stores the service profile of the mobile node 61. The DHCP reply message is stored in the UDP packet. If the DHCP request message or the AMA message is not received, a corresponding process is performed in step S511.

As described above, upon receipt of the DHCP request message, the router device 81 generates an AMR message and transmits it to the AAAF server 32. On the other hand, upon receipt of the AMA message, it generates the DHCP reply message and transmits it to the mobile node 61.

FIG. 56 shows the sequence of the DHCP-AAA cooperation according to the fifth embodiment of the present invention.
(1) The router device 81 transmits an ICMP router advertisement message.
(2) Upon receipt of the advertisement message, the mobile node 61 transmits the DHCP request message to the DHCP server as in the process (2) shown in FIG. 50. However, in the system according to the fifth embodiment, the router device 81 is provided with the DHCP server function. Therefore, the mobile node 61 transmits the DHCP request message to the router device 81.
(3) Upon receipt of the packet containing the DHCP request message, the router device 81 performs the processes in steps S502 through S504 of the flowchart shown in FIG. 55. That is, the router device 81 generates an AMR message shown in FIG. 77A and transmits it to the AAAF server 32.
(4) through (6) are the same as the processes (4) through (6) shown in FIG. 50. That is, the AMR message is transmitted from the AAAF server 32 to the AAAH server 22, the AMA message is returned from the AAAH server 22 to the AAAF server 32, and the AMA message is transferred from the AAAF server 32 to the DHCP server. However, in the system according to the fifth embodiment, the router device 81 is provided with the DHCP server function. Therefore, the AAAF server 32 transfers the AMA message to the router device 81. The AMA message contains the service profile of the mobile node 61.
(7) Upon receipt of the packet containing the AMA message, the router device 81 performs the process in step S505 of the flowchart shown in FIG. 55. That is, the router device 81 generates a DHCP reply message shown in FIG. 72 and transmits it to the mobile node 61.
(8) through (12) are the same as the processes (8) through (12) shown in FIG. 50.

### 8.2 Sixth embodiment

FIG. 57 shows the configuration of the network of the communications service providing system according to the sixth embodiment of the present invention. The system according to the sixth embodiment is designed based on the system according to the fourth embodiment. However, a proxy foreign agent 82 used in the system according to the sixth embodiment is provided with the DHCP server function.

FIG. 58 shows the configuration of the main devices of the communications service providing system according to the sixth embodiment. The home agent 21, the AAAH server 22, the AAAF server 32, the communications node 42, and the mobile node 71 are the same as the corresponding devices in the system according to the fourth embodiment.

The proxy foreign agent 82 comprises a packet control unit, a protocol control unit, a transfer control unit, a service control unit, and a service profile cache (SPC). The protocol control unit is provided with a DIAMETER client function (DCF), and a DHCP server function. The DHCP server function dynamically assigns an address at a DHCP request from a terminal (including the mobile node 71).

FIGS. 59 and 60 are flowcharts of the operations of the proxy foreign agent according to the sixth embodiment. The flowcharts show the operations performed after the proxy foreign agent 82 receives a packet.

In steps S521 and S522, a received packet is filtered using a source address and a destination address. When the source of the received packet is the mobile node 71, the processes in and after step S523 are performed. When the destination of the received packet is the proxy foreign agent 82, the processes in and after step S531 are performed. In the case other than the above mentioned two cases, is received, the processes in and after step S535 are performed. If these messages are not received, a corresponding process is performed in step S541.

In steps S532 and S533, a session transaction is searched for using the user NAI of the mobile node. If a corresponding session transaction is not detected, it is generated. Then, in step S534, an AMR message containing the DHCP request message is generated, and is transmitted to the AAAF server 32. The format of the AMR message is shown in FIG. 77A.

In step S535, the service profile of the mobile node 71 received together with the AMA message is obtained. The service profile is stored in the service profile cache provided for the proxy foreign agent 82. Then, in step S536, the DHCP reply message corresponding to the received AMA message is generated, and the message is transmitted to the mobile node 71. The format of the DHCP reply message is shown in FIGS. 72A through 72C, and includes the service profile of the mobile node 71.

As described above, upon receipt of the binding update message, the proxy foreign agent 82 transmits the message together with the service profile of the mobile node 71 to the home agent 21 the received packet is processed based on the service profile provided for the proxy foreign agent 82, and is then transferred in steps S528 and S529.

In step S523, the type of message stored in the received packet is checked. If the binding update message is received, the processes in and after step S524 are performed. Otherwise, the received packet is transferred according to the destination address in step S527.

In step S524, a session transaction is searched for using the IP address of the mobile node 71. Thus, the service profile of the mobile node 71 is extracted. Then, in step S525, the service profile extracted in step S524 is added to the relay point option in the option header of the IPv6 packet. Furthermore, in step S526, the binding update message is added to the option header. Then, the IPv6 packet with that option header is transferred to the destination (the home agent 21 or the communications node 42).

In step S531, the type of message stored in the received packet is checked. When the DHCP request message is received, the processes in and after step S532 are performed. When the AMA message or the communications node 42. Upon receipt of the AMA message, it obtains the service profile of the mobile node 71, and transmits the DHCP reply message to the mobile node 71. Upon receipt of the DHCP request message, the proxy foreign agent 82 generates an AMR message and transmits it to the AAAF server 32.

FIG. 61 shows the sequence of the DHCP-AAA cooperation according to the sixth embodiment of the present invention.
(1) The proxy foreign agent 82 transmits the ICMP router advertisement message.
(2) Upon receipt of the advertisement message, the mobile node 71 transmits the DHCP request message to the DHCP server. However, in the system according to the sixth embodiment, the proxy foreign agent 82 is provided with the DHCP server function. Therefore, the mobile node 71 transmits the DHCP request message to the proxy foreign agent 82.
(3) Upon receipt of a packet containing the DHCP request message, the proxy foreign agent 82 performs the processes in steps S532 through S534 of the flowchart shown in FIG. 60. That is, the proxy foreign agent 82 generates an AMR message shown in FIG. 77A and transmits it to the AAAF server 32.
(4) through (6) are the same as the corresponding processes (4) through (6) shown in FIG. 50. That is, the AMR message is transmitted from the AAAF server 32 to the AAAH server 22, the AMA message is returned from the AAAH server 22 to the AAAF server 32, and the AMA message is transferred from the AAAF server 32 to the DHCP server. However, in the system according to the sixth embodiment, the proxy foreign agent 82 is provided with the DHCP server function. Therefore, the AAAF server 32 transmits the AMA message to the proxy foreign agent 82. The AMA message contains the service profile of the mobile node 71.
(7) Upon receipt of the packet containing the AMA message, the proxy foreign agent 82 performs the processes in steps S535 and S536 of the flowchart shown in shown in FIG. 60. That is, the proxy foreign agent 82 first obtains the service profile of the mobile node 71 received together with the AMA message. Then, the DHCP reply message shown in FIG. 72 is generated and transmitted to the mobile node 71.
(8) through (14) are the same as the corresponding processes (10) through (16) shown in FIG. 51.

In the system according to the present invention, the service control information for a mobile node is distributed to the mobile node in the procedure of authenticating the mobile node and registering the location of the mobile node. At this time, the information relating to the authentication and the location registration of the mobile node is stored in the header of a packet and transmitted. Therefore, in a network in which the IP payload of each packet is encrypted, each communications appliance can obtain the information relating to the location registration of the mobile node without decryption process and perform a corresponding process. Therefore, in a network supporting the IPv6, each communications appliance can distribute the authentication information and the location registration information of a mobile node, and the service control information.

Furthermore, a function equivalent to a foreign agent defined in the mobile IPv4 is provided in the router device accommodating a mobile node, and the router device provides a communications service according to the service control information, thereby reducing the load of the mobile node.

Additionally, since the address inquiring process is performed in cooperation with the mobile node authenticating process, the service control information for the mobile node is distributed to the mobile node in the procedure that the mobile node obtains an address from the address server.

Furthermore, since messages for interfacing an address inquiry process and an authenticating process about the mobile node are used, a configuration of the address server is simplified and a load of the address server is reduced.

## Claims

1. A method for providing a communications service in a communications system where a location of a mobile node (41) is registered in a home agent (21) by transmitting location registration request information from the mobile node to the home agent through an authentication server (22), and returning location registration reply information corresponding to the location registration request information from the home agent to the mobile node through the authentication server, comprising:
transmitting the location registration request information and the location registration reply information using a header of a packet, respectively;
storing service control information for use in providing a communications service requested by the mobile node in a header of a packet for transfer of the location registration reply information from the authentication server to the mobile node, thereby distributing the service control information to the mobile node; and
controlling a packet to be transmitted or received by the mobile node according to the service control information.

2. A method for providing a communications service in a communications system where a location of a mobile node (51) is registered in a home agent (21) by transmitting location registration request information from the mobile node to the home agent through a router device (52-1) accommodating the mobile node and an authentication server (22), and returning location registration reply information corresponding to the location registration request information from the home agent to the mobile node through the authentication server and the router device, comprising:
transmitting the location registration request information and the location registration reply information using a header of a packet, respectively;
storing service control information for use in providing a communications service requested by the mobile node in a header of a packet for transfer of the location registration reply information from the authentication server to the router device, thereby distributing the service control information to the router device; and
controlling a packet to be transmitted or received by the mobile node according to the service control information.

3. The method according to claim 1, wherein
an area other than the header of the packet storing the location registration request information or the location registration reply information is encrypted by a predetermined algorithm.

4. The method according to claim 1, wherein
the location registration request information, the location registration reply information, and the service control information are stored in an option area of a header of an IPv6 packet.

5. The method according to claim 1, wherein:
a predetermined communications node (42) is registered in the home agent;
the service control information is stored in the header of the packet for transfer of the location registration request information from the authentication server to the home agent, thereby distributing the service control information to the home agent;
the service control information is transferred from the home agent to the communications node registered in the home agent; and
communications between the mobile node and the registered communications node are controlled according to the service control information.

6. The method according to claim 5, wherein
the location registration request information is transmitted from the mobile node when the mobile node is activated.

7. The method according to claim 5, wherein
the location registration request information is transmitted from the mobile node when the mobile node moves from a communications area of a router device to a communications area of another router device.

8. The method according to claim 1, wherein:
service control information for use in providing a communications service requested by the mobile node is stored in a header of a packet for transfer of the location registration request information from the authentication server to the home agent, thereby distributing the service control information to the home agent;
upon receipt of a packet addressed to the mobile node from a communications node (42), said home agent transmits the service control information together with the packet to the mobile node;
the mobile node transmits the location registration request information and the service control information received from the home agent to the communications node; and
communications between the mobile node and the communications node are controlled according to the service control information.

9. The method according to claim 8, wherein:
upon receipt of a packet addressed to the mobile node from a communications node, said home agent registers the communications node in a communications node list, and notifies the mobile node of a communications node which has been registered in the communications node list; and
the mobile node transmits the location registration request information and the service control information received from the home agent to the communications node notified by the home agent.

10. The method according to claim 1, wherein:
upon receipt of a packet from a communications node (42), the mobile node returns the location registration request information and the service control information received from the authentication server to the communications node; and
communications between the mobile node and the communications node are controlled according to the service control information.

11. The method according to claim 10, wherein
upon receipt of a packet from a communications node, the mobile node first registers the communications node in a communications node list, and then transmits the location registration request information and the service control information received from the authentication server to the communications node which has been registered in the communications node list.

12. The method according to claim 2, wherein:
upon receipt of a packet addressed to the mobile node from a communications node (42), the router device transmits the packet to the mobile node;
the mobile node returns the location registration request information to the router device;
the router device transmits to the communications node the location registration request information received from the mobile node and the service control information received from the authentication server; and
communications between the mobile node and the communications node are controlled according to the service control information.

13. The method according to claim 12, wherein
upon receipt of a packet addressed to the mobile node from a communications node, the router device first registers the communications node in a communications node list, and transmits the location registration request information and the service control information to the communications node which has been registered in the communications node list.

14. The method according to claim 1, wherein:
a predetermined communications node (42) has been registered in the mobile node; and
upon receipt of a packet from the registered communications node, the mobile node does not transmit the location registration request information to the registered communications node.

15. A communications service providing system which has an authentication server (22) for authenticating a mobile node (41) and a database (23) storing service control information for use in providing a communications service requested by the mobile node, and provides a communications service for the mobile node according to the service control information, comprising:
a first unit, provided in the mobile node, storing location registration request information in a header of a packet, and transmitting the location registration request information to the authentication server;
a second unit, provided in the authentication server, extracting service control information corresponding to the mobile node from the database;
a third unit, provided in the authentication server, storing the location registration request information in a header of a packet, and transmitting the location registration request information to a home agent (21) of the mobile node;
a fourth unit, provided in the home agent, registering a location of the mobile node according to the location registration request information, storing location registration reply information corresponding to the location registration request information in a header of a packet, and returning the information to the authentication server; and
a fifth unit, provided in the authentication server, transmitting a packet containing in a header the location registration reply information and the service control information to the mobile node, wherein
a packet to be transmitted or received by the mobile node is controlled according to the service control information.

16. A communications service providing system which has an authentication server (22) for authenticating a mobile node (51) and a database (23) storing service control information for use in providing a communications service requested by the mobile node, and provides a communications service for the mobile node according to the service control information, comprising:
a first unit, provided in a router device (52-1) accommodating the mobile node, storing location registration request information generated by the mobile node in a header of a packet, and transmitting the location registration request information to the authentication server;
a second unit, provided in the authentication server, extracting service control information corresponding to the mobile node from the database;
a third unit, provided in the authentication server, storing the location registration request information in a header of a packet, and transmitting the location registration request information to a home agent (21) of the mobile node;
a fourth unit, provided in the home agent, registering a location of the mobile node according to the location registration request information, storing location registration reply information corresponding to the location registration request information in a header of a packet, and returning the location registration reply information to the authentication server; and
a fifth unit, provided in the authentication server, transmitting a packet containing in a header the location registration reply information and the service control information to the router device, wherein
a packet to be transmitted or received by the mobile node is controlled according to the service control information distributed to the router device.

17. A mobile terminal device (41) for use in a packet network in which location information about the mobile terminal device is registered in a home agent (21), comprising:
a transmission unit storing location registration request information about the mobile terminal device in a header of a packet, and transmitting the location registration request information to the home agent, when an advertisement message is received;
an obtaining unit obtaining location registration reply information corresponding to the location registration request information and service control information corresponding to the mobile terminal device from a header of a received packet; and
a controller controlling a transmission packet or a received packet according to the obtained service control information.

18. A mobile terminal device (41) for use in a packet network provided with an authentication device (22) for authenticating the mobile terminal device, comprising:
a transmission unit storing authentication request information about the mobile terminal device in a header of a packet, and transmitting the information to the authentication device, when an advertisement message is received;
an obtaining unit obtaining authentication reply information corresponding to the authentication request information and service control information corresponding to the mobile terminal device from a header of a received packet; and
a controller controlling a transmission packet or a received packet according to the obtained service control information.

19. A router device (52-1) for use in a packet network in which location information about a mobile node (51) is registered in a home agent (21), comprising:
a transfer unit transferring a packet to the home agent upon receipt of the packet storing location registration request information about the mobile node in a header when an advertisement message is transmitted to the mobile node;
an obtaining unit obtaining location registration reply information corresponding to the location registration request information and service control information corresponding to the mobile node; and
a controller controlling a packet transmitted or received by the mobile node according to the obtained service control information.

20. A router device (52-1) for use in a packet network provided with an authentication device for authenticating a mobile node (51), comprising:
a transfer unit transferring a packet to the authentication device (22) upon receipt of the packet storing authentication request information about the mobile node in a header;
an obtaining unit obtaining authentication reply information corresponding to the authentication request information and service control information corresponding to the mobile node; and
a controller controlling a packet transmitted or received by the mobile node according to the obtained service control information.

21. A communications service providing method used in a communications system which has an authentication server (22) for authenticating a mobile node (61) and a database (23) storing service control information for use in providing a communications service requested by the mobile node, and provides a communications service for the mobile node according to the service control information, wherein:
an address server (63) which receives an address request from the mobile node transmits an authentication request about the mobile node to the authentication server;
the authentication server which receives the authentication request extracts service control information corresponding to the mobile node from the database, and transmits an authentication reply corresponding to the authentication request and the service control information to the address server;
the address server which receives the authentication reply and the service control information transmits an address reply corresponding to the address request and the service control information to the mobile node; and
a packet to be transmitted or received by the mobile node is controlled according to the service control information.

22. The method according to claim 21, wherein:
the mobile node transmits the service control information to a home agent (21) for managing a home address and a location of the mobile node; and
the home agent controls a packet addressed to the mobile node according to the service control information.

23. The method according to claim 22, wherein
the service control information is stored in an option header of an IPv6 packet together with a binding update message about the mobile node, and transferred from the mobile node to the home agent.

24. The method according to claim 21, wherein
the service control information is transmitted from the mobile node to a communications node (42) connected to the communications system; and
the communications node controls a packet addressed to the mobile node according to the service control information.

25. The method according to claim 24, wherein
the service control information is stored in the option header of an IPv6 packet together with the binding update message about the mobile node, and transferred from the mobile node to the communications node.

26. A communications service providing method used in a communications system which has an authentication server (22) for authenticating a mobile node (71) and a database (23) storing service control information for use in providing a communications service requested by the mobile node, and provides a communications service for the mobile node according to the service control information, wherein:
an address server (63) which receives an address request from the mobile node transmits an authentication request about the mobile node to the authentication server;
the authentication server which receives the authentication request extracts service control information corresponding to the mobile node from the database, and transmits an authentication reply corresponding to the authentication request and the service control information to the address server;
a router device (72) accommodating the mobile node obtains the service control information transmitted from the authentication server to the address server;
the address server which receives the authentication reply transmits an address reply corresponding to the address request to the mobile node; and
a packet to be transmitted or received by the mobile node is controlled according to the service control information.

27. The method according to claim 26, wherein
the router device stores the service control information in a packet transmitted from the mobile node to a home agent (21) which manages a home address and a location of the mobile node; and
the home agent controls a packet addressed to the mobile node according to the received service control information.

28. The method according to claim 27, wherein
the mobile node stores a binding update message about the mobile node in an option header of an IPv6 packet, and transmits the message to the home agent; and
the router device adds the service control information into the option header of the IPv6 packet.

29. The method according to claim 26, wherein
the router device stores the service control information in a packet transmitted from the mobile node to a communications node (42) connected to the system; and
the communications node controls a packet addressed to the mobile node according to the received service control information.

30. The method according to claim 29, wherein
the mobile node stores a binding update message about the mobile node in an option header of an IPv6 packet, and transmits the message to the communications node; and
the router device adds the service control information into the option header of the IPv6 packet.

31. A communications service providing method used in a communications system which has an authentication server (22) for authenticating a mobile node (71) and a database (23) storing service control information for use in providing a communications service requested by the mobile node, and provides a communications service for the mobile node according to the service control information, wherein:
an address server (63) which receives an address request from a mobile node transmits a request message corresponding to the address request to a router device (72) accommodating the address server;
the router device receiving the request message transmits an authentication request about the mobile node to the authentication server;
the authentication server receiving the authentication request extracts service control information corresponding to the mobile node from the database, and transmits an authentication reply corresponding to the authentication request and the service control information to the address server;
the router device obtains the service control information transmitted from the authentication server to the address server, and transmits a reply message corresponding to the request message to the address server based on the authentication reply transmitted from the authentication server to the address server;
the address server receiving the reply message transmits an address reply corresponding to the address request to the mobile node; and
a packet to be transmitted or received by the mobile node is controlled according to the service control information.

32. A communications service providing method used in a communications system which has an authentication server (22) for authenticating a mobile node (61) and a database (23) storing service control information for use in providing a communications service requested by the mobile node, and provides a communications service for the mobile node according to the service control information, wherein:
a router device (81) accommodating a mobile node transmits an authentication request about the mobile node to the authentication server when an address request is received from the mobile node;
the authentication server receiving the authentication request extracts service control information corresponding to the mobile node from the database, and transmits an authentication reply corresponding to the authentication request and the service control information to the router device;
the router device receiving the authentication reply and the service control information transmits an address reply corresponding to the address request and the service control information to the mobile node; and
a packet to be transmitted or received by the mobile node is controlled according to the service control information.

33. A communications service providing method used in a communications system which has an authentication server (22) for authenticating a mobile node (71) and a database (23) storing service control information for use in providing a communications service requested by the mobile node, and provides a communications service for the mobile node according to the service control information, wherein:
a router device (82) accommodating a mobile node transmits an authentication request about the mobile node to the authentication server when an address request is received from the mobile node;
the authentication server receiving the authentication request extracts service control information corresponding to the mobile node from the database, and transmits an authentication reply corresponding to the authentication request and the service control information to the router device;
the router device receiving the authentication reply and the service control information obtains the service control information, and transmits an address reply corresponding to the address request to the mobile node; and
a packet to be transmitted or received by the mobile node is controlled according to the service control information.

34. A communications service providing system which has an authentication server (22) for authenticating a mobile node (61) and a database (23) storing service control information for use in providing a communications service requested by the mobile node, and provides a communications service for the mobile node according to the service control information, comprising:
a first unit, provided in an address server (63), transmitting an authentication request about the mobile node to the authentication server when an address request is received from the mobile node;
a second unit, provided in the authentication server, extracting service control information corresponding to the mobile node from the database when the authentication request is received, and transmitting an authentication reply corresponding to the authentication request and the service control information to the address server; and
a third unit, provided in the address server, transmitting an address reply corresponding to the address request and the service control information to the mobile node when the authentication reply and the service control information are received, wherein
a packet to be transmitted or received by the mobile node is controlled according to the service control information.

35. A communications service providing system which has an authentication server (22) for authenticating a mobile node (71) and a database (23) storing service control information for use in providing a communications service requested by the mobile node, and provides a communications service for the mobile node according to the service control information, comprising:
a first unit, provided in an address server (63), transmitting an authentication request about the mobile node to the authentication server when an address request is received from the mobile node;
a second unit, provided in the authentication server, extracting service control information corresponding to the mobile node from the database when the authentication request is received, and transmitting an authentication reply corresponding to the authentication request and the service control information to the address server;
a third unit, provided in a router device (72) accommodating the mobile node, obtaining service control information transmitted from the authentication server to the address server; and
a fourth unit, provided in the address server, transmitting an address reply corresponding to the address request to the mobile node when the authentication reply is received, wherein
a packet to be transmitted or received by the mobile node is controlled according to the service control information.

36. A communications service providing system which has an authentication server (22) for authenticating a mobile node (71) and a database (23) storing service control information for use in providing a communications service requested by the mobile node, and provides a communications service for the mobile node according to the service control information, comprising:
a first unit, provided in an address server (63), transmitting a request message corresponding to an address request to a router device (72) accommodating the address server when the address request is received from the mobile node;
a second unit, provided in the router device, transmitting an authentication request about the mobile node to the authentication server when the request message is received;
a third unit, provided in the authentication server, extracting service control information corresponding to the mobile node from the database when the authentication request is received, and transmitting an authentication reply corresponding to the authentication request and the service control information to the address server;
a fourth unit, provided in the router device, obtaining the service control information transmitted from the authentication server to the address server, and transmitting a reply message corresponding to the request message to the address server based on the authentication reply transmitted from the authentication server to the address server; and
a fifth unit, provided in the address server, transmitting an address reply corresponding to the address request to the mobile node when the reply message is received, wherein
a packet to be transmitted or received by the mobile node is controlled according to the service control information.

37. A communications service providing system which has an authentication server (22) for authenticating a mobile node (61) and a database (23) storing service control information for use in providing a communications service requested by the mobile node, and provides a communications service for the mobile node according to the service control information, comprising:
a first unit, provided in a router device (81) accommodating a mobile node, transmitting an authentication request about the mobile node to the authentication server when an address request is received from the mobile node;
a second unit, provided in the authentication server, extracting service control information corresponding to the mobile node from the database when the authentication request is received, and transmitting an authentication reply corresponding to the authentication request and the service control information to the router device; and
a third unit, provided in the router device, transmitting an address reply corresponding to the address request and the service control information to the mobile node when the authentication reply and the service control information are received, wherein
a packet to be transmitted or received by the mobile node is controlled according to the service control information.

38. A communications service providing system which has an authentication server (22) for authenticating a mobile node (71) and a database (23) storing service control information for use in providing a communications service requested by the mobile node, and provides a communications service for the mobile node according to the service control information, comprising:
a first unit, provided in a router device (82) accommodating a mobile node, transmitting an authentication request about the mobile node to the authentication server when an address request is received from the mobile node;
a second unit, provided in the authentication server, extracting service control information corresponding to the mobile node from the database when the authentication request is received, and transmitting an authentication reply corresponding to the authentication request and the service control information to the router device; and
a third unit, provided in the router device, obtaining the service control information and transmitting an address reply corresponding to the address request to the mobile node when the authentication reply and the service control information are received, wherein
a packet to be transmitted or received by the mobile node is controlled according to the service control information.

39. An address server device (63) used in a communications service providing system which has an authentication server (22) for authenticating a mobile node (61) and a database (23) storing service control information for use in providing a communications service requested by the mobile node, and provides a communications service for the mobile node according to the service control information, comprising:
a first unit transmitting an authentication request about the mobile node to the authentication server when an address request is received from the mobile node; and
a second unit transmitting to the mobile node an address reply corresponding to the address request and the service control information when an authentication reply corresponding to the authentication request and the service control information corresponding to the mobile node extracted from the database are received from the authentication server.

40. A router device (81) accommodating a mobile node (61) used in a communications service providing system which has an authentication server (22) for authenticating the mobile node and a database (23) storing service control information for use in providing a communications service requested by the mobile node, and provides a communications service for the mobile node according to the service control information, comprising:
a first unit transmitting an authentication request about the mobile node to the authentication server when an address request is received from the mobile node; and
a second unit transmitting to the mobile node an address reply corresponding to the address request and the service control information when an authentication reply corresponding to the authentication request and the service control information corresponding to the mobile node extracted from the database are received from the authentication server.

41. A router device (82) accommodating a mobile node (71) used in a communications service providing system which has an authentication server (22) for authenticating the mobile node and a database (23) storing service control information for use in providing a communications service requested by the mobile node, and provides a communications service for the mobile node according to the service control information, comprising:
a first unit transmitting an authentication request about the mobile node to the authentication server when an address request is received from the mobile node;
a second unit transmitting an address reply corresponding to the address request to the mobile node when an authentication reply corresponding to the authentication request and the service control information corresponding to the mobile node extracted from the database are received from the authentication server; and
a third unit controlling a packet to be transmitted or received by the mobile node according to the service control information.

42. A mobile terminal device (61) used in a packet network in which the mobile terminal device obtains an address from an address server (63), comprising:
a requesting unit requesting an address server to issue an address of the mobile terminal device when an advertisement message is received;
an obtaining unit obtaining service control information corresponding to the mobile terminal device together with an address reply corresponding to the address request; and
a controller controlling a transmission packet or a received packet according to the obtained service control information.

43. The device according to claim 42, further comprising
a transmission unit transmitting location registration request information and the service control information to a home agent (21).

44. The device according to claim 42, further comprising
a transmission unit transmitting location registration request information and the service control information to a communications node (42) when a packet is received from the communications node.
